(19) **Europäisches Patentamt / European Patent Office / Office européen des brevets**

(11) **EP 3 950 983 A1**

(12) **EUROPEAN PATENT APPLICATION**
published in accordance with Art. 153(4) EPC

(43) Date of publication:
**09.02.2022 Bulletin 2022/06**

(21) Application number: **20784202.2**

(22) Date of filing: **27.03.2020**

(51) International Patent Classification (IPC):
**C22C 13/00** (2006.01)　　**C22C 13/02** (2006.01)
**B23K 35/14** (2006.01)　　**B23K 35/26** (2006.01)
**B23K 35/363** (2006.01)

(52) Cooperative Patent Classification (CPC):
**B23K 35/26; C22C 13/00; C22C 13/02**

(86) International application number:
**PCT/JP2020/014082**

(87) International publication number:
**WO 2020/203794 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2019 JP 2019068335
29.03.2019 JP 2019068336
29.03.2019 JP 2019068337**

(71) Applicant: **Senju Metal Industry Co., Ltd.
Tokyo 120-8555 (JP)**

(72) Inventors:
• **KAWASAKI Hiroyoshi**
**Tokyo 120-8555 (JP)**
• **SHIRATORI Masato**
**Tokyo 120-8555 (JP)**
• **KURASAWA Yoko**
**Tokyo 120-8555 (JP)**
• **ONITSUKA Motohiro**
**Tokyo 120-8555 (JP)**
• **KITAZAWA Kazuya**
**Tokyo 120-8555 (JP)**
• **TAKAKI Akiko**
**Tokyo 120-8555 (JP)**

(74) Representative: **Lavoix
Bayerstraße 83
80335 München (DE)**

(54) **RESIN COMPOSITION FOR SOLDERING USE, SOLDER COMPOSITION, FLUX CORED SOLDER, FLUX, AND SOLDER PASTE**

(57)　Provided are: a resin composition for soldering use, which has excellent compatibility with a rosin-based resin and excellent temperature cycle reliability and is therefore suitable for a flux for soldering use; and a soldering composition and a flux cored solder, in each of which the resin composition for soldering use is used. The resin composition for soldering use comprises: an acrylic resin having a number average molecular weight of 500 or more and less than 2000 as determined by mass spectrometry using a time-of-flight mass spectrometer; and a rosin-based resin, a polyethylene-based resin or a polypropylene-based resin. Alternatively, the resin composition for soldering use comprises: an acrylic resin having a weight average molecular weight of 500 or more and less than 2000 as determined by mass spectrometry using a time-of-flight mass spectrometer; and a rosin-based resin, a polyethylene-based resin or a polypropylene-based resin.

EP 3 950 983 A1

**Description**

TECHNICAL FIELD

The present invention relates to a soldering resin composition, and a flux cored solder and a solder composition in which the soldering resin composition is used. In addition, the present invention relates to a flux to be used to conduct soldering, and a solder paste in which the flux is used.

BACKGROUND OF THE INVENTION

In general, a flux to be used to conduct soldering has an efficacy of chemically removing metal oxides present on the metal surfaces of a solder and an object to be joined, and enabling movement of metallic elements at the boundary between the two surfaces. Accordingly, intermetallic compounds can be formed between the metal surfaces of the solder and the object to be joined by performing soldering using a flux, and thus firm joining is formed.

It has been proposed in a conventional flux that flexibility is provided to a residue by incorporating a polymeric acrylic resin to secure temperature cycle reliability (see, for example, Patent Document 1).

DOCUMENTS OF RELATED ART

Patent Documents

Patent Document 1: Japanese Unexamined Patent Application, First Publication No. 2010-515576

SUMMARY OF THE INVENTION

PROBLEMS TO BE SOLVED BY THE INVENTION

However, a polymeric acrylic resin referred to as a polymer has poor compatibility with a rosin-based resin. Accordingly, in a case where a polymeric acrylic resin is applied to a flux containing a rosin-based resin, there is a possibility that the acrylic resin and the rosin-based resin may separate from each other in the flux and the residue may become stratified. In the case where a residue becomes stratified, cracks are likely to occur during temperature cycles and the temperature cycle reliability deteriorates.

The present invention has been made to solve such problems, and an object of the present invention is to provide a soldering resin composition suitable for a soldering flux due to having excellent compatibility with a rosin-based resin and excellent temperature cycle reliability, and a solder composition and a flux cored solder in which the soldering resin composition is used.

In addition, a polymeric acrylic resin referred to as a polymer has poor compatibility with an activator. Accordingly, in a case where a polymeric acrylic resin is applied to a flux, there is a possibility that the acrylic resin and the activator may separate from each other in the flux, which may affect the solder wettability. Furthermore, a polymeric acrylic resin has poor compatibility with a rosin-based resin, as described above. Accordingly, in a case where a residue becomes stratified, cracks are likely to occur during temperature cycles and the temperature cycle reliability is likely to deteriorate even if an acrylic resin is included.

The present invention has been made to solve such problems, and an object of the present invention is to provide a flux having excellent compatibility with an activator and a rosin-based resin, excellent temperature cycle reliability, and with which a solder has excellent wettability, as well as a solder paste in which the flux is used.

MEANS TO SOLVE THE PROBLEMS

It has been found that an acrylic resin having a number average molecular weight of greater than or equal to 500 and less than 2,000 obtained through mass spectrometry using a time-of-flight mass spectrometer and an acrylic resin having a weight average molecular weight of greater than or equal to 500 and less than 2,000 obtained through mass spectrometry using a time-of-flight mass spectrometer have excellent compatibility with a rosin-based resin and excellent temperature cycle properties.

The present invention relates to a soldering resin composition including: an acrylic resin containing either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer; and a rosin-based resin, in which the amount of the acrylic resin is 14% by weight to 60% by weight.

In addition, the present invention is a soldering resin composition including: an acrylic resin containing either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer; and a rosin-based resin, in which the amount of the acrylic resin is 14% by weight to 60% by weight.

It is preferable that the ratio of the weight of one kind of acrylic resin or the total weight of two or more kinds of acrylic resin to the weight of one kind of rosin-based resin or the total weight of two or more kinds of rosin-based resin be 0.2 to 2.0.

In addition, it is preferable that the amount of the rosin-based resins be 30% by weight to 80% by weight.

It is preferable that the soldering resin composition further contain other resins and the amount of the other resins be less than or equal to 35% by weight.

It is preferable that the soldering resin composition contain at least one selected from the group consisting of organic acids, amines, organic halogen compounds, amine hydrohalides, organic phosphorus compounds, silicones, and solvents and it is preferable that the amount of the organic acids be 0% by weight to 20% by weight, the amount of the amines be 0% by weight to 10% by weight, the amount of the organic halogen compounds be 0% by weight to 15% by weight, the amount of the amine hydrohalides be 0% by weight to 5% by weight, the amount of the organic phosphorus compounds be 0% by weight to 10% by weight, the amount of the silicones be 0% by weight to 5% by weight, and the amount of the solvents be 0% by weight to 13% by weight.

In addition, the present invention relates to a solder composition containing the above-described soldering resin composition, a flux cored solder obtained by filling a linear solder with the above-described soldering resin composition, and a solder composition obtained by coating a solder with the above-described soldering resin composition.

In addition, it has been found that an acrylic resin having a number average molecular weight of greater than or equal to 500 and less than 2,000 obtained through mass spectrometry using a time-of-flight mass spectrometer and an acrylic resin having a weight average molecular weight of greater than or equal to 500 and less than 2,000 obtained through mass spectrometry using a time-of-flight mass spectrometer have excellent compatibility with an activator, and that acrylic resins having a molecular weight within the above-described range have excellent temperature cycle properties.

The present invention relates to a flux including: an acrylic resin containing either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer; a rosin-based resin; an activator; and a solvent, in which the amount of the acrylic resin is 7.0% by weight to 50.0% by weight, the amount of the rosin-based resin is greater than 0% by weight and less than or equal to 30.0% by weight, and the ratio of the weight of one kind of the acrylic resin or the total weight of two or more kinds of the acrylic resins to the weight of one kind of the rosin-based resin or the total weight of two or more kinds of the rosin-based resins is greater than or equal to 0.7.

In addition, the present invention relates to a flux including: an acrylic resin composed of either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer; an activator; and a solvent, in which the amount of the acrylic resin is 7.0% by weight to 50.0% by weight and the amount of the rosin-based resin is 0% by weight to 30.0% by weight.

Furthermore, the present invention relates to a flux including: an acrylic resin containing either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer; a rosin-based resin; an activator; and a solvent, in which the amount of the acrylic resin is 7.0% by weight to 50.0% by weight, the amount of the rosin-based resin is greater than 0% by weight and less than or equal to 30.0% by weight, and the ratio of the weight of one kind of the acrylic resin or the total weight of two or more kinds of the acrylic resins to the weight of one kind of the rosin-based resin or the total weight of two or more kinds of the rosin-based resins is greater than or equal to 0.7.

In addition, the present invention relates to a flux including: an acrylic resin composed of either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer; an activator; and a solvent, in which the amount of the acrylic resin is 7.0% by weight to 50.0% by weight and the amount of the rosin-based resin is 0% by weight to 30.0% by weight.

The acrylic resin having a number average molecular weight of greater than or equal to 500 and less than 2,000 obtained through mass spectrometry using a time-of-flight mass spectrometer and the acrylic resin having a weight average molecular weight of greater than or equal to 500 and less than 2,000 obtained through mass spectrometry using a time-of-flight mass spectrometer also have excellent compatibility with a rosin-based resin. Accordingly, in the case where the flux of the present invention contains a rosin-based resin, the ratio of the weight of one kind of the acrylic resin or the total weight of two or more kinds of the acrylic resins to the weight of one kind of the rosin-based resin or the total weight of two or more kinds of the rosin-based resins (acrylic resin / rosin-based resin) is preferably greater than or equal to 0.7. The above-described weight ratio of acrylic resin / rosin-based resin is preferably greater than or equal to 0.8, more preferably greater than or equal to 1.0, and most preferably 2.0 to 6.0.

The amount of acrylic resins is preferably 7.0% by weight to 35.0% by weight and most preferably 10.0% by weight to 30.0% by weight. The amount of rosin-based resins is monst preferably 2.0% by weight to 15.0% by weight.

It is preferable that the flux of the present invention further include 0% by weight to 10.0% by weight of other resins.

The flux according to the present invention contains at least one selected from the group consisting of organic acids, amines, organic halogen compounds, and amine hydrohalides as the activator.

It is preferable that the flux according to the present invention contain, as an organic acid, one selected from the group consisting of dimer acids which are dimers and reactants of monocarboxylic acids, hydrogenated dimer acids obtained by adding hydrogen to dimer acids, trimer acids which are trimers and reactants of monocarboxylic acids, and hydrogenated trimer acids obtained by adding hydrogen to trimer acids, or at least two selected from the group consisting of dimer acids, hydrogenated dimer acids, trimer acids, and hydrogenated trimer acids, in an amount of 0% by weight to 25.0% by weight, and organic acids other than the dimer acids, the hydrogenated dimer acids, the trimer acids, or the hydrogenated trimer acids in an amount of 0% by weight to 15.0% by weight. In addition, it is preferable that the total amount of either one selected from the group consisting of dimer acids, hydrogenated dimer acids, trimer acids, and hydrogenated trimer acids or at least two selected from the group consisting of dimer acids, hydrogenated dimer acids, trimer acids, and hydrogenated trimer acids, and least one of other organic acids be less than or equal to 30.0% by weight.

It is preferable that the flux according to the present invention contain: 0% by weight to 10.0% by weight of an amine; 0% by weight to 5.0% by weight of an organic halogen compound; 0% by weight to 2.0% by weight of an amine hydrohalide; and 0% by weight to 10.0% by weight of a thixotropic agent. The amount of an organic halogen compound is preferably 0% by weight to 2.5% by weight, and the amount of an amine hydrohalide is preferably 0% by weight to 1.2% by weight. It is preferable that the flux according to the present invention further include: 0% by weight to 10.0% by weight of a hindered phenolic metal deactivator; and 0% by weight to 5.0% by weight of a nitrogen compound-based metal deactivator. Moreover, the balance is a solvent.

In addition, the present invention relates to a solder paste including: the above-described flux; and a metal powder.

The metal powder has an alloy constitution composed of 25 to 300 ppm by mass of As, at least one selected from the group consisting of greater than 0 ppm by mass and less than or equal to 3,000 ppm by mass of Sb, greater than 0 ppm by mass and less than or equal to 10,000 ppm by mass of Bi, and greater than 0 ppm by mass and less than or equal to 5,100 ppm by mass of Pb, and a balance of Sn, and satisfies the following mathematical formulae (1) and (2).

$$275 \leq 2As + Sb + Bi + Pb \qquad (1)$$

$$0.01 \leq (2As + Sb) / (Bi + Pb) \leq 10.00 \qquad (2)$$

In the mathematical formulae (1) and (2), As, Sb, Bi, and Pb each represents the amount thereof (ppm by mass) in the above-described alloy constitution.

Furthermore, the above-described alloy constitution satisfies the following mathematical formula (1a).

$$275 \leq 2As + Sb + Bi + Pb \leq 25,200 \qquad (1a)$$

In the mathematical formula (1a), As, Sb, Bi, and Pb each represents the amount thereof (ppm by mass) in the above-described alloy constitution.

Furthermore, the above-described alloy constitution satisfies the following mathematical formula (1b).

$$275 \leq 2As + Sb + Bi + Pb \leq 5,300 \quad (1b)$$

In the mathematical formula (1b), As, Bi, and Pb each represents the amount thereof (ppm by mass) in the above-described alloy constitution.

Furthermore, the above-described alloy constitution satisfies the following mathematical formula (2a).

$$0.31 \le (2As + Sb) / (Bi + Pb) \le 10.00 \qquad (2a)$$

In the mathematical formula (2a), As, Sb, Bi, and Pb each represents the amount thereof (ppm by mass) in the above-described alloy constitution.

Furthermore, the alloy constitution contains at least one selected from the group consisting of 0 to 4% by mass of Ag and 0 to 0.9% by mass of Cu.

Furthermore, it has been found that an acrylic resin having a number average molecular weight of greater than or equal to 500 and less than 2,000 obtained through mass spectrometry using a time-of-flight mass spectrometer, and an acrylic resin having a weight average molecular weight of greater than or equal to 500 and less than 2,000 obtained through mass spectrometry using a time-of-flight mass spectrometer have excellent compatibility with an activator, and that the acrylic resin having a molecular weight within the above-described range, a polyethylene-based resin and a polypropylene-based resin have excellent temperature cycle properties.

The present invention relates to a flux including: an acrylic resin containing either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer; either a polyethylene-based resin or a polypropylene-based resin or both a polyethylene-based resin and a polypropylene-based resin (also referred to as polyethylene·polypropyleαe-based resin); and a solvent, in which the amount of the acrylic resin is 7.0% by weight to 50.0% by weight.

In addition, the present invention relates to a flux including: an acrylic resin containing either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer; either a polyethylene-based resin or a polypropylene-based resin or both a polyethylene-based resin and a polypropylene-based resin; and a solvent, in which the amount of the acrylic resin is 7.0% by weight to 50.0% by weight.

In the flux according to the present invention, it is preferable that the ratio of the weight of one kind of the acrylic resin or the total weight of two or more kinds of the acrylic resins to the weight of one kind of the polyethylene-based resin or the polypropylene-based resin, the total weight of two or more kinds of the polyethylene-based resin or the polypropylene-based resin, or the total weight of the polyethylene-based resin and the polypropylene-based resin (acrylic resin / polyethylene·polypropylene-based resin) be 1.0 to 120.0. The above-described weight ratio of acrylic resin / polyethylene·polypropylene-based resin is more preferably 2.0 to 100.0 and even more preferably 4.0 to 30.0.

In addition, it is preferable that either the polyethylene-based resin(s) or the polypropylene-based resin(s) or both the polyethylene-based resin(s) and the polypropylene-based resin(s) be contained in an amount of 0.1 % by weight to 10.0% by weight. The amount of the acrylic resin is preferably 7.0% by weight to 35.0% by weight and most preferably 10.0% by weight to 30.0% by weight.

The acrylic resin having a number average molecular weight of greater than or equal to 500 and less than 2,000 obtained through mass spectrometry using a time-of-flight mass spectrometer and the acrylic resin having a weight average molecular weight of greater than or equal to 500 and less than 2,000 obtained through mass spectrometry using a time-of-flight mass spectrometer also have excellent compatibility with a rosin-based resin. Accordingly, the flux according to the present invention may include a rosin-based resin, and it is preferable that the amount of the rosin-based resin be greater than 0% by weight and less than or equal to 30.0% by weight. The amount of rosin-based resins is most preferably 2.0% by weight to 15.0% by weight.

The flux according to the present invention further includes, as an activator, at least one selected from the group consisting of organic acids, amines, organic halogen compounds, and amine hydrohalides.

It is preferable that the flux according to the present invention contain, as the organic acids, one selected from the group consisting of dimer acids which are dimeric reactants of monocarboxylic acids, hydrogenated dimer acids obtained by adding hydrogen to the dimer acids, trimer acids which are trimeric reactants of monocarboxylic acids, and hydrogenated trimer acids obtained by adding hydrogen to the trimer acids, or at least two selected from the group consisting of the dimer acids, the hydrogenated dimer acids, the trimer acids, and hydrogenated trimer acids in an amount of 0% by weight to 25.0% by weight, and organic acids other than the dimer acids, the hydrogenated dimer acids, the trimer acids, and the hydrogenated trimer acids in an amount of 0% by weight to 15.0% by weight. In addition, it is preferable that the total amount of one selected from the group consisting of the dimer acids, the hydrogenated dimer acids, the trimer acids, and the hydrogenated trimer acids, or at least two selected from the group consisting of the dimer acids, the hydrogenated dimer acids, the trimer acids, and the hydrogenated trimer acids, and at least one of the other organic acids be less than or equal to 30.0% by weight.

In the flux according to the present invention, it is preferable that the amount of amines be 0% by weight to 10.0% by weight, the amount of organic halogen compounds be 0% by weight to 5.0% by weight, the amount of amine hydrohalides be 0% by weight to 2.0% by weight, and the amount of thixotropic agent be 0% by weight to 10.0% by weight. The amount of organic halogen compounds is preferably 0% by weight to 2.5% by weight, and the amount of amine hydrohalides is preferably 0% by weight to 1.2% by weight. It is preferable that the flux according to the present invention further include: 0% by weight to 10.0% by weight of a hindered phenolic metal deactivator; and 0% by weight to 5.0% by weight of a nitrogen compound-based metal deactivator. Moreover, the balance is a solvent.

In addition, the present invention relates to a solder paste including: the above-described flux; and the above-described metal powder.

EFFECTS OF THE INVENTION

In a soldering resin composition according to the present invention, which contains: an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or acrylic resins having both a number average molecular weight (Mn) and a weight average molecular weight (Mw) of greater than or equal to 500 and less than 2,000 obtained through mass spectrometry using a time-of-flight mass spectrometer (TOF-MS); and a rosin-based resin, stratification due to non-uniformity of the rosin-based resin and the acrylic resin is inhibited.

In addition, the soldering resin composition containing the acrylic resins having a molecular weight within the above-described range and the rosin-based resin has excellent temperature cycle reliability, and therefore, cracking of the soldering resin composition which has been cured after heating is inhibited.

Accordingly, the soldering resin composition according to the present invention may be used in a solder composition of a flux cored solder, a flux coated solder, or the like to inhibit stratification of the residue. In addition, the residue can be made flexible to inhibit cracking of the residue.

In addition, a flux according to the present invention, which contains an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or an acrylic resin having both a number average molecular weight (Mn) and a weight average molecular weight (Mw) of greater than or equal to 500 and less than 2,000 obtained through mass spectrometry using a time-of-flight mass spectrometer (TOF-MS) has excellent temperature cycle reliability, and therefore, cracking of a cured flux residue after heating is inhibited.

Furthermore, the acrylic resins having a molecular weight within the above-described range have excellent compatibility with an activator, and there is an improved solder wettability therewith. Furthermore, since the acrylic resins having a molecular weight within the above-described range also have excellent compatibility with a rosin-based resin, stratification due to non-uniformity of the rosin-based resin and the acrylic resins is inhibited in a case where a flux contains a rosin-based resin.

In addition, a flux according to the present invention, which contains: an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or acrylic resins having both a number average molecular weight (Mn) and a weight average molecular weight (Mw) of greater than or equal to 500 and less than 2,000 obtained through mass spectrometry using a time-of-flight mass spectrometer (TOF-MS); and either a polyethylene-based resin or a polypropylene-based resin or both a polyethylene-based resin and a polypropylene-based resin has excellent temperature cycle reliability, and therefore, cracking of a cured flux residue after heating is inhibited.

Furthermore, the acrylic resins having a molecular weight within the above-described range have excellent compatibility with an activator, and there is an improved solder wettability therewith. Furthermore, since the acrylic resins having a molecular weight within the above-described range also have excellent compatibility with a rosin-based resin, stratification due to non-uniformity of the rosin-based resin and the acrylic resins is inhibited in a case where a flux contains a rosin-based resin.

Accordingly, the flux according to the present invention may be used in a solder paste to make the residue flexible and to inhibit cracking of the residue. In addition, in the case where the flux contains a rosin-based resin, stratification of the residue can be inhibited. Furthermore, in a solder paste containing a metal powder having the above-described alloy constitution, a sufficient thickening suppression effect of the solder paste can be obtained in addition to the temperature cycle reliability of the flux residue.

EMBODIMENTS FOR CARRYING OUT THE INVENTION

<One example of soldering resin composition according to the present embodiment>

The soldering resin composition according to the present embodiment contains: an acrylic resin having a number average molecular weight (Mn) of greater than or equal to 500 and less than 2,000 obtained through mass spectrometry using a time-of-flight mass spectrometer (TOF-MS); and a rosin-based resin.

Alternatively, the soldering resin composition according to the present embodiment contains: an acrylic resin having a weight average molecular weight of greater than or equal to 500 and less than 2,000 obtained through mass spectrometry using a time-of-flight mass spectrometer (TOF-MS); and a rosin-based resin.

Regarding the number average molecular weight (Mn) and the weight average molecular weight (Mw) obtained through mass spectrometry using a time-of-flight mass spectrometer (TOF-MS), the ratio (Mn/Mw) of the number average molecular weight (Mn) to the weight average molecular weight (Mw) is about 1.00 to 1.30, and the number average molecular weight (Mn) and the weight average molecular weight (Mw) obtained through the above-described method substantially coincide with each other.

Therefore, it can also be said that the soldering resin composition according to the present embodiment contains: an acrylic resin having both a number average molecular weight (Mn) and a weight average molecular weight (Mw) of greater than or equal to 500 and less than 2,000 obtained through mass spectrometry using a time-of-flight mass spectrometer (TOF-MS); and a rosin-based resin.

The acrylic resin having both a number average molecular weight (Mn) and a weight average molecular weight (Mw) of greater than or equal to 500 and less than 2,000 obtained through mass spectrometry using a time-of-flight mass spectrometer (TOF-MS) is referred to as an acrylic oligomer. Examples of the acrylic resin include polymers of acrylic acids, polymers of acrylate esters, and polymers of acrylic acids and acrylate esters, formed by using monomers such as acrylic acids, acrylate esters which are reactants of acrylic acids and alcohols, methacrylic acids, and methacrylate esters which are reactants of methacrylic acids and alcohols. Additional examples thereof include polymers of methacrylic acids, polymers of methacrylate esters, and polymers of methacrylic acids and methacrylate esters. Additional examples thereof include polymers of acrylic acids and methacrylic acids, polymers of acrylic acids and methacrylate esters, polymers of methacrylic acids and acrylate esters, polymers of acrylate esters and methacrylate esters, polymers of acrylic acids, methacrylic acids, and acrylate esters, polymers of acrylic acids, methacrylic acids, and methacrylate esters, polymers of acrylic acids, methacrylic acids, acrylate esters, and methacrylate esters, polymers of acrylic acids, acrylate esters, and methacrylate esters, and polymers of methacrylic acids, acrylate esters, and methacrylate esters. Examples of acrylate esters include butyl acrylate, and examples of acrylic resins using butyl acrylate as a monomer include polymers of butyl acrylate, polymers of butyl acrylate and an acrylate other than butyl acrylate, polymers of acrylic acid and butyl acrylate, and polymers of acrylic acid, butyl acrylate, and an acrylate other than butyl acrylate. In addition, examples of methacrylate esters include butyl methacrylate, and examples of acrylic resins using butyl methacrylate as a monomer includes polymers of butyl methacrylate, polymers of butyl methacrylate and methacrylate esters other than butyl methacrylate, polymers of methacrylic acid and butyl methacrylate, and polymers of methacrylic acid, butyl methacrylate, and a methacrylate ester other than butyl methacrylate. Additional examples thereof include polymers of acrylic acid and butyl methacrylate, polymers of acrylic acid, butyl methacrylate, and a methacrylate ester other than butyl methacrylate, polymers of methacrylic acid and butyl acrylate, polymers of methacrylic acid, butyl acrylate, and an acrylate ester other than butyl acrylate, polymers of butyl acrylate and butyl methacrylate, polymers of butyl methacrylate and an acrylate ester other than butyl acrylate, and polymers of butyl acrylate and a methacrylate ester other than butyl methacrylate. A polymerization reaction may be random copolymerization or block copolymerization. In addition, the above-described alcohol is a C1-24 alcohol having a linear carbon chain or a C3-24 alcohol having a branched carbon chain, and examples of the above-described alcohol include methanol having 1 carbon atom, ethanol having 2 carbon atoms, 1-propanol having 3 carbon atoms, 2-propanol having 3 carbon atoms, ethylene glycol monomethyl ether having 3 carbon atoms, 1-butanol having 4 carbon atoms, 2-butanol having 4 carbon atoms, isobutanol having 4 carbon atoms, 1-hexanol having 6 carbon atoms, diethylene glycol monoethyl ether having 6 carbon atoms, benzyl alcohol having 7 carbon atoms, 1-octanol having 8 carbon atoms, 2-ethylhexanol having 8 carbon atoms, phenyl glycol having 8 carbon atoms, 1-decanol having 9 carbon atoms, lauryl alcohol having 12 carbon atoms, cetyl alcohol having 16 carbon atoms, stearyl alcohol having 18 carbon atoms, oleyl alcohol having 18 carbon atoms, and behenyl alcohol having 22 carbon atoms. Examples of such acrylic resins include butyl acrylate oligomers, alkyl acrylate oligomers, butyl methacrylate oligomers, isotridecanol methacrylate oligomers, acrylic acid-butyl acrylate copolymerized oligomers, and butyl acrylate-polyethylene copolymerized oligomers, and one kind or two or more kinds thereof may be used.

Examples of rosin-based resins include raw rosin such as gum rosin, wood rosin, and tall oil rosin, and derivatives obtained from raw rosin. Examples of the derivatives include purified rosin, hydrogenated rosin, disproportionated rosin, polymerized rosin, acid-modified rosin, phenol-modified rosin, $\alpha,\beta$-unsaturated carboxylic acid-modified products (such as acrylated rosin, maleated rosin, or fumarated rosin), purified products, hydrides, and disproportionated products of polymerized rosin, and purified products, hydrides, and disproportionated products of α,β-unsaturated carboxylic acid-modified products, and one kind or two or more kinds thereof may be used.

The soldering resin composition according to the present embodiment contains: 15% by weight to 60% by weight of an acrylic resin having a number average molecular weight (Mn) and a weight average molecular weight (Mw) of greater than or equal to 500 and less than 2,000 obtained through mass spectrometry using a time-of-flight mass spectrometer (TOF-MS); and 30% by weight to 80% by weight of a rosin-based resin. In addition, it is preferable that the ratio of the weight of one kind of the acrylic resin or the total weight of two or more kinds of the acrylic resins to the weight of one kind of the rosin-based resin or the total weight of two or more kinds of the rosin-based resins in the soldering resin composition according to the present embodiment be 0.2 to 2.0. The ratio of the weight of the acrylic resins to the rosin-based resins is preferably 0.3 to 1.5 and more preferably 0.4 to 1.0.

The soldering resin composition according to the present embodiment may further contain other resins in addition to the rosin-based resins. The soldering resin composition according to the present embodiment can further contain at least one resin selected from the group consisting of a terpene resin, a modified terpene resin, a terpene phenol resin, a modified terpene phenol resin, a styrene resin, a modified styrene resin, a xylene resin, a modified xylene resin, polyethylene, polypropylene, polyvinyl acetate, polyvinyl alcohol, a polyethylene polypropylene copolymer, and a polyethylene polyvinyl acetate copolymer as other resins. An aromatic modified terpene resin, a hydrogenated terpene resin, a hydrogenated aromatic modified terpene resin, or the like may be used as the modified terpene resin. A hydrogenated terpene phenol resin or the like may be used as the modified terpene phenol resin. A styrene-acrylic resin, a styrene-maleic acid resin, or the like may be used as the modified styrene resin. A phenol-modified xylene resin, an alkylphenol-modified xylene resin, a phenol-modified resol-type xylene resin, a polyol-modified xylene resin, a polyoxyethylene-added xylene resin, or the like may be used as the modified xylene resin. The amount of other resins is preferably less than or equal to 35% by weight.

Furthermore, the soldering resin composition according to the present embodiment may contain at least one selected from the group consisting of organic acids, amines, organic halogen compounds, amine hydrohalides, organic phosphorus compounds, silicones, and solvents.

Examples of organic acids include glutaric acid, adipic acid, azelaic acid, eicosanedioic acid, citric acid, glycolic acid, succinic acid, salicylic acid, diglycolic acid, dipicolinic acid, dibutylaniline diglycolic acid, suberic acid, sebacic acid, thioglycolic acid, phthalic acid, isophthalic acid, terephthalic acid, dodecanedioic acid, parahydroxyphenylacetic acid, picolinic acid, phenylsuccinic acid, fumaric acid, maleic acid, malonic acid, lauric acid, benzoic acid, tartaric acid, tris(2-carboxyethyl) isocyanurate, glycine, 1,3-cyclohexanedicarboxylic acid, 2,2-bis(hydroxymethyl)propionic acid, 2,2-bis(hydroxymethyl)butanoic acid, 4-tert-butylbenzoic acid, 2,3-dihydroxybenzoic acid, 2,4-diethylglutaric acid, 2-quinolinecarboxylic acid, 3-hydroxybenzoic acid, malic acid, p-anisic acid, palmitic acid, stearic acid, 12-hydroxystearic acid, oleic acid, linoleic acid, and linolenic acid.

Examples of organic acids include a dimer acid which is a reactant from oleic acid and linoleic acid, a trimer acid which is a reactant from oleic acid and linoleic acid, a hydrogenated dimer acid obtained by adding hydrogen to a dimer acid which is a reactant from oleic acid and linoleic acid, and a hydrogenated trimer acid obtained by adding hydrogen to a trimer acid which is a reactant from oleic acid and linoleic acid.

Additional examples of organic acids include a dimer acid other than a reactant from oleic acid and linoleic acid, a trimer acid other than a reactant from oleic acid and linoleic acid, a hydrogenated dimer acid obtained by adding hydrogen to a dimer acid other than a reactant from oleic acid and linoleic acid, and a hydrogenated trimer acid obtained by adding hydrogen to a trimer acid other than a reactant from oleic acid and linoleic acid. Examples thereof include a dimer acid which is a reactant from acrylic acid, a trimer acid which is a reactant from acrylic acid, a dimer acid which is a reactant from methacrylic acid, a trimer acid which is a reactant from methacrylic acid, a dimer acid which is a reactant from acrylic acid and methacrylic acid, a trimer acid which is a reactant from acrylic acid and methacrylic acid, a dimer acid which is a reactant from oleic acid, a trimer acid which is a reactant from oleic acid, a dimer acid which is a reactant from linoleic acid, a trimer acid which is a reactant from linoleic acid, a dimer acid which is a reactant from linolenic acid, a trimer acid which is a reactant from linolenic acid, a dimer acid which is a reactant from acrylic acid and oleic acid, a trimer acid which is a reactant from acrylic acid and oleic acid, a dimer acid which is a reactant from acrylic acid and linoleic acid, a trimer acid which is a reactant from acrylic acid and linoleic acid, a dimer acid which is a reactant from acrylic acid and linolenic acid, a trimer acid which is a reactant from acrylic acid and linolenic acid, a dimer acid which is a reactant from methacrylic acid and oleic acid, a trimer acid which is a reactant from methacrylic acid and oleic acid, a dimer acid which is a reactant from methacrylic acid and linoleic acid, a trimer acid which is a reactant from methacrylic acid and linoleic acid, a dimer acid which is a reactant from methacrylic acid and linolenic acid, a trimer acid which is a reactant from methacrylic acid and linolenic acid, a dimer acid which is a reactant from oleic acid and linolenic acid, a trimer acid which is a reactant from oleic acid and linolenic acid, a dimer acid which is a reactant from linoleic acid and linolenic acid, a trimer acid which is a reactant from linoleic acid and linolenic acid, a hydrogenated dimer acid obtained by adding hydrogen to a dimer acid other than the above-described reactant from oleic acid and linoleic acid, and a hydrogenated trimer acid obtained by adding hydrogen to a trimer acid other than the reactant from oleic acid and linoleic acid.

One kind or two or more kinds thereof may be used as organic acids. The amount of the organic acids is preferably 0% by weight to 20% by weight. The amount of the organic acids is more preferably 1 % by weight to 20% by weight and still more preferably 4% by weight to 15% by weight. In addition, the amount of the organic acids is more preferably 5% by weight to 10% by weight.

Examples of amines include monoethanolamine, diphenylguanidine, ethylamine, triethylamine, ethylenediamine, triethylenetetramine, 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2,4-diamino-6-[2'-methylimidazolyl-(1')]-ethyl-s-triazine-isocyanuric acid adducts, 2-phenylimidazole-isocyanuric acid adducts, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-3-benzylimidazolium chloride, 2-methylimidazoline, 2-phenylimidazoline, 2,4-diamino-6-vinyl-s-triazine, 2,4-diamino-6-vinyl-s-triazine-isocyanuric acid adducts, 2,4-diamino-6-methacryloyloxyethyl-s-triazine, epoxy-imidazole adducts, 2-methylbenzimidazole, 2-octylbenzimidazole, 2-pentylbenzimidazole, 2-(1-ethylpentyl)-benzimidazole, 2-nonylbenzimidazole, 2-(4-thiazolyl)benzimidazole, benzimidazole, 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazol-2-yl)-4-tert-octylphenol], 6-(2-benzotriazolyl)-4-tert-octyl-6'-tert-butyl-4'-methyl-2,2'-methylenebisphenol, 1,2,3-benzotriazole, 1-[N,N-bis(2-ethylhexyl)aminomethyl]benzotriazole, carboxybenzotriazole, 1-[N,N-bis(2-ethylhexyl) aminomethyl] methylbenzotriazole, 2,2'-[[(methyl-1H-benzotriazole-1-yl) methyl] imino]bisethanol, 1-(1',2'-dicarboxyethyl)benzotriazole, 1-(2,3-dicarboxypropyl)benzotriazole, 1-[(2-ethylhexyl amino)methyl]benzotriazole, 2,6-bis[(1H-benzimidazole-1-yl) methyl]-4-methylphenol, 5-methylbenzotriazole, and 5-phenyltetrazole.

One kind or two or more kinds thereof may be used as the amines. The amount of the amines is preferably 0% by weight to 10% by weight. The amount of the amines is more preferably 1% by weight to 10% by weight and still more preferably 4% by weight to 10% by weight. In addition, the amount of amines is more preferably 5% by weight to 10% by weight.

Examples of the organic halogen compounds include organic bromo compounds such as trans-2,3-dibromo-1,4-butenediol, triallyl isocyanurate hexabromide, 1-bromo-2-butanol, 1-bromo-2-propanol, 3-bromo-1-propanol, 3-bromo-1,2-propanediol, 1,4-dibromo-2-butanol, 1,3-dibromo-2-propanol, 2,3-dibromo-1-propanol, 2,3-dibromo-1,4-butanediol, 2,3-dibromo-2-butene-1,4-diol, trans-2,3-dibromo-2-butene-1,4-diol, cis-2,3-dibromo-2-butene-1,4-diol, tetrabromophthalic acid, and bromosuccinic acid. Additional examples thereof include organic chloro compounds chloroalkanes, chlorinated fatty acid esters, HET acid, and HET anhydride. Furthermore, additional examples thereof include organic fluoro compounds such as fluorine-based surfactants, perfluoroalkyl group-containing surfactants, and polytetrafluoroethylene.

One kind or two or more kinds thereof may be used as the organic halogen compounds. The amount of the organic halogen compounds is preferably 0% by weight to 15% by weight. The amount of the organic halogen compounds is more preferably 1% by weight to 10% by weight and still more preferably 4% by weight to 10% by weight. In addition, the amount of the organic halogen compounds is more preferably 5% by weight to 10% by weight.

The amine hydrohalide is a compound obtained by reacting an amine and a hydrogen halide, and examples thereof include aniline hydrogen chloride and aniline hydrogen bromide. The above-described amines may be used as the amines to obtain the amine hydrohalides, and examples thereof include ethylamine, ethylenediamine, triethylamine, methylimidazole, and 2-ethyl-4-methylimidazole, and examples of hydrogen halides include hydrides of chlorine, bromine, iodine, and fluorine (hydrogen chloride, hydrogen bromide, hydrogen iodide, and hydrogen fluoride). In addition, the soldering resin composition may contain borofluorides instead of or in combination with an amine hydrohalide, and examples of borofluorides include fluoroboric acid.

Regarding the amine hydrohalides, one kind or two or more kinds thereof may be used. The amount of the amine hydrohalides is preferably 0% by weight to 5% by weight.

Examples of the organic phosphorus compounds include methyl acid phosphate, ethyl acid phosphate, isopropyl acid phosphate, monobutyl acid phosphate, butyl acid phosphate, dibutyl acid phosphate, butoxyethyl acid phosphate, 2-ethylhexyl acid phosphate, bis(2-ethylhexyl) phosphate, monoisodecyl acid phosphate, isodecyl acid phosphate, lauryl acid phosphate, isotridecyl acid phosphate, stearyl acid phosphate, oleyl acid phosphate, beef tallow phosphate, coconut oil phosphate, isostearyl acid phosphate, alkyl acid phosphate, tetracosyl acid phosphate, ethylene glycol acid phosphate, 2-hydroxyethyl methacrylate acid phosphate, dibutyl pyrophosphate acid phosphate, mono-2-ethylhexyl 2-ethylhexyl phosphonate, and alkyl(alkyl)phosphonate.

One kind or two or more kinds thereof may be used as the organic phosphorus compounds. The amount of the organic phosphorus compounds is preferably 0% by weight to 10% by weight.

Examples of a silicone oil include dimethyl silicone oil, cyclic silicone oil, methylphenyl silicone oil, methylhydrogen silicone oil, higher fatty acid-modified silicone oil, alkyl-modified silicone oil, alkyl/aralkyl-modified silicone oil, amino-modified silicone oil, epoxy-modified silicone oil, polyether-modified silicone oil, alkyl/polyether-modified silicone oil, and carbinol-modified silicone oil.

One kind or two or more kinds thereof may be used as the silicone oil. The amount of the silicone oil is preferably 0% by weight to 5% by weight.

Examples of the solvents include water, ester-based solvents, alcoholic solvents, glycol ether-based solvents, and terpineols. Examples of the ester-based solvents include alkyl fatty acids, butyl stearate, 2-ethylhexyl stearate, isotridecyl stearate, methyl oleate, isobutyl oleate, coconut fatty acid methyl esters, methyl laurate, isopropyl myristate, isopropyl palmitate, 2-ethylhexyl palmitate, and octyldodecyl myristate. Examples of the alcoholic solvents include ethanol, industrial ethanol (mixed solvent obtained by adding methanol and/or isopropyl alcohol to ethanol), isopropyl alcohol, 1,2-butanediol, isobornyl cyclohexanol, 2,4-diethyl-1,5-pentanediol, 2,2-dimethyl-1,3-propanediol, 2,5-dimethyl-2,5-hexanediol, 2,5-dimethyl-3-hexyne-2,5-diol, 2,3-dimethyl-2,3-butanediol, 1,1,1-tris(hydroxymethyl)ethane, 2-ethyl-2-hydroxymethyl-1,3-propanediol, 2,2'-oxybis(methylene)bis(2-ethyl-1,3-propanediol), 2,2-bis(hydroxymethyl)-1,3-propanediol, 1,2,6-trihydroxyhexane, bis[2,2,2-tris(hydroxymethyl)ethyl]ether, 1-ethynyl-1-cyclohexanol, 1,4-cyclohexanediol, 1,4-cyclohexane dimethanol, erythritol, threitol, guaiacol glycerol ether, 3,6-dimethyl-4-octyne-3,6-diol, and 2,4,7,9-tetramethyl-5-decyne-4,7-diol. Examples of the glycol ether-based solvents include hexyl diglycol, diethylene glycol mono-2-ethylhexyl ether, ethylene glycol monophenyl ether, 2-methylpentane-2,4-diol, diethylene glycol dibutyl ether, and triethylene glycol monobutyl ether.

One kind or two or more kinds thereof may be used as the solvents. The amount of the solvents is preferably 0% by weight to 13% by weight. It is preferable that no solvent be contained.

Configuration Example of Solder Composition of Present Embodiment>

The solder composition according to the present embodiment contains the above-described soldering resin composition. Examples of such solder compositions include a solder composition referred to as a flux cored solder obtained by filling a linear solder with the above-described soldering resin composition, and a solder composition referred to as a flux coat obtained by coating a solder with the above-described soldering resin composition.

<Configuration Example of Flux Cored Solder of Present Embodiment>

The flux cored solder according to the present embodiment is a linear solder filled with the above-described soldering resin composition. It is required for the soldering resin composition in a flux cored solder to be solid at normal temperature so as not to flow out or to have a predetermined high viscosity so as not to flow out in a process of processing a solder into a linear shape. The viscosity of the soldering resin composition required when used in a flux cored solder is, for example, higher than or equal to 3,500 Pa·s.

The solder preferably contains no Pb, and is composed of Sn alone, an Sn-Ag-based alloy, an Sn-Cu-based alloy, an Sn-Ag-Cu-based alloy, an Sn-Bi-based alloy, an Sn-In-based alloy, or the like, or an alloy obtained by adding Sb, Bi, In, Cu, Zn, As, Ag, Cd, Fe, Ni, Co, Au, Ge, P, or the like to these alloys.

<Configuration Example of Flux Coated Solder of Present Embodiment>

The flux coated solder according to the present embodiment is a solder coated with the above-described soldering resin composition. A solder has a spherical shape referred to as a ball, or a columnar shape such as cylinder referred to as a column, a pellet, or the like. The soldering resin composition with which a solder is coated is a solid attached to the surface of the solder at normal temperature.

The solder preferably contains no Pb, and is composed of Sn alone, an Sn-Ag-based alloy, an Sn-Cu-based alloy, an Sn-Ag-Cu-based alloy, an Sn-Bi-based alloy, an Sn-In-based alloy, or the like, or an alloy obtained by adding Sb, Bi, In, Cu, Zn, As, Ag, Cd, Fe, Ni, Co, Au, Ge, P, or the like to these alloys.

<Example of Actions and Effects of Soldering resin composition of Present Embodiment and Solder Composition in Which The Soldering resin composition is Used>

An acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), and an acrylic resin having a number average molecular weight (Mn) and a weight average molecular weight (Mw) of greater than or equal to 500 and less than 2,000 obtained through mass spectrometry using a time-of-flight mass spectrometer (TOF-MS) have excellent compatibility with a rosin-based resin. Accordingly, in a soldering resin composition which contains the acrylic resins having a molecular weight within the above-described range and a rosin-based resin, stratification due to non-uniformity of the rosin-based resin and the acrylic resins is inhibited.

In addition, the soldering resin composition containing the acrylic resins having a molecular weight within the above-described range and the rosin-based resin has excellent temperature cycle reliability, and therefore, cracking of the soldering resin composition which has been cured after heating is inhibited.

Accordingly, the soldering resin composition according to the present embodiment may be used in a solder composition such as a flux cored solder, a flux coated solder, or the like to inhibit stratification of the residue. In addition, the residue can be made flexible to inhibit cracking of the residue.

<One Example of Flux of First Embodiment>

A flux of a first embodiment contains: an acrylic resin having a number average molecular weight (Mn) of greater than or equal to 500 and less than 2,000 obtained through mass spectrometry using a time-of-flight mass spectrometer (TOF-MS); an activator; and a solvent.

Alternatively, the flux of the first embodiment contains: an acrylic resin having a weight average molecular weight (Mw) of greater than or equal to 500 and less than 2,000 obtained through mass spectrometry using a time-of-flight mass spectrometer (TOF-MS); an activator; and a solvent.

As described above, regarding the number average molecular weight (Mn) and the weight average molecular weight (Mw) obtained through mass spectrometry using a time-of-flight mass spectrometer (TOF-MS), the ratio (Mn/Mw) of the number average molecular weight (Mn) to the weight average molecular weight (Mw) is about 1.00 to 1.30, and the number average molecular weight (Mn) and the weight average molecular weight (Mw) obtained through the above-described method substantially coincide with each other.

Therefore, it can also be said that the flux of the first embodiment contains: an acrylic resin having a number average molecular weight (Mn) and a weight average molecular weight (Mw) of greater than or equal to 500 and less than 2,000 obtained through mass spectrometry using a time-of-flight mass spectrometer (TOF-MS); an activator; and a solvent.

The acrylic resin having a number average molecular weight (Mn) and a weight average molecular weight (Mw) of greater than or equal to 500 and less than 2,000 obtained through mass spectrometry using a time-of-flight mass spectrometer (TOF-MS) is referred to as an acrylic oligomer. The acrylic resin is formed from an acrylic acid, an acrylic ester, a methacrylic acid, or a methacrylic ester, as a monomer, and examples thereof include a polymer of acrylic acid, a polymers of acrylic ester, and a polymer of acrylic acid and acrylic ester. Additional examples thereof include a polymer of methacrylic acid, a polymer of methacrylic ester, and a polymer of methacrylic acid and methacrylic ester. Additional examples thereof include a polymer of acrylic acid and methacrylic acid, a polymer of acrylic acid and methacrylic ester, a polymer of methacrylic acid and acrylic ester, a polymer of acrylic ester and methacrylic ester, a polymer of acrylic acid, methacrylic acid, and acrylic ester, a polymer of acrylic acid, methacrylic acid, and methacrylic ester, a polymer of acrylic acid, methacrylic acid, acrylic ester, and methacrylic ester, a polymer of acrylic acid, acrylic ester, and methacrylic ester, and a polymer of methacrylic acid, acrylic ester, and methacrylic ester. Specific examples of the acrylic ester or the like are the same as those of the acrylic resins described in the above-described soldering resin composition. Still other examples of such acrylic resins include butyl acrylate oligomers, alkyl acrylate oligomers, butyl methacrylate oligomers, isotridecanol methacrylate oligomers, acrylic acid-butyl acrylate copolymerized oligomers, and butyl acrylate-polyethylene copolymerized oligomers, and one kind or two or more kinds thereof may be used.

The flux of the first embodiment may contain a rosin-based resin. Specific examples of the rosin-based resins are the same as those of the rosin-based resin described in the above-described soldering resin composition, and one kind or two or more kinds of the compounds described in the specific examples of the soldering resin composition may be used.

The flux of the first embodiment contains: 7.0% by weight to 50.0% by weight of an acrylic resin having a number average molecular weight (Mn) and a weight average molecular weight (Mw) of greater than or equal to 500 and less than 2,000 obtained through mass spectrometry using a time-of-flight mass spectrometer (TOF-MS); and 0% by weight to 30.0% by weight of a rosin-based resin. In the case where the flux of the first embodiment contains a rosin-based resin, the ratio (acrylic resin / rosin-based resin) of the weight of one kind of the acrylic resin or the total weight of two or more kinds of the acrylic resins to the weight of one kind of the rosin-based resin or the total weight of two or more kinds of the rosin-based resins is preferably greater than or equal to 0.7. The weight ratio of acrylic resin / rosin-based resin is preferably greater than or equal to 0.8, more preferably greater than or equal to 1.0, and the most preferably 2.0 to 6.0. The amount of the acrylic resin is preferably 7.0% by weight to 35.0% by weight and most preferably 10.0% by weight to 30.0% by weight. The amount of the rosin-based resin is most preferably 2.0% by weight to 15.0% by weight.

The flux of the first embodiment may further contain other resins in addition to the rosin-based resin. Specific examples of other resins are the same as those of the other resins described in the above-described soldering resin composition, and the amount of other resins is preferably 0% by weight to 10.0% by weight.

The flux of the first embodiment contains at least one selected from the group consisting of organic acids, amines, organic halogen compounds, and amine hydrohalides as the activator.

The flux of the first embodiment may further contain a thixotropic agent, a hindered phenolic metal deactivator, and a nitrogen compound-based metal deactivator.

Examples of the organic acids include dimer acids which are dimeric reactants from monocarboxylic acids, hydrogenated dimer acids obtained by adding hydrogen to the dimer acids, trimer acids which are trimeric reactants from monocarboxylic acids, and hydrogenated trimer acids obtained by adding hydrogen to the trimer acids. Examples of dimer acids, hydrogenated dimer acids, trimer acids, and hydrogenated trimer acids include a dimer acid which is a reactant from oleic acid and linoleic acid, a trimer acid which is a reactant from oleic acid and linoleic acid, a hydrogenated dimer acid obtained by adding hydrogen to a dimer acid which is a reactant from oleic acid and linoleic acid, and a hydrogenated trimer acid obtained by adding hydrogen to a trimer acid which is a reactant from oleic acid and linoleic acid.

In addition, examples of dimer acids, hydrogenated dimer acids, trimer acids, and hydrogenated trimer acids include dimer acids other than a reactant from oleic acid and linoleic acid, trimer acids other than a reactant from oleic acid and linoleic acid, hydrogenated dimer acids obtained by adding hydrogen to the dimer acids other than a reactant from oleic acid and linoleic acid, and hydrogenated trimer acids obtained by adding hydrogen to the trimer acids other than a reactant from oleic acid and linoleic acid, and specific examples thereof are the same as those of the dimer acids and the like, described in the above-described soldering resin composition.

One kind or two or more kinds thereof may be used as the dimer acid, the hydrogenated dimer acid, the trimer acid, or the hydrogenated trimer acids. In a case where the flux of the first embodiment contains at least one selected from the group consisting of the other organic acids, the amines, the organic halogen compounds, and the amine hydrohalides within the ranges specified in the present invention, the amount of the dimer acid, the hydrogenated dimer acid, the trimer acid, and the hydrogenated trimer acid is preferably 0% by weight to 25.0% by weight. In a case where the flux contains neither the other organic acids, the amines, the organic halogen compounds, nor the amine hydrohalides, the amount of the dimer acid, the hydrogenated dimer acid, the trimer acid, and the hydrogenated trimer acid is preferably greater than 0% by weight and less than or equal to 25.0% by weight. The amount of one kind or two or more kinds of the dimer acid, the hydrogenated dimer acid, the trimer acid, and the hydrogenated trimer acids is more preferably 1.0% by weight to 25.0% by weight, still more preferably 3.0% by weight to 25.0% by weight, and the most preferably 5.0% by weight to 25.0% by weight.

Specific examples of the organic acids other than the dimer acids, the hydrogenated dimer acids, the trimer acids, and the hydrogenated trimer acids are the same as those of the organic acids other than the dimer acids and the like described in the above-described soldering resin composition.

One kind or two or more kinds thereof may be used as other organic acids. In a case where the flux of the first embodiment contains one kind or two or more kinds of the dimer acids, the hydrogenated dimer acids, the trimer acids, the hydrogenated trimer acids, the amines, the organic halogen compounds, and the amine hydrohalides within the ranges specified in the present invention, the amount of other organic acids is preferably 0% by weight to 15.0% by weight. In addition, in a case where the flux contains neither the dimer acids, the hydrogenated dimer acids, the trimer acids, the hydrogenated trimer acids, the amines, the organic halogen compounds, nor the amine hydrohalides, the amount of other organic acids is preferably greater than 0% by weight and less than or equal to 15.0% by weight. The amount of other organic acids is more preferably 1.0% by weight to 15.0% by weight, still more preferably 3.0% by weight to 15.0% by weight, and the most preferably 5.0% by weight to 15.0% by weight. Furthermore, it is preferable that the total amount of either one of the dimer acids, the hydrogenated dimer acids, the trimer acids, and the hydrogenated trimer acids or two or more kinds of the dimer acids, the hydrogenated dimer acids, the trimer acids, and the hydrogenated trimer acids, and one kind or two or more kinds of other organic acids be less than or equal to 30.0% by weight.

Specific examples of the amines are the same as those of the amines described in the above-described soldering resin composition, and one kind or two or more kinds thereof may be used as the amines. In a case where the flux of the first embodiment contains one kind or two or more kinds of the dimer acids, the hydrogenated dimer acids, the trimer acids, the hydrogenated trimer acids, the other organic acids, the organic halogen compounds, and the amine hydrohalides within the ranges specified in the present invention, the amount of the amines is preferably 0% by weight to 10.0% by weight. In a case where the flux contains neither the dimer acids, the hydrogenated dimer acids, the trimer acids, the hydrogenated trimer acids, the other organic acids, the organic halogen compounds, nor the amine hydrohalides, the amount of the amines is preferably greater than 0% by weight and less than or equal to 10.0% by weight. The amount of the amines is more preferably 1.0% by weight to 10.0% by weight, and in a case where an activity due to the amines is not obtained, the amount thereof is still more preferably 1.0% by weight to 3.0% by weight. In a case where an activity due to the amines is obtained, the amount of the amines is still more preferably 3.0% by weight to 10.0% by weight and the most preferably 5.0% by weight to 10.0% by weight.

Specific examples of the organic halogen compounds are the same as those of the organic halogen compounds described in the above-described soldering resin composition, and one kind or two or more kinds thereof may be used as the organic halogen compounds. In a case where the flux of the first embodiment contains one kind or two or more kinds of the dimer acids, the hydrogenated dimer acids, the trimer acids, the hydrogenated trimer acids, the other organic acids, the amines, and the amine hydrohalides within the ranges specified in the present invention, the amount of the organic halogen compounds is preferably 0% by weight to 5.0% by weight and more preferably 0% by weight to 2.5% by weight. In a case where the flux contains neither the dimer acids, the hydrogenated dimer acids, the trimer acids, the hydrogenated trimer acids, the other organic acids, the amines, nor the amine hydrohalides, the amount of the organic halogen compounds is preferably greater than 0% by weight and less than or equal to 5.0% by weight and more preferably greater than 0% by weight and less than or equal to 2.5% by weight.

Specific examples of the amine hydrohalides are the same as those of the amine hydrohalides described in the above-described soldering resin composition, and one kind or two or more kinds thereof may be used as the amine hydrohalides. In a case where the flux of the first embodiment contains one kind or two or more kinds of the dimer acids, the hydrogenated dimer acids, the trimer acids, the hydrogenated trimer acids, the other organic acids, the amines, and the organic halogen compounds within the ranges specified in the present invention, the amount of the amine hydrohalides is preferably 0% by weight to 2.0% by weight and more preferably 0% by weight to 1.2% by weight. In a case where the flux contains neither the dimer acids, the hydrogenated dimer acids, the trimer acids, the hydrogenated trimer acids, the other organic acids, the amines, nor the organic halogen compounds, the amount of the amine hydrohalides is preferably greater than 0% by weight and less than or equal to 2.0% by weight and more preferably greater than 0% by weight and less than or equal to 1.2% by weight.

Specific examples of the thixotropic agent are the same as those of the thixotropic agents described in the above-described soldering resin composition, and one kind or two or more kinds thereof may be used as the thixotropic agent. The amount of the thixotropic agent in the flux of the first embodiment is preferably 0% by weight to 10.0% by weight. The amount of the thixotropic agent is preferably greater than 0% by weight and less than or equal to 10.0% by weight, more preferably 1.0% by weight to 10.0% by weight, still more preferably 3.0% by weight to 10.0% by weight, and the most preferably 5.0% by weight to 10.0% by weight.

Examples of the metal deactivator include hindered phenolic metal deactivators and nitrogen compound-based metal deactivators. Examples of the hindered phenolic metal deactivators include bis(3-(3-tert-butyl-4-hydroxy-5-methylphenyl)propionic acid), and N,N'-hexamethylenebis(3-(3,5-di-tert-butyl-4-hydroxyphenyl) propanamide). Examples of the nitrogen compound-based metal deactivators include N-(2H-1,2,4-triazol-5-yl) salicylamide.

One kind or two or more kinds thereof may be used as the metal deactivator. It is preferable that the amount of the hindered phenolic metal deactivator as the metal deactivator be 0% by weight to 10.0% by weight and that of the nitrogen compound-based metal deactivator be 0% by weight to 5.0% by weight. The amount of the hindered phenolic metal deactivator is preferably greater than 0% by weight and less than or equal to 10.0% by weight, more preferably 1.0% by weight to 10.0% by weight, still more preferably 2.0% by weight to 10.0% by weight, and the most preferably 5.0% by weight to 10.0% by weight. The amount of the nitrogen compound-based metal deactivator is preferably greater than 0% by weight and less than or equal to 5.0% by weight, more preferably 0.1% by weight to 5.0% by weight, still more preferably 0.5% by weight to 5.0% by weight, and the most preferably 1.0% by weight to 5.0% by weight.

Specific examples of the solvents are the same as those of the solvents described in the above-described soldering resin composition, and one kind or two or more kinds thereof may be used as the solvent. In a case where the flux of the first embodiment contains only an acrylic resin and an activator as essential components in predetermined amounts thereof as described above, the amount of the solvent is the balance remaining after subtracting the amounts of the essential components.

In a case where the flux of the first embodiment contains any one or a combination of the thixotropic agent and the metal deactivator in addition to the essential components in predetermined amounts thereof as described above, the amount of the solvents is the balance remaining after subtracting the amounts of the essential components and these optionally added components.

<One Example of Flux of Second Embodiment>

A flux of a second embodiment contains: an acrylic resin having a number average molecular weight (Mn) of greater than or equal to 500 and less than 2,000 obtained through mass spectrometry using a time-of-flight mass spectrometer (TOF-MS); either a polyethylene-based resin or a polypropylene-based resin or both a polyethylene-based resin and a polypropylene-based resin; and a solvent.

Alternatively, the flux of the second embodiment contains: an acrylic resin having a weight average molecular weight (Mw) of greater than or equal to 500 and less than 2,000 obtained through mass spectrometry using a time-of-flight mass spectrometer (TOF-MS); either a polyethylene-based resin or a polypropylene-based resin or both a polyethylene-based resin and a polypropylene-based resin; and a solvent.

As described above, regarding the number average molecular weight (Mn) and the weight average molecular weight (Mw) obtained through mass spectrometry using a time-of-flight mass spectrometer (TOF-MS), the ratio (Mn/Mw) of the number average molecular weight (Mn) to the weight average molecular weight (Mw) is about 1.00 to 1.30, and therefore, the number average molecular weight (Mn) and the weight average molecular weight (Mw) obtained through the above-described method substantially coincide with each other.

Therefore, it can also be said that the flux of a second embodiment contains: an acrylic resin having a number average molecular weight (Mn) and a weight average molecular weight (Mw) of greater than or equal to 500 and less than 2,000 obtained through mass spectrometry using a time-of-flight mass spectrometer (TOF-MS); either a polyethylene-based resin or a polypropylene-based resin or both a polyethylene-based resin and a polypropylene-based resin; and a solvent.

Specific examples of the acrylic resin having a number average molecular weight (Mn) and a weight average molecular weight (Mw) of greater than or equal to 500 and less than 2,000 obtained through mass spectrometry using a time-of-flight mass spectrometer (TOF-MS) are the same as those of the above-described flux of the first embodiment. Examples thereof include butyl acrylate oligomers, alkyl acrylate oligomers, butyl methacrylate oligomers, isotridecanol methacrylate oligomers, acrylic acid-butyl acrylate copolymerized oligomers, and butyl acrylate-polyethylene copolymerized oligomers, and one kind or two or more kinds thereof may be used.

Examples of the polyethylene (PE)-based resin include a polyethylene resin, an acid-modified polyethylene resin, and an oxidized polyethylene resin. Examples of the polypropylene (PP)-based resin include a polypropylene resin, an acid-modified polypropylene resin, and an oxidized polypropylene resin. One kind or two or more kinds thereof may be used as the polyethylene-based resin or the polypropylene-based resin. Copolymers of the above-described polyethylene-based resins and polypropylene-based resins may be used as the polyethylene-based resin and the polypropylene-based resin.

The flux of the second embodiment contains: 7.0% by weight to 50.0% by weight of an acrylic resin having a number average molecular weight (Mn) and a weight average molecular weight (Mw) of greater than or equal to 500 and less than 2,000 obtained through mass spectrometry using a time-of-flight mass spectrometer (TOF-MS); and 0% by weight to 10.0% by weight of either a polyethylene-based resin or a polypropylene-based resin or both a polyethylene-based resin and a polypropylene-based resin. In addition, in the flux of the second embodiment, it is preferable that the ratio (acrylic resin / polyethylene•polypropylene-based resins) of the weight of one kind of the acrylic resin or the total weight of two or more kinds of the acrylic resins to the weight of one kind of the polyethylene-based resin or the polypropylene-based resin or the total weight of two or more kinds of either the polyethylene-based resins or the polypropylene-based resins or both the polyethylene-based resins and the polypropylene-based resins be 1.0 to 120.0. The weight ratio of acrylic resin / polyethylene•polypropylene-based resin is more preferably 2.0 to 100.0 and still more preferably 4.0 to 30.0. The amount of acrylic resins is preferably 7.0% by weight to 35.0% by weight and the most preferably 10.0% by weight to 30.0% by weight.

The flux of the second embodiment may contain a rosin-based resin. Specific examples of rosin-based resins are the same as those in the above-described flux of the first embodiment, and one kind or two or more kinds thereof may be used.

The flux of the second embodiment contains 0% by weight to 30.0% by weight of a rosin-based resin. The amount of the rosin-based resin is the most preferably 2.0% by weight to 15.0% by weight.

The flux of the second embodiment further contains, as an activator, one kind or two or more kinds of organic acids, amines, organic halogen compounds, and amine hydrohalides.

The flux of the second embodiment may further contain a thixotropic agent, a hindered phenolic metal deactivator, or a nitrogen compound-based metal deactivator.

Specific examples of the organic acids, the amines, the organic halogen compounds, the amine hydrohalides, the thixotropic agent, the hindered phenolic metal deactivator, the nitrogen compound-based metal deactivator, and a solvent are the same as those in the above-described flux of the first embodiment.

The amount of dimer acids, hydrogenated dimer acids, trimer acids, and hydrogenated trimer acids is preferably 0% by weight to 25.0% by weight, in a case where the flux of the second embodiment contains one kind or two or more kinds of other organic acids, amines, organic halogen compounds, and amine hydrohalides within the ranges specified in the present invention. Alternatively, the amount of dimer acids, hydrogenated dimer acids, trimer acids, and hydrogenated trimer acids is preferably greater than 0% by weight and less than or equal to 25.0% by weight, in a case where the flux contains neither other organic acids, amines, organic halogen compounds, nor amine hydrohalides. The amount of one kind or two or more kinds of dimer acids, hydrogenated dimer acids, trimer acids, and hydrogenated trimer acids is more preferably 1.0% by weight to 25.0% by weight, still more preferably 3.0% by weight to 25.0% by weight, and the most preferably 5.0% by weight to 25.0% by weight.

In a case where the flux of the second embodiment contains one kind or two or more kinds of dimer acids, hydrogenated dimer acids, trimer acids, hydrogenated trimer acids, amines, organic halogen compounds, and amine hydrohalides within the ranges specified in the present invention, the amount of other organic acids is preferably 0% by weight to 15.0% by weight. In a case where the flux contains neither dimer acids, hydrogenated dimer acids, trimer acids, hydrogenated trimer acids, amines, organic halogen compounds, nor amine hydrohalides, the amount of other organic acids is preferably greater than 0% by weight and less than or equal to 15.0% by weight. The amount of other organic acids is more preferably 1.0% by weight to 15.0% by weight, still more preferably 3.0% by weight to 15.0% by weight, and the most preferably 5.0% by weight to 15.0% by weight. Furthermore, it is preferable that the total amount of either a dimer acid, a hydrogenated dimer acid, a trimer acid, or a hydrogenated trimer acid or two or more kinds of dimer acids, hydrogenated dimer acids, trimer acids, and hydrogenated trimer acids, and one kind or two or more kinds of other organic acids be less than or equal to 30.0% by weight.

In a case where the flux of the second embodiment contains one kind or two or more kinds of dimer acids, hydrogenated dimer acids, trimer acids, hydrogenated trimer acids, other organic acids, organic halogen compounds, and amine hydrohalides within the ranges specified in the present invention, the amount of amines is preferably 0% by weight to 10.0% by weight. In a case where the flux contains neither dimer acids, hydrogenated dimer acids, trimer acids, hydrogenated trimer acids, other organic acids, organic halogen compounds, nor amine hydrohalides, the amount of amines is preferably greater than 0% by weight and less than or equal to 10.0% by weight. The amount of amines is more preferably 1.0% by weight to 10.0% by weight, and in a case where an activity due to amines is not obtained, the amount thereof is still more preferably 1.0% by weight to 3.0% by weight. In a case where an activity due to amines is obtained, the amount thereof is still more preferably 3.0% by weight to 10.0% by weight and the most preferably 5.0% by weight to 10.0% by weight.

In a case where the flux of the second embodiment contains one kind or two or more kinds of dimer acids, hydrogenated dimer acids, trimer acids, hydrogenated trimer acids, other organic acids, amines, and amine hydrohalides within the ranges specified in the present invention, the amount of organic halogen compounds is preferably 0% by weight to 5.0% by weight and more preferably 0% by weight to 2.5% by weight. In a case where the flux contains neither dimer acids, hydrogenated dimer acids, trimer acids, hydrogenated trimer acids, other organic acids, amines, nor amine hydrohalides, the amount of organic halogen compounds is preferably greater than 0% by weight and less than or equal to 5.0% by weight and more preferably greater than 0% by weight and less than or equal to 2.5% by weight.

In a case where the flux of the second embodiment contains one kind or two or more kinds of dimer acids, hydrogenated dimer acids, trimer acids, hydrogenated trimer acids, other organic acids, amines, and organic halogen compounds within the ranges specified in the present invention, the amount of amine hydrohalides is preferably 0% by weight to 2.0% by weight and more preferably 0% by weight to 1.2% by weight. In a case where the flux contains neither dimer acids, hydrogenated dimer acids, trimer acids, hydrogenated trimer acids, other organic acids, amines, nor organic halogen compounds, the amount of amine hydrohalides is preferably greater than 0% by weight and less than or equal to 2.0% by weight and more preferably greater than 0% by weight and less than or equal to 1.2% by weight.

The amount of a thixotropic agent in the flux of the second embodiment is preferably 0% by weight to 10.0% by weight. The amount of the thixotropic agents is preferably greater than 0% by weight and less than or equal to 10.0% by weight, more preferably 1.0% by weight to 10.0% by weight, still more preferably 3.0% by weight to 10.0% by weight, and the most preferably 5.0% by weight to 10.0% by weight.

It is preferable that the amount of a hindered phenolic metal deactivator as a metal deactivator in the flux of the second embodiment be 0% by weight to 10.0% by weight and that of a nitrogen compound-based metal deactivator be 0% by weight to 5.0% by weight. The amount of a hindered phenolic metal deactivator is preferably greater than 0% by weight and less than or equal to 10.0% by weight, more preferably 1.0% by weight to 10.0% by weight, still more preferably 2.0% by weight to 10.0% by weight, and the most preferably 5.0% by weight to 10.0% by weight. The amount of a nitrogen compound-based metal deactivator is preferably greater than 0% by weight and less than or equal to 5.0% by weight, more preferably 0.1% by weight to 5.0% by weight, still more preferably 0.5% by weight to 5.0% by weight, and the most preferably 1.0% by weight to 5.0% by weight.

In a case where the flux of the second embodiment contains only an acrylic resin and an activator as essential components in predetermined amounts thereof as described above, the amount of a solvent is the balance remaining after subtracting the amounts of the essential components.

Furthermore, in a case where the flux contains any one or a combination of a thixotropic agent and a metal deactivator in addition to the essential components in predetermined amounts thereof as described above, the amount of a solvent is the balance remaining after subtracting the amounts of the essential components and these optionally added components.

<One Example of Solder Paste of Present Embodiment>

A solder paste according to the present embodiment contains: the flux of the above-described first or second embodiment; and a metal powder. The metal powder is composed of a solder powder of Sn alone, an Sn-Ag-based alloy, an Sn-Cu-based alloy, an Sn-Ag-Cu-based alloy, an Sn-Bi-based alloy, an Sn-In-based alloy, or the like, or a solder alloy powder obtained by adding Sb, Bi, In, Cu, Zn, As, Ag, Cd, Fe, Ni, Co, Au, Ge, P, Pb, or the like to these alloys.

The solder alloy preferably has an alloy constitution composed of 25 ppm by mass to 300 ppm by mass of As, at least one selected from the group consisting of greater than 0 ppm by mass and less than or equal to 3,000 ppm by mass of Sb, greater than 0 ppm by mass and less than or equal to 10,000 ppm by mass of Bi, and greater than 0 ppm by mass and less than or equal to 5,100 ppm by mass of Pb, and a balance of Sn. The solder alloy may further contain at least one selected from the group consisting of 0% by mass to 4% by mass of Ag and 0% by mass to 0.9% by mass of Cu.

As is an element capable of suppressing changes in viscosity of a solder paste over time. Since As has low reactivity with a flux and is a noble element with respect to Sn, it is inferred that As can exhibit a thickening suppression effect. The lower limit of the amount of As is, for example, greater than or equal to 25 ppm by mass, preferably greater than or equal to 50 ppm by mass, and more preferably greater than or equal to 100 ppm by mass. On the other hand, if the amount of As is excessively high, the wettability of a solder alloy deteriorates. The upper limit of the amount of As is, for example, less than or equal to 300 ppm by mass, preferably less than or equal to 250 ppm by mass, and more preferably less than or equal to 200 ppm by mass.

Sb is an element which has low reactivity with a flux and exhibits a thickening suppression effect. In a case where a solder alloy contains Sb, the lower limit of the amount of Sb is, for example, greater than 0 ppm by mass, preferably greater than or equal to 25 ppm by mass, more preferably greater than or equal to 50 ppm by mass, still more preferably greater than or equal to 100 ppm by mass, and particularly preferably greater than or equal to 300 ppm by mass. On the other hand, if the amount of Sb is excessively high, the wettability deteriorates. Therefore, it is necessary to set the amount thereof to a moderate level. The upper limit of the amount of Sb is, for example, less than or equal to 3,000 ppm by mass, preferably less than or equal to 1,150 ppm by mass, and more preferably less than or equal to 500 ppm by mass.

Similarly to Sb, Bi and Pb are elements which have low reactivity with a flux and exhibit a thickening suppression effect. In addition, Bi and Pb lower the liquidus temperature of a solder alloy and reduce the viscosity of a molten solder, and therefore, are elements capable of suppressing deterioration in the wettability due to As.

In a case where at least one element selected from the group consisting of Sb, Bi, and Pb is present, the deterioration in the wettability due to As can be suppressed. In a case where a solder alloy contains Bi, the lower limit of the amount of Bi is, for example, greater than 0 ppm by mass, preferably greater than or equal to 25 ppm by mass, more preferably greater than or equal to 50 ppm by mass, still more preferably greater than or equal to 75 ppm by mass, particularly preferably greater than or equal to 100 ppm by mass, and the most preferably greater than or equal to 250 ppm by mass. In a case where a solder alloy contains Pb, the lower limit of the amount of Pb is greater than 0 ppm by mass, preferably greater than or equal to 25 ppm by mass, more preferably greater than or equal to 50 ppm by mass, still more preferably greater than or equal to 75 ppm by mass, particularly preferably greater than or equal to 100 ppm by mass, and the most preferably greater than or equal to 250 ppm by mass.

On the other hand, in a case where the amount of the element Bi or Pb is excessively high, the solidus temperature remarkably decreases. Therefore, ΔT which is a temperature difference between the liquidus temperature and the solidus temperature becomes excessively large. If ΔT is excessively large, a crystal phase in which the amount of Bi or Pb is low and the melting point is high is precipitated in the process of coagulation of a molten solder, and therefore, Bi or Pb in a liquid phase is concentrated. Thereafter, if the temperature of the molten solder further decreases, a crystal phases in which the amount of Bi or Pb is high and the melting point is low is segregated. Accordingly, the mechanical strength or the like of a solder alloy deteriorates, and the reliability deteriorates. Since a crystal phase in which the amount of Bi is high is hard and brittle, the reliability remarkably deteriorates if the crystal phase is segregated in the solder alloy.

From such viewpoints, in a case where a solder alloy contains Bi, the upper limit of the amount of Bi is, for example, less than or equal to 10,000 ppm by mass, preferably less than or equal to 1,000 ppm by mass, more preferably less than or equal to 600 ppm by mass, and still more preferably less than or equal to 500 ppm by mass. In a case where a solder alloy contains Pb, the upper limit of the amount of Pb is, for example, less than or equal to 5,100 ppm by mass, preferably less than or equal to 5,000 ppm by mass, more preferably less than or equal to 1,000 ppm by mass, still more preferably less than or equal to 850 ppm by mass, and particularly preferably less than or equal to 500 ppm by mass.

The solder alloy preferably satisfies the following mathematical formula (1).

$$275 \leq 2As + Sb + Bi + Pb \qquad (1)$$

In the mathematical formula (1), As, Sb, Bi, and Pb each represents the amount thereof (ppm by mass) in the alloy constitution.

As, Sb, Bi, and Pb are all elements exhibiting a thickening suppression effect. The total amount of the elements is preferably greater than or equal to 275 ppm by mass. The reason why the amount of As is doubled in the mathematical formula (1) is because As exhibits a higher thickening suppression effect than that of Sb, Bi, or Pb.

The lower limit of the mathematical formula (1) is preferably greater than or equal to 350 and more preferably greater than or equal to 1,200. On the other hand, the upper limit of (1) is not particularly limited from the viewpoint of the thickening suppression effect, but is preferably less than or equal to 25,200, more preferably less than or equal to 10,200, still more preferably less than or equal to 5,300, and particularly preferably less than or equal to 3,800 from the viewpoint of setting $\Delta T$ within a suitable range.

In the following mathematical formulae (1a) and (1b), the upper limit and the lower limit are appropriately selected from the above-described preferred aspects.

$$275 \leq 2As + Sb + Bi + Pb \leq 25,200 \qquad (1a)$$

$$275 \leq 2As + Sb + Bi + Pb \leq 5,300 \qquad (1b)$$

In the mathematical formulae (1a) and (1b), As, Sb, Bi, and Pb each represents the amount thereof (ppm by mass) in the alloy constitution.

The solder alloy preferably satisfies the following mathematical formula (2).

$$0.01 \leq (2As + Sb) / (Bi + Pb) \leq 10.00 \qquad (2)$$

In the mathematical formula (2), As, Sb, Bi, and Pb each represents the amount thereof (ppm by mass) in the alloy constitution.

In a case where the amounts of As and Sb are high, the wettability of a solder alloy deteriorates. On the other hand, although Bi and Pb suppress the deterioration in the wettability due to the inclusion of As, if the amounts of Bi and Pb are excessively high, $\Delta T$ increases. In particular, $\Delta T$ easily increases in the alloy constitution in which Bi and Pb are simultaneously contained. In view of these, if the amounts of Bi and Pb are increased to excessively improve the wettability, $\Delta T$ becomes large. On the other hand, if the amount of As or Sb is increased to improve the thickening suppression effect, the wettability deteriorates. In a case where the elements are divided into a group of As and Sb and a group of Bi and Pb and the total amount of both groups is within a predetermined appropriate range, all of the thickening suppression effect, narrowing of $\Delta T$, and the wettability are simultaneously satisfied.

In a case where the mathematical formula (2) is less than 0.01, the total amount of Bi and Pb becomes relatively larger than the total amount of As and Pb, and therefore, $\Delta T$ becomes large. The lower limit of the mathematical formula (2) is preferably greater than or equal to 0.02, more preferably greater than or equal to 0.41, still more preferably greater than or equal to 0.90, particularly preferably greater than or equal to 1.00, and the most preferably greater than or equal to 1.40. On the other hand, if the mathematical formula (2) is greater than 10.00, the total amount of As and Sb becomes relatively larger than the total amount of Bi and Pb, and therefore, the wettability deteriorates. The upper limit of (2) is preferably less than or equal to 5.33, more preferably less than or equal to 4.50, still more preferably less than or equal to 2.67, and particularly preferably less than or equal to 2.30.

The denominator of the mathematical formula (2) is "Bi + Pb", and if these elements are not included, the mathematical formula (2) is not satisfied. Accordingly, the solder alloy preferably contains at least one selected from the group consisting of Bi and Pb. In the alloy constitution in which Bi and Pb are not included, the wettability deteriorates as described above.

In the following mathematical formula (2a), the upper limit and the lower limit are appropriately selected from the above-described preferred aspects.

$$0.31 \leq (2As + Sb) / (Bi + Pb) \leq 10.00 \qquad (2a)$$

In the mathematical formula (2a), As, Sb, Bi, and Pb each represents the amount thereof (ppm by mass) in the alloy constitution.

Ag is an arbitrary element capable of forming Ag3Sn at a crystal interface to improve the reliability of the solder alloy. In addition, Ag is an element whose ionization coefficient is noble with respect to Sn, and when Ag coexists with As, Pb, and Bi, the thickening suppression effects of these elements are promoted. The amount of Ag is preferably 0% by mass to 4% by mass, more preferably 0.5% by mass to 3.5% by mass, and still more preferably 1.0% by mass to 3.0% by mass.

Cu is an arbitrary element capable of improving the joint strength of solder joints. In addition, Cu is an element whose ionization coefficient is noble with respect to Sn, and when Cu coexists with As, Pb, and Bi, the thickening suppression effects of these elements are promoted. The amount of Cu is preferably 0% by mass to 0.9% by mass, more preferably 0.1% by mass to 0.8% by mass, and still more preferably 0.2% by mass to 0.7% by mass.

The balance of the solder alloy is preferably Sn. The solder alloy may contain unavoidable impurities in addition to the above-described elements. The inclusion of unavoidable impurities does not affect the above-described effects. In a case where the amount of In is excessively high, $\Delta T$ becomes large. Therefore, the amount thereof being less than or equal to 1,000 ppm by mass does not affect the above-described effects.

<Example of Action and Effect of Flux and Solder Paste of Present Embodiment>

The flux of the first embodiment which contains an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or an acrylic resin having a number average molecular weight (Mn) and a weight average molecular weight (Mw) of greater than or equal to 500 and less than 2,000 obtained through mass spectrometry using a time-of-flight mass spectrometer (TOF-MS) has excellent temperature cycle reliability, and therefore, cracking of a cured flux residue after heating is inhibited.

In addition, the flux of the second embodiment which contains: an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or an acrylic resin having a number average molecular weight (Mn) and a weight average molecular weight (Mw) of greater than or equal to 500 and less than 2,000 obtained through mass spectrometry using a time-of-flight mass spectrometer (TOF-MS); and either a polyethylene-based resin or a polypropylene-based resin or both a polyethylene-based resin and a polypropylene-based resin also has excellent temperature cycle reliability, and therefore, cracking of a cured flux residue after heating is inhibited.

Furthermore, the acrylic resin having a molecular weight within the above-described range has excellent compatibility with an activator, and an influence of non-uniformity of the activator and the acrylic resins on the solder wettability is suppressed, whereby the solder wettability improves.

In addition, the acrylic resin having a molecular weight within the above-described range has excellent compatibility with a rosin-based resin. Accordingly, in the flux of the first embodiment which contains the acrylic resin having a molecular weight within the above-described range and a rosin-based resin, stratification due to non-uniformity of the rosin-based resin and the acrylic resins is inhibited.

Accordingly, the flux of each embodiment is used in a solder paste to improve the solder wettability. In addition, stratification of a residue can be inhibited. Furthermore, the residue can be made flexible to inhibit cracking of the residue.

Since the molecular weight of an acrylic resin having a number average molecular weight (Mn) of greater than or equal to 500 and less than 1,000 obtained through mass spectrometry using a time-of-flight mass spectrometer (TOF-MS), an acrylic resin having a weight average molecular weight (Mw) of greater than or equal to 500 and less than 1,000 obtained through mass spectrometry using a time-of-flight mass spectrometer (TOF-MS), and an acrylic resin having a number average molecular weight (Mn) and a weight average molecular weight (Mw) of greater than or equal to 500 and less than 1,000 obtained through mass spectrometry using a time-of-flight mass spectrometer (TOF-MS) is low, a softening point decreases. On the other hand, since the molecular weight of an acrylic resin having a number average molecular weight (Mn) of greater than or equal to 1,000 and less than 2,000 obtained through mass spectrometry using a time-of-flight mass spectrometer (TOF-MS), an acrylic resin having a weight average molecular weight (Mw) of greater than or equal to 1,000 and less than 2,000 obtained through mass spectrometry using a time-of-flight mass spectrometer (TOF-MS), and an acrylic resin having a number average molecular weight (Mn) and a weight average molecular weight (Mw) of greater than or equal to 1,000 and less than 2,000 obtained through mass spectrometry using a time-of-flight mass spectrometer (TOF-MS) is particularly high, the acrylic resins exhibit an effect of increasing the viscosity of a flux, thereby functioning as a thickener. However, if the flux is further thickened due to changes over time, the workability such as printability deteriorates. Therefore, as a method for suppressing thickening, it is preferable to incorporate a hindered phenolic metal deactivator and a nitrogen compound-based metal deactivator as metal deactivators within the above-described ranges specified in the present invention.

In addition, it is preferable to use a solder alloy containing As, Sb, Bi, and Pb within the above-described ranges specified in the present invention, as a solder paste. Furthermore, the solder alloy containing As, Sb, Bi, and Pb within the above-described ranges specified in the present invention preferably satisfies the mathematical formula (1) and more preferably satisfies the mathematical formulae (1a) and (lb). In addition, the solder alloy containing As, Sb, Bi, and Pb within the above-described ranges specified in the present invention preferably satisfies the mathematical formula (2) and more preferably satisfies the mathematical formula (2a).

Examples

<Measurement of Molecular Weight of Acrylic Resin>

The molecular weights of acrylic resins used in examples were measured through mass spectrometry using a time-of-flight mass spectrometer (TOF-MS).

The time-of-flight mass spectrometer (TOF-MS) is a device that measures the mass number from the arrival time of ions accelerated by an electric field at a detector utilizing the fact that the flight times of the ions in vacuum differ depending on mass-to-charge ratios. An electrospray ion (ESI) method is used to ionize components. Ionized components are accelerated by an electric field and reach a detector. The mass number is obtained from the flight times of the ions at the time, that is, the time difference until the ions reach the detector, and structure analysis of target components is performed.

The molecular weights of acrylic resins used in the examples was measured using JMS-T100LP AccuTOF (registered trademark) LC-PLUS manufactured by JEOL Ltd., to obtain a number average molecular weight (Mn) and a weight average molecular weight (Mw). The number average molecular weight (Mn) was determined by the following formula (3) and the weigh average molecular weight (Mw) was determined by the following formula (4).

$$\mathbf{Mn} = \frac{\sum_i N_i M_i}{\sum_i N_i} \cdots (3)$$

$$\mathbf{Mw} = \frac{\sum_i N_i M_i^2}{\sum_i N_i M_i} \cdots (4)$$

In the formulae (3) and (4), $M_i$ represents an m/z value of a peak of a desired component detected by a time-of-flight mass spectrometer (TOF-MS) which corresponds to the molecular weight, and $N_i$ represents a peak intensity which corresponds to the number of molecules.

The names and molecular weights of acrylic resins used in the examples and comparative examples are shown in Table 1 below.

Table 1

| Type of material | Detailed name | Mn | Mw | Mw/Mn |
|---|---|---|---|---|
| Acrylic oligomer A | Butyl acrylate oligomer | 853.86 | 900.42 | 1.05 |
| Acrylic oligomer B | Butyl acrylate oligomer | 982.40 | 1,097.53 | 1.12 |
| Acrylic oligomer C | Butyl acrylate oligomer | 1,096.51 | 1,236.01 | 1.13 |
| Acrylic oligomer D | Alkyl acrylate oligomer | 1,315.06 | 1,507.79 | 1.15 |
| Acrylic oligomer E | Butyl methacrylate oligomer | 757.93 | 844.62 | 1.11 |
| Acrylic oligomer F | Isotridecanol methacrylate oligomer | 1,028.82 | 1,138.20 | 1.11 |
| Acrylic oligomer G | Acrylic acid-butyl acrylate copolymerized oligomer | 518.79 | 625.29 | 1.21 |
| Acrylic oligomer H | Acrylic acid- butyl acrylate copolymerized oligomer | 846.23 | 925.36 | 1.09 |
| Acrylic oligomer I | Butyl acrylate-polyethylene copolymerized oligomer | 841.10 | 914.19 | 1.09 |
| Acrylic oligomer J | Butyl acrylate - polyethylene copolymerized oligomer | 921.86 | 1,047.26 | 1.14 |
| Acrylic polymer | Butyl acrylate polymer | > 4,000 | > 4,000 | - |

Acrylic oligomers A to C were all butyl acrylate oligomers. The acrylic oligomer A was a butyl acrylate oligomer having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.05, and therefore, it was confirmed that the number average molecular weight (Mn) and the weight average molecular weight (Mw) obtained through the above-described method substantially coincided with each other.

The acrylic oligomer B was a butyl acrylate oligomer having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS). The ratio (Mn/Mw) of the weight average molecular weight (Mw) to the number average molecular weight (Mn) obtained through the above-described method was 1.12, and therefore, it was confirmed that the number average molecular weight (Mn) and the weight average molecular weight (Mw) obtained through the above-described method substantially coincided with each other.

The acrylic oligomer C was a butyl acrylate oligomer having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS). The ratio (Mn/Mw) of the weight average molecular weight (Mw) to the number average molecular weight (Mn) obtained through the above-described method was 1.13, and therefore, it was confirmed that the number average molecular weight (Mn) and the weight average molecular weight (Mw) obtained through the above-described method substantially coincided with each other.

In this manner, the number average molecular weight (Mn) and the weight average molecular weight (Mw) of the butyl acrylate oligomers used in the examples which were obtained through the above-described method were within the ranges specified in the present invention.

The acrylic oligomer D was an alkyl acrylate oligomer having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.15, and therefore, it was confirmed that the number average molecular weight (Mn) and the weight average molecular weight (Mw) obtained through the above-described method substantially coincided with each other.

In this manner, the number average molecular weight (Mn) and the weight average molecular weight (Mw) of the alkyl acrylate oligomer used in the examples which were obtained through the above-described method were within the ranges specified in the present invention.

The acrylic oligomer E was a butyl methacrylate oligomer having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.11, and therefore, it was confirmed that the number average molecular weight (Mn) and the weight average molecular weight (Mw) obtained through the above-described method substantially coincided with each other.

In this manner, the number average molecular weight (Mn) and the weight average molecular weight (Mw) of the butyl methacrylate oligomer used in the examples which were obtained through the above-described method were within the ranges specified in the present invention.

The acrylic oligomer F was an isotridecanol methacrylate oligomer having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.11, and therefore, it was confirmed that the number average molecular weight (Mn) and the weight average molecular weight (Mw) obtained through the above-described method substantially coincided with each other.

In this manner, the number average molecular weight (Mn) and the weight average molecular weight (Mw) of the isotridecanol methacrylate oligomer used in the examples which were obtained through the above-described method were within the ranges specified in the present invention.

Acrylic oligomers G and H were acrylic acid-butyl acrylate copolymerized oligomers. The acrylic oligomer G was an acrylic acid-butyl acrylate copolymerized oligomer having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.21, and therefore, it was confirmed that the number average molecular weight (Mn) and the weight average molecular weight (Mw) obtained through the above-described method substantially coincided with each other.

The acrylic oligomer H was an acrylic acid-butyl acrylate copolymerized oligomer having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.09, and therefore, it was confirmed that the number average molecular weight (Mn) and the weight average molecular weight (Mw) obtained through the above-described method substantially coincided with each other.

In this manner, the number average molecular weight (Mn) and the weight average molecular weight (Mw) of the acrylic acid-butyl acrylate copolymerized oligomers used in the examples which were obtained through the above-described method were within the ranges specified in the present invention.

Acrylic oligomers I and J were butyl acrylate-polyethylene copolymerized oligomers. The acrylic oligomer I was a butyl acrylate-polyethylene copolymerized oligomer having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.09, and therefore, it was confirmed that the number average molecular weight (Mn) and the weight average molecular weight (Mw) obtained through the above-described method substantially coincided with each other.

The acrylic oligomer J was a butyl acrylate-polyethylene copolymerized oligomer having a number average molecular weight (Mn) of 921.86 obtained through mass spectrometry using a time-of-flight mass spectrometer (TOF-MS) and a weight average molecular weight (Mw) of 1,047,26 obtained through mass spectrometry using a time-of-flight mass spectrometer (TOF-MS). The ratio (Mw/Mn) of the weight average molecular weight (Mw) to the number average molecular weight (Mn) obtained through the above-described method was 1.14, and therefore, it was confirmed that the number average molecular weight (Mn) and the weight average molecular weight (Mw) obtained through the above-described method substantially coincided with each other.

In this manner, the number average molecular weight (Mn) and the weight average molecular weight (Mw) of the butyl acrylate-polyethylene copolymerized oligomers used in the examples which were obtained through the above-described method were within the ranges specified in the present invention.

The butyl acrylate polymer used in the comparative examples was an acrylic polymer having a number average molecular weight (Mn) and a weight average molecular weight (Mw) of greater than 4,000.

<Evaluation of Compatibility and Temperature Cycle Reliability of Soldering resin composition>

Soldering resin compositions of the examples and the comparative examples were prepared with the constitutions shown in Tables 2 to 7 below to verify the compatibility and the temperature cycle reliability. The constitution ratios in Tables 2 to 7 are indicated by % by weight when the total amount of the soldering resin composition was set to 100.

<Evaluation of Compatibility>

(1) Verification Method

For an evaluation of the compatibility, the soldering resin compositions of the examples and the comparative examples were prepared through heating and stirring and stored at room temperature for 48 hours. The soldering resin compositions after the storage were placed at 25°C and visually observed.

(2) Evaluation Criteria

O: Each material was compatible without separation.
x: Each material was separated into two or more components.

<Evaluation of Temperature Cycle Reliability>

(1) Verification Method

For an evaluation of the temperature cycle reliability, each flux of the examples and the comparative examples was applied on a Cu plate, and a residue was formed on the Cu plate. The presence or absence of cracks in the residue formed on the Cu plate when 500 cycles of a test of repeating processing of holding the residue for 30 minutes each at -30°C and +110°C were performed was visually evaluated.

(2) Evaluation Criteria

O: There was no crack found in the residue.
x: There was a crack found in the residue.

<Comprehensive Evaluation>

O: Both the evaluations of the compatibility and the temperature cycle reliability scored O.
×: At least one of the evaluations of the compatibility and the temperature cycle reliability scored x.

Table 2

| Material category | | Type of material | Ex. 1X | Ex. 2X | Ex. 3X | Ex. 4X | Ex. 5X | Ex. 6X | Ex. 7X |
|---|---|---|---|---|---|---|---|---|---|
| Resin | Acrylic resin | Acrylic oligomer A | 30.0 | | | | | | |
| | | Acrylic oligomer B | | 30.0 | | | | | |
| | | Acrylic oligomer C | | | 30.0 | | s | | |
| | | Acrylic oligomer D | | | | 30.0 | | | |
| | | Acrylic oligomer E | | | | | 30.0 | | |
| | | Acrylic oligomer F | | | | | | 30.0 | |
| | | Acrylic oligomer G | | | | | | | 30.0 |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin-based resin | Acrylic acid-modified, hydrogenated rosin | 30.0 | 30.0 | 30.0 | 30.0 | 30.0 | 30.0 | 30.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | 30.0 | 30.0 | 30.0 | 30.0 | 30.0 | 30.0 | 30.0 |
| | | Polymerized rosin | | | | | | | |
| | | Rosin ester | 5.0 | 5.0 | 5.0 | 5.0 | 5.0 | 5.0 | 5.0 |
| | Other resins | Polyethylene resin | | | | | | | |
| | | Acid-modified polyethylene resin | | | | | | | |
| | | Terminal OH group-having polyolefin | | | | | | | |

(continued)

| Material category | | Type of material | Ex. 1X | Ex. 2X | Ex. 3X | Ex. 4X | Ex. 5X | Ex. 6X | Ex. 7X |
|---|---|---|---|---|---|---|---|---|---|
| Activator | Organic acid | Glutaric acid | | | | | | | |
| | | Adipic acid | 1.0 | 1.0 | 1.0 | 1.0 | 1.0 | 1.0 | 1.0 |
| | | Dodecanedioic acid | | | | | | | |
| | | Hydrogenated dimer acid | | | | | | | |
| | | 12-Hydroxystearic acid | 2.0 | 2.0 | 2.0 | 2.0 | 2.0 | 2.0 | 2.0 |
| | Amine | 2-Phenylimidazole | | | | | | | |
| | | 2-Undecylimidazole | | | | | | | |
| | Organic halogen compound | 2,3-Dibromo-1,4-butanediol | 2.0 | 2.0 | 2.0 | 2.0 | 2.0 | 2.0 | 2.0 |
| | | Trans-2,3-dibromo-2-butene-1,4-diol | | | | | | | |
| | | Triallyl isocyanurate hexabromide | | | | | | | |
| | | 2,2,2-Tribromoethanol | | | | | | | |
| | Amine hydrohalide | Ethylamine HBr | | | | | | | |
| | | N, N-Diethylaniline HBr | | | | | | | |
| Additive | Organic phosphorus compound | Isodecyl acid phosphate | | | | | | | |
| | Silicone | Silicone oil | | | | | | | |
| | Solvent | Hexyl diglycol | | | | | | | |
| Evaluation | | Compatibility | O | O | O | O | O | O | O |
| | | Temperature cycle reliability | O | O | O | O | O | O | O |
| | | Comprehensive evaluation | O | O | O | O | O | O | O |
| (Ex.: Example | | | | | | | | | |

Table 3

| Material category | | Type of material | Ex. 8X | Ex. 9X | Ex. 10X | Ex. 11X | Ex. 12X | Ex. 13X |
|---|---|---|---|---|---|---|---|---|
| Resin | Acrylic resin | Acrylic oligomer A | | | | 3.0 | | |
| | | Acrylic oligomer B | | | | 3.0 | | |
| | | Acrylic oligomer C | | | | 3.0 | | |
| | | Acrylic oligomer D | | | | 3.0 | | |
| | | Acrylic oligomer E | | | | 3.0 | | |
| | | Acrylic oligomer F | | | | 3.0 | | |
| | | Acrylic oligomer G | | | | 3.0 | | |
| | | Acrylic oligomer H | 30.0 | | | 3.0 | | |
| | | Acrylic oligomer I | | 30.0 | | 3.0 | 60.0 | 50.0 |
| | | Acrylic oligomer J | | | 30.0 | 3.0 | | |
| | | Acrylic Polymer A | | | | | | |
| | Rosin-based resin | Acrylic acid-modified, hydrogenated rosin | 30.0 | 30.0 | 30.0 | 30.0 | 30.0 | 30.0 |
| | | Maleic acid-modified, hydrogenated rosin | | | | | | |
| | | Phenol-modified rosin | | | | | | |
| | | Disproportionated rosin | | | | | | |
| | | Hydrogenated rosin | 30.0 | 30.0 | 30.0 | 30.0 | | 10.0 |
| | | Polymerized rosin | | | | | | |
| | | Rosin ester | 5.0 | 5.0 | 5.0 | 5.0 | 5.0 | 5.0 |
| | Other resins | Polyethylene resin | | | | | | |
| | | Acid-modified polyethylene resin | | | | | | |
| | | Terminal OH group-having polyolefin | | | | | | |

(continued)

| Material category | | Type of material | Ex. 8X | Ex. 9X | Ex. 10X | Ex. 11X | Ex. 12X | Ex. 13X |
|---|---|---|---|---|---|---|---|---|
| Activator | Organic acid | Glutaric acid | | | | | | |
| | | Adipic acid | 1.0 | 1.0 | 1.0 | 1.0 | | |
| | | Dodecanedioic acid | | | | | | |
| | | Hydrogenated dimer acid | | | | | | |
| | | 12-Hydroxystearic acid | 2.0 | 2.0 | 2.0 | 2.0 | 3.0 | 3.0 |
| | Amine | 2-Phenylimidazole | | | | | | |
| | | 2-Undecylimidazole | | | | | | |
| | Organic halogen compound | 2,3-Dibromo-1,4-butanediol | 2.0 | 2.0 | 2.0 | 2.0 | | |
| | | Trans-2,3-dibromo-2-butene-1,4-diol | | | | | | |
| | | Triallyl isocyanurate hexabromide | | | | | 2.0 | 2.0 |
| | | 2,2,2-Tribromoethanol | | | | | | |
| | Amine hydrohalide | Ethylamine HBr | | | | | | |
| | | N, N-Diethylaniline HBr | | | | | | |
| Additive | Organic phosphorus compound | Isodecyl acid phosphate | | | | | | |
| | Silicone | Silicone oil | | | | | | |
| | Solvent | Hexyl diglycol | | | | | | |
| Evaluation | Compatibility | | O | O | O | O | O | O |
| | Temperature | cycle reliability | O | O | O | O | O | O |
| | Comprehensive | evaluation | O | O | O | O | O | O |
| | | | | | | | (Ex.: | Example) |

Table 4

| Material category | | Type of material | Ex. 14X | Ex. 15X | Ex. 16X | Ex. 17X | Ex. 18X | Ex. 19X |
|---|---|---|---|---|---|---|---|---|
| Resin | Acrylic resin | Acrylic oligomer A | | | | | | |
| | | Acrylic oligomer B | | | | | | |
| | | Acrylic oligomer C | | | | | | |
| | | Acrylic oligomer D | | | | | | |
| | | Acrylic oligomer E | | | | | | |
| | | Acrylic oligomer P | | | | | | |
| | | Acrylic oligomer G | | | | 30.0 | | |
| | | Acrylic oligomer H | | | | | | |
| | | Acrylic oligomer I | 45.0 | 20.0 | 30.0 | | 30.0 | 30.0 |
| | | Acrylic oligomer J | | | | | | |
| | | Acrylic Polymer A | | | | | | |
| | Rosin-based resin | Acrylic acid-modified, hydrogenated rosin | 30.0 | 30.0 | 10.0 | 30.0 | 30.0 | 30.0 |
| | | Maleic acid-modified, hydrogenated rosin | | | 10.0 | | | |
| | | Phenol-modified rosin | | | 10.0 | | | |
| | | Disproportionated rosin | | | 10.0 | | | |
| | | Hydrogenated rosin | 15.0 | 45.0 | 10.0 | 35.0 | 35.0 | 20.0 |
| | | Polymerized rosin | | | 10.0 | | | |
| | | Rosin ester | 5.0 | 0.0 | 5.0 | 5.0 | | 5.0 |
| | Other resins | Polyethylene resin | | | | | | 10.0 |
| | | Acid-modified polyethylene resin | | | | | | |
| | | Terminal OH group-having polyolefin | | | | | | |

(continued)

| Material category | | Type of material | Ex. 14X | Ex. 15X | Ex. 16X | Ex. 17X | Ex. 18X | Ex. 19X |
|---|---|---|---|---|---|---|---|---|
| Activator | Organic acid | Glutaric acid | | | | | | |
| | | Adipic acid | | | 1.0 | | 1.0 | 1.0 |
| | | Dodecanedioic acid | | | | | | |
| | | Hydrogenated dimer acid | | | | | | |
| | | 12-Hydroxystearic acid | 3.0 | 3.0 | 2.0 | | 2.0 | 2.0 |
| | Amine | 2-Phenylimidazole | | | | | | |
| | | 2-Undecylimidazole | | | | | | |
| | Organic halogen compound | 2,3-Dibromo-1,4-butanediol | | | 2.0 | | 2.0 | 2.0 |
| | | Trans-2,3-dibromo-2-butene-1,4-diol | | | | | | |
| | | Triallyl isocyanurate hexabromide | 2.0 | 2.0 | | | | |
| | | 2,2,2-Tribromoethanol | | | | | | |
| | Amine hydrohalide | Ethylamine HBr | | | | | | |
| | | N, N-Diethylaniline HBr | | | | | | |
| Additive | Organic phosphorus compound | Isodecyl acid phosphate | | | | | | |
| | Silicone | Silicone oil | | | | | | |
| | Solvent | Hexyl diglycol | | | | | | |
| Evaluation | | Compatibility | O | O | O | O | O | O |
| | | Temperature cycle reliability | O | O | O | O | O | O |
| | | Comprehensive evaluation | O | O | O | O | O | O |
| | | | | | | | | (Ex.: Example |

Table 5

| Material category | | Type of material | Ex. 20X | Ex. 21X | Ex. 22X | Ex. 23X | Ex. 24X | Ex. 25X | Ex. 26X |
|---|---|---|---|---|---|---|---|---|---|
| Resin | Acrylic resin | Acrylic oligomer A | | | | 15.0 | 15.0 | 15.0 | 7.0 |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | | | | | | | |
| | | Acrylic oligomer G | | | | | | | |
| | | Acrylic oligomer H | | | | | | | |
| | | Acrylic oligomer I | 30.0 | 30.0 | 20.0 | 15.0 | 15.0 | 15.0 | 7.0 |
| | | Acrylic oligomer J | | | | | | | |
| | | Acrylic Polymer A | | | | | | | |
| | Rosin-based resin | Acrylic acid-modified, hydrogenated rosin | 30.0 | 30.0 | 30.0 | 30.0 | 30.0 | 30.0 | 30.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | 20.0 | 20.0 | 5.0 | 30.0 | 30.0 | 30.0 | 26.0 |
| | | Polymerized rosin | | | | | | | |
| | | Rosin ester | 5.0 | 5.0 | 5.0 | 5.0 | 5.0 | 5.0 | 14.0 |
| | Other resins | Polyethylene resin | | | 10.0 | | | | |
| | | Acid-modified polyethylene resin | 10.0 | | 15.0 | | | | |
| | | Terminal OH group-having polyolefin | | 10.0 | 10.0 | | | | |

(continued)

| Material category | | | Type of material | Ex. 20X | Ex. 21X | Ex. 22X | Ex. 23X | Ex. 24X | Ex. 25X | Ex. 26X |
|---|---|---|---|---|---|---|---|---|---|---|
| Activator | Organic acid | | Glutaric acid | | | | 1.0 | | | 1.0 |
| | | | Adipic acid | 1.0 | 1.0 | 1.0 | | | 2.0 | 1.0 |
| | | | Dodecanedioic acid | | | | | 1.0 | | 1.0 |
| | | | Hydrogenated dimer acid | | | | | | | 1.0 |
| | | | 12-Hydroxystearic acid | 2.0 | 2.0 | 2.0 | 2.0 | 2.0 | 1.0 | 7.0 |
| | Amine | | 2-Phenylimidazole | | | | | | | |
| | | | 2-Undecylimidazole | | | | | | | |
| | Organic halogen compound | | 2,3-Dibromo-1,4-butanediol | 2.0 | 2.0 | 2.0 | 2.0 | 2.0 | 2.0 | |
| | | | Trans-2,3-dibromo-2-butene-1,4-diol | | | | | | | |
| | | | Triallyl isocyanurate hexabromide | | | | | | | 5.0 |
| | | | 2,2,2-Tribromoethanol | | | | | | | |
| | Amine hydrohalide | | Ethylamine HBr | | | | | | | |
| | | | N, N-Diethylaniline HBr | | | | | | | |
| Additive | Organic phosphorus compound | | Isodecyl acid phosphate | | | | | | | |
| | Silicone | | Silicone oil | | | | | | | |
| | Solvent | | Hexyl diglycol | | | | | | | |
| Evaluation | Compatibility | | | O | O | O | O | O | O | O |
| | Temperature cycle reliability | | | O | O | O | O | O | O | O |
| | Comprehensive evaluation | | | O | O | O | O | O | O | O |
| (Ex.: Example) | | | | | | | | | | |

Table 6

| Material category | | Type of material | Ex. 27X | Ex. 28X | Ex. 29X | Ex. 30X | Ex. 31X | Ex. 32X |
|---|---|---|---|---|---|---|---|---|
| Resin | Acrylic resin | Acrylic oligomer A | 15.0 | 5.0 | 15.0 | 15.0 | 15.0 | 15.0 |
| | | Acrylic oligomer B | | | | | | |
| | | Acrylic oligomer C | | | | | | |
| | | Acrylic oligomer D | | | | | | |
| | | Acrylic oligomer E | | | | | | |
| | | Acrylic oligomer F | | | | | | |
| | | Acrylic oligomer G | | | | | | |
| | | Acrylic oligomer H | | | | | | |
| | | Acrylic oligomer I | 5.0 | 15.0 | 15.0 | 15.0 | 15.0 | 15.0 |
| | | Acrylic oligomer J | | | | | | |
| | | Acrylic Polymer A | | | | | | |
| | Rosin-based resin | Acrylic acid-modified, hydrogenated rosin | 30.0 | 30.0 | 30.0 | 30.0 | 30.0 | 30.0 |
| | | Maleic acid-modified, hydrogenated rosin | | | | | | |
| | | Phenol-modified rosin | | | | | | |
| | | Disproportionated rosin | | | | | | |
| | | Hydrogenated rosin | 30.0 | 30.0 | 20.0 | 22.0 | 30.0 | 31.0 |
| | | Polymerized rosin | | | | | | |
| | | Rosin ester | 5.0 | 5.0 | 5.0 | 5.0 | 5.0 | 5.0 |
| | Other resins | Polyethylene resin | 9.00 | | | | | |
| | | Acid-modified polyethylene resin | | | | | | |
| | | Terminal OH group-having polyolefin | | | | | | |

(continued)

| Material category | | Type of material | Ex. 27X | Ex. 28X | Ex. 29X | Ex. 30X | Ex. 31X | Ex. 32X |
|---|---|---|---|---|---|---|---|---|
| Activator | Organic acid | Glutaric acid | | | | | | |
| | | Adipic acid | 1.0 | 1.0 | 1.0 | 1.0 | 1.0 | 1.0 |
| | | Dodecanedioic acid | | | | | | |
| | | Hydrogenated dimer acid | | | | | | |
| | | 12-Hydroxystearic acid | 2.0 | 2.0 | 2.0 | 2.0 | 2.0 | 2.0 |
| | Amine | 2-Phenylimidazole | 1.0 | | | | | |
| | | 2-Undecylimidazole | | 10.0 | | | | |
| | Organic halogen compound | 2,3-Dibromo-1,4-butanediol | 2.0 | 2.0 | | | | |
| | | Trans-2,3-dibromo-2-butene-1,4-diol | | | 2.0 | | | |
| | | Triallyl isocyanurate hexabromide | | | | 10.0 | | |
| | | 2,2,2-Tribromoethanol | | | | | 2.0 | |
| | Amine hydrohalide | Ethylamine HBr | | | | | | 1.0 |
| | | N, N-Diethylaniline HBr | | | | | | |
| Additive | Organic phosphorus compound | Isodecyl acid phosphate | | | | | | |
| | Silicone | Silicone oil | | | | | | |
| | Solvent | Hexyl diglycol | | | | | | |
| Evaluation | | Compatibility | O | O | O | O | O | O |
| | | Temperature cycle reliability | O | O | O | O | O | O |
| | | Comprehensive evaluation | O | O | O | O | O | O |
| (Ex.: Example) | | | | | | | | |

Table 7

| Material category | | Type of material | Ex. 33X | Ex. 34X | Ex. 35X | Ex. 36X | C. Ex. 1X | C. Ex. 2X |
|---|---|---|---|---|---|---|---|---|
| Resin | Acrylic resin | Acrylic oligomer A | 15.0 | 30.0 | 30.0 | 15.0 | | |
| | | Acrylic oligomer B | | | | | | |
| | | Acrylic oligomer C | | | | | | |
| | | Acrylic oligomer D | | | | | | |
| | | Acrylic oligomer E | | | | | | |
| | | Acrylic oligomer F | | | | | | |
| | | Acrylic oligomer G | | | | | | |
| | | Acrylic oligomer H | | | | | | |
| | | Acrylic oligomer I | 15.0 | | | 10.0 | | |
| | | Acrylic oligomer J | | | | | | |
| | | Acrylic Polymer A | | | | | 30.0 | |
| | Rosin-based resin | Acrylic acid-modified, hydrogenated rosin | 30.0 | 30.0 | 30.0 | 30.0 | 30.0 | 30.0 |
| | | Maleic acid-modified, hydrogenated rosin | | | | | | |
| | | Phenol-modified rosin | | | | | | |
| | | Disproportionated rosin | | | | | | |
| | | Hydrogenated rosin | 30.0 | 20.0 | 25.0 | 30.0 | 30.0 | 60.0 |
| | | Polymerized rosin | | | | | | |
| | | Rosin ester | 5.0 | 5.0 | 5.0 | 5.0 | 5.0 | 5.0 |
| | Other resins | Polyethylene resin | | | | 5.0 | | |
| | | Acid-modified polyethylene resin | | | | | | |
| | | Terminal OH group-having polyolefin | | | | | | |

(continued)

| Material category | | Type of material | Ex. 33X | Ex. 34X | Ex. 35X | Ex. 36X | C. Ex. 1X | C. Ex. 2X |
|---|---|---|---|---|---|---|---|---|
| Activator | Organic acid | Glutaric acid | | | | | | |
| | | Adipic acid | 1.0 | 1.0 | 1.0 | 1.0 | 1.0 | 1.0 |
| | | Dodecanedioic acid | | | | | | |
| | | Hydrogenated dimer acid | | | | | | |
| | | 12-Hydroxystearic acid | 2.0 | 2.0 | 2.0 | | 2.0 | 2.0 |
| | Amine | 2-Phenylimidazole | | | | 1.0 | | |
| | | 2-Undecylimidazole | | | | | | |
| | Organic halogen compound | 2,3-Dibromo-1,4-butanediol | | 2.0 | 2.0 | 2.0 | 2.0 | 2.0 |
| | | Trans-2,3-dibromo-2-butene-1,4-diol | | | | | | |
| | | Triallyl isocyanurate hexabromide | | | | | | |
| | | 2,2,2-Tribromoethanol | | | | | | |
| | Amine hydrohalide | Ethylamine HBr | | | | 0.5 | | |
| | | N, N-Diethylaniline HBr | 2.5 | | | 0.5 | | |
| Additive | Organic phosphorus compound | Isodecyl acid phosphate | | 10.0 | | | | |
| | Silicone | Silicone oil | | | 5.0 | | | |
| | Solvent | Hexyl diglycol | | | | | | |
| Evaluation | Compatibility | | O | O | O | O | × | - |
| | Temperature cycle reliability | | O | O | O | O | - | × |
| | Comprehensive evaluation | | O | O | O | O | × | × |
| (Ex.: Example. C. Ex.: Comparative Example) | | | | | | | | |

In Examples 1X to 10X, the type of acrylic resin was changed. In Example 1X, 30.0% by weight of the acrylic oligomer A shown in Table 1 was contained as an acrylic resin within the range specified in the present invention. The acrylic oligomer A was a butyl acrylate oligomer having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), which were within the range specified in the present invention.

In Example 1X, 30.0% by weight of acrylic acid-modified, hydrogenated rosin, 30.0% by weight of hydrogenated rosin, and 5.0% by weight of a rosin ester were contained as rosin-based resins. The total amount of rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins is also within the range specified in the present invention.

In Example 1X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 1X, 2.0% by weight of 2,3-dibromo-1,4-butanediol was contained as an organic halogen compound within the range specified in the present invention.

In Example 1X, each material was compatible without separation, whereby a sufficient effect on the compatibility was obtained. In addition, there was no crack in the residue found, and therefore, a sufficient effect on the temperature cycle reliability was obtained.

In Example 2X, 30.0% by weight of the acrylic oligomer B shown in Table 1 was contained as an acrylic resin within the range specified in the present invention. The acrylic oligomer B was a butyl acrylate oligomer having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS), the number average molecular weight (Mn) and the weight average molecular weight (Mw) being within the ranges specified in the present invention.

In Example 2X, 30.0% by weight of acrylic acid-modified, hydrogenated rosin, 30.0% by weight of hydrogenated rosin, and 5.0% by weight of a rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 2X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 2X, 2.0% by weight of 2,3-dibromo-1,4-butanediol was contained as an organic halogen compound within the range specified in the present invention.

In Example 2X, each material was compatible without separation, whereby a sufficient effect on the compatibility was obtained. In addition, there was no crack in the residue found, and therefore, a sufficient effect on the temperature cycle reliability was obtained.

In Example 3X, 30.0% by weight of the acrylic oligomer C shown in Table 1 was contained as an acrylic resin within the range specified in the present invention. The acrylic oligomer C was a butyl acrylate oligomer having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS), the number average molecular weight (Mn) and the weight average molecular weight (Mw) being within the ranges specified in the present invention.

In Example 3X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 3X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 3X, 2.0% by weight of 2,3-dibromo-1,4-butanediol was contained as an organic halogen compound within the range specified in the present invention.

In Example 3X, each material was compatible without separation, whereby a sufficient effect on the compatibility was obtained. In addition, there was no crack in the residue found, and therefore, a sufficient effect on the temperature cycle reliability was obtained.

In Example 4X, 30.0% by weight of the acrylic oligomer D shown in Table 1 was contained as an acrylic resin within the range specified in the present invention. The acrylic oligomer D was an alkyl acrylate oligomer having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS), the number average molecular weight (Mn) and the weight average molecular weight (Mw) being within the ranges specified in the present invention.

In Example 4X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 4X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 4X, 2.0% by weight of 2,3-dibroirio-1,4-butanediol was contained as an organic halogen compound within the range specified in the present invention.

In Example 4X, each material was compatible without separation, whereby a sufficient effect on the compatibility was obtained. In addition, there was no crack in the residue found, and therefore, a sufficient effect on the temperature cycle reliability was obtained.

In Example 5X, 30.0% by weight of the acrylic oligomer E shown in Table 1 was contained as an acrylic resin within the range specified in the present invention. The acrylic oligomer E was a butyl methacrylate oligomer having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS), the number average molecular weight (Mn) and the weight average molecular weight (Mw) being within the ranges specified in the present invention.

In Example 5X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 5X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 5X, 2.0% by weight of 2,3-dibroino-1,4-butanediol was contained as an organic halogen compound within the range specified in the present invention.

In Example 5X, each material was compatible without separation, whereby a sufficient effect on the compatibility was obtained. In addition, there was no crack in the residue found, and therefore, a sufficient effect on the temperature cycle reliability was obtained.

In Example 6X, 30.0% by weight of the acrylic oligomer F shown in Table 1 was contained as an acrylic resin within the range specified in the present invention. The acrylic oligomer F was an isotridecanol methacrylate oligomer having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention.

In Example 6X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 6X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 6X, 2.0% by weight of 2,3-dibroirio-1,4-butanediol was contained as an organic halogen compound within the range specified in the present invention.

In Example 6X, each material was compatible without separation, whereby a sufficient effect on the compatibility was obtained. In addition, there was no crack in the residue found, and therefore, a sufficient effect on the temperature cycle reliability was obtained.

In Example 7X, 30.0% by weight of the acrylic oligomer G shown in Table 1 was contained as an acrylic resin within the range specified in the present invention. The acrylic oligomer G was an acrylic acid-butyl acrylate copolymerized oligomer having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention.

In Example 7X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 7X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 7X, 2.0% by weight of 2,3-dibromo-1,4-butanediol was contained as an organic halogen compound within the range specified in the present invention.

In Example 7X, each material was compatible without separation, whereby a sufficient effect on the compatibility was obtained. In addition, there was no crack in the residue found, and therefore, a sufficient effect on the temperature cycle reliability was obtained.

In Example 8X, 30.0% by weight of the acrylic oligomer H shown in Table 1 was contained as an acrylic resin within the range specified in the present invention. The acrylic oligomer H was an acrylic acid-butyl acrylate copolymerized oligomer having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS), the number average molecular weight (Mn) and the weight average molecular weight (Mw) being within the ranges specified in the present invention.

In Example 8X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 8X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 8X, 2.0% by weight of 2,3-dibromo-1,4-butanediol was contained as an organic halogen compound within the range specified in the present invention.

In Example 8X, each material was compatible without separation, whereby a sufficient effect on the compatibility was obtained. In addition, there was no crack in the residue found, and therefore, a sufficient effect on the temperature cycle reliability was obtained.

In Example 9X, 30.0% by weight of the acrylic oligomer I shown in Table 1 was contained as an acrylic resin within the range specified in the present invention. The acrylic oligomer I was a butyl acrylate-polyethylene copolymerized oligomer having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention.

In Example 9X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 9X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 9X, 2.0% by weight of 2,3-dibromo-1,4-butanediol was contained as an organic halogen compound within the range specified in the present invention.

In Example 9X, each material was compatible without separation, whereby a sufficient effect on the compatibility was obtained. In addition, there was no crack in the residue found, and therefore, a sufficient effect on the temperature cycle reliability was obtained.

In Example 10X, 30.0% by weight of the acrylic oligomer J shown in Table 1 was contained as an acrylic resin within the range specified in the present invention. The acrylic oligomer J was a butyl acrylate-polyethylene copolymerized oligomer having a number average molecular weight (Mn) of 921.86 obtained through mass spectrometry using a time-of-flight mass spectrometer (TOF-MS) and a weight average molecular weight (Mw) of 1,047.26 obtained through mass spectrometry using a time-of-flight mass spectrometer (TOF-MS), the number average molecular weight (Mn) and the weight average molecular weight (Mw) being within the ranges specified in the present invention.

In Example 10X, 30.0% by weight of acrylic acid-modified, hydrogenated rosin, 30.0% by weight of hydrogenated rosin, and 5.0% by weight of rosin ester were contained as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 10X, 1.0% by weight of adipic acid and 2.0% by weight of 12-hydroxystearic acid were contained as organic acids within the ranges specified in the present invention. The total amount of adipic acid and 12-hydroxystearic acid was also within the range specified in the present invention. In Example 10X, 2.0% by weight of 2,3-dibromo-1,4-butanediol was contained as an organic halogen compound within the range specified in the present invention.

In Example 10X, each material was compatible without separation, whereby a sufficient effect on the compatibility was obtained. In addition, there was no crack in the residue found, and therefore, a sufficient effect on the temperature cycle reliability was obtained.

Example 11X is a case where plural kinds of acrylic resins were contained. In Example 11, 3.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained.

In addition, 3.0% by weight of a butyl acrylate oligomer (acrylic oligomer B), having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of a butyl acrylate oligomer (acrylic oligomer C) having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of an alkyl acrylate oligomer (acrylic oligomer D) having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of a butyl methacrylate oligomer (acrylic oligomer E) having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of an isotridecanol methacrylate oligomer (acrylic oligomer F) having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of an acrylic acid-butyl acrylate copolymerized oligomer (acrylic oligomer H) having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

In addition, 3.0% by weight of a butyl acrylate-polyethylene copolymerized oligomer (acrylic oligomer J) having a number average molecular weight (Mn) of 921.86 obtained through mass spectrometry using a time-of-flight mass spectrometer (TOF-MS) and a weight average molecular weight (Mw) of 1,047.26 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 11X.

The total amount of the acrylic resins was within the range specified in the present invention.

In addition, 30.0% by weight of acrylic acid-modified, hydrogenated rosin, 30.0% by weight of hydrogenated rosin, and 5.0% by weight of rosin ester were contained as rosin-based resins in Example 11X. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 1.0% by weight of adipic acid and 2.0% by weight of 12-hydroxystearic acid were contained in Example 11X as organic acids within the ranges specified in the present invention. The total amount of adipic acid and 12-hydroxystearic acid was also within the range specified in the present invention. In addition, 2.0% by weight of 2,3-dibromo-1,4-butanediol was contained as an organic halogen compound within the range specified in the present invention in Example 11X.

In Example 11X, each material was compatible without separation, whereby a sufficient effect on the compatibility was obtained. In addition, there was no crack in the residue found, and therefore, a sufficient effect on the temperature cycle reliability was obtained.

60.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 12X.

In addition, 30.0% by weight of acrylic acid-modified, hydrogenated rosin and 5.0% by weight of a rosin ester were contained as rosin-based resins in Example 12X. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 3.0% by weight of 12-hydroxystearic acid was contained in Example 12X as an organic acid within the range specified in the present invention. In addition, 2.0% by weight of triallyl isocyanurate hexabromide was contained as an organic halogen compound within the range specified in the present invention in Example 12X.

In Example 12X, each material was compatible without separation, whereby a sufficient effect on the compatibility was obtained. In addition, there was no crack in the residue found, and therefore, a sufficient effect on the temperature cycle reliability was obtained.

50.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 13X.

In addition, 30.0% by weight of acrylic acid-modified, hydrogenated rosin, 10.0% by weight of hydrogenated rosin, and 5.0% by weight of a rosin ester were contained as rosin-based resins in Example 13X. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 3.0% by weight of 12-hydroxystearic acid was contained in Example 13X as an organic acid within the range specified in the present invention. In addition, 2.0% by weight of triallyl isocyanurate hexabromide was contained in Example 13X as an organic halogen compound within the range specified in the present invention.

In Example 13X, each material was compatible without separation, whereby a sufficient effect on the compatibility was obtained. In addition, there was no crack in the residue found, and therefore, a sufficient effect on the temperature cycle reliability was obtained.

45.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 14X.

In addition, 30.0% by weight of acrylic acid-modified, hydrogenated rosin, 15.0% by weight of hydrogenated rosin, and 5.0% by weight of a rosin ester were contained in Example 14X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 3.0% by weight of 12-hydroxystearic acid was contained in Example 14X as an organic acid within the range specified in the present invention. In addition, 2.0% by weight of triallyl isocyanurate hexabromide was contained in Example 14X as an organic halogen compound within the range specified in the present invention.

In Example 14X, each material was compatible without separation, whereby a sufficient effect on the compatibility was obtained. In addition, there was no crack in the residue found, and therefore, a sufficient effect on the temperature cycle reliability was obtained.

20.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 15X.

In addition, 30.0% by weight of acrylic acid-modified, hydrogenated rosin and 45.0% by weight of hydrogenated rosin were contained in Example 15X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 3.0% by weight of 12-hydroxystearic acid was contained in Example 15X as an organic acid within the range specified in the present invention. In addition, 2.0% by weight of triallyl isocyanurate hexabromide was contained in Example 15X as an organic halogen compound within the range specified in the present invention.

In Example 15X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate-polyethylene copolymerized oligomer (acrylic oligomer 1) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 16X.

In addition, 10.0% by weight of acrylic acid-modified, hydrogenated rosin, 10.0% by weight of maleic acid-modified, hydrogenated rosin, 10.0% by weight of phenol-modified rosin, 10.0% by weight of disproportionated rosin, 10.0% by weight of hydrogenated rosin, 10.0% by weight of polymerized rosin, and 5.0% by weight of rosin ester were contained as rosin-based resins in Example 16X. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 1.0% by weight of adipic acid and 2.0% by weight of 12-hydroxystearic acid were contained in Example 16X as organic acids within the ranges specified in the present invention. The total amount of adipic acid and 12-hydroxystearic acid was also within the range specified in the present invention. In addition, 2.0% by weight of 2,3-dibromo-1,4-butanediol was contained in Example 16X as an organic halogen compound within the range specified in the present invention.

In Example 16X, each material was compatible without separation, whereby a sufficient effect on the compatibility was obtained. In addition, there was no crack in the residue found, and therefore, a sufficient effect on the temperature cycle reliability was obtained.

30.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 17X.

In addition, 30.0% by weight of acrylic acid-modified, hydrogenated rosin, 35.0% by weight of hydrogenated rosin, and 5.0% by weight of rosin ester were contained in Example 17X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In Example 17X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 18X.

In addition, 30.0% by weight of acrylic acid-modified, hydrogenated rosin and 35.0% by weight of hydrogenated rosin were contained in Example 18X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 1.0% by weight of adipic acid and 2.0% by weight of 12-hydroxystearic acid were contained in Example 18X as organic acids within the ranges specified in the present invention. The total amount of adipic acid and 12-hydroxystearic acid was also within the range specified in the present invention. In addition, 2.0% by weight of 2,3-dibromo-1,4-butanediol was contained in Example 18X as an organic halogen compound within the range specified in the present invention.

In Example 18X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 19X.

In addition, 30.0% by weight of acrylic acid-modified, hydrogenated rosin, 20.0% by weight of hydrogenated rosin, and 5.0% by weight of rosin ester were contained in Example 19X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention. Furthermore, 10.0% by weight of a polyethylene resin was contained in Example 19X as another resin within the range specified in the present invention.

In addition, 1.0% by weight of adipic acid and 2.0% by weight of 12-hydroxystearic acid were contained in Example 19X as organic acids within the ranges specified in the present invention. The total amount of adipic acid and 12-hydroxystearic acid was also within the range specified in the present invention. Furthermore, 2.0% by weight of 2,3-dibromo-1,4-butanediol was contained in Example 19X as an organic halogen compound within the range specified in the present invention.

In Example 19X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 20X.

In addition, 30.0% by weight of acrylic acid-modified, hydrogenated rosin, 20.0% by weight of hydrogenated rosin, and 5.0% by weight of rosin ester were contained in Example 20X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention. Furthermore, 10.0% by weight of an acid-modified polyethylene resin was contained in Example 20X as another resin within the range specified in the present invention.

In addition, 1.0% by weight of adipic acid and 2.0% by weight of 12-hydroxystearic acid were contained in Example 20X as organic acids within the ranges specified in the present invention. The total amount of adipic acid and 12-hydroxystearic acid was also within the range specified in the present invention. Furthermore, 2.0% by weight of 2,3-dibromo-1,4-butanediol was contained in Example 20X as an organic halogen compound within the range specified in the present invention.

In Example 20X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate-polyethylene copolymerized oligomer (acrylic oligomer 1) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 21X.

In addition, 30.0% by weight of acrylic acid-modified, hydrogenated rosin, 20.0% by weight of hydrogenated rosin, and 5.0% by weight of rosin ester were contained in Example 21X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention. Furthermore, 10.0% by weight of terminal OH group-having polyolefin was contained in Example 21X as another resin within the range specified in the present invention.

In addition, 1.0% by weight of adipic acid and 2.0% by weight of 12-hydroxystearic acid were contained in Example 21X as organic acids within the ranges specified in the present invention. The total amount of adipic acid and 12-hydroxystearic acid was also within the range specified in the present invention. Furthermore, 2.0% by weight of 2,3-dibromo-1,4-butanediol was contained in Example 21X as an organic halogen compound within the range specified in the present invention.

In Example 21X, each material was compatible without separation, whereby a sufficient effect on the compatibility was obtained. In addition, there was no crack in the residue found, and therefore, a sufficient effect on the temperature cycle reliability was obtained.

20.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 22X.

In addition, 30.0% by weight of acrylic acid-modified, hydrogenated rosin, 5.0% by weight of hydrogenated rosin, and 5.0% by weight of rosin ester were contained in Example 22X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention. Furthermore, 10.0% by weight of polyethylene resin, 15.0% by weight of acid-modified polyethylene resin, and 10.0% by weight of terminal OH group-having polyolefin were contained in Example 22X as other resins within the ranges specified in the present invention. The total amount of the other resins was also within the range specified in the present invention.

In addition, 1.0% by weight of adipic acid and 2.0% by weight of 12-hydroxystearic acid were contained in Example 22X as organic acids within the ranges specified in the present invention. The total amount of adipic acid and 12-hydroxystearic acid was also within the range specified in the present invention. Furthermore, 2.0% by weight of 2,3-dibromo-1,4-butanediol was contained in Example 22X as an organic halogen compound within the range specified in the present invention.

In Example 22X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 23X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 23X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 23X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of glutaric acid and 2.0% by weight of 12-hydroxystearic acid were contained in Example 23X as organic acids within the ranges specified in the present invention. The total amount of glutaric acid and 12-hydroxystearic acid was also within the range specified in the present invention. Furthermore, 2.0% by weight of 2,3-dibromo-1,4-butanediol was contained in Example 23X as an organic halogen compound within the range specified in the present invention.

In Example 23X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 24X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 24X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 24X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of dodecanedioic acid and 2.0% by weight of 12-hydroxystearic acid were contained in Example 24X as organic acids within the range specified in the present invention. The total amount of dodecanedioic acid and 12-hydroxystearic acid was also within the range specified in the present invention. Furthermore, 2.0% by weight of 2,3-dibromo-1,4-butanediol was contained in Example 24X as an organic halogen compound within the range specified in the present invention.

In Example 24X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 25X.

In addition, 15.0% by weight of a butyl acrylate-polyethylene copolymerized oligomer (acrylic oligomer 1) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 25X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 25X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 2.0% by weight of adipic acid and 1.0% by weight of 12-hydroxystearic acid were contained in Example 25X as organic acids within the ranges specified in the present invention. The total amount of adipic acid and 12-hydroxystearic acid was also within the range specified in the present invention. Furthermore, 2.0% by weight of 2,3-dibromo-1,4-butanediol was contained in Example 25X as an organic halogen compound within the range specified in the present invention.

In Example 25X, each material was compatible without separation, whereby a sufficient effect on the compatibility was obtained. In addition, there was no crack in the residue found, and therefore, a sufficient effect on the temperature cycle reliability was obtained.

7.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 26X.

In addition, 7.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 26X. The total amount of the acrylic resins was also within the range specified in the present invention.

Furthermore, 30.0% by weight of acrylic acid-modified, hydrogenated rosin, 26.0% by weight of hydrogenated rosin, and 14.0% by weight of rosin ester were contained in Example 26X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of glutaric acid, 1.0% by weight of adipic acid, 1.0% by weight of dodecanedioic acid, 1.0% by weight of hydrogenated dimer acid, and 7.0% by weight of 12-hydroxystearic acid were contained in Example 26X as organic acids within the ranges specified in the present invention. The total amount of the organic acids was also within the range specified in the present invention. Furthermore, 5.0% by weight of triallyl isocyanurate hexabromide was contained in Example 26X as an organic halogen compound within the range specified in the present invention.

In Example 26X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 27X.

In addition, 5.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 27X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 27X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention. In addition, 9.0% by weight of a polyethylene resin was contained in Example 27X as another resin within the range specified in the present invention.

Furthermore, 1.0% by weight of adipic acid and 2.0% by weight of 12-hydroxystearic acid were contained in Example 27X as organic acids within the ranges specified in the present invention. The total amount of adipic acid and 12-hydroxystearic acid was also within the range specified in the present invention. In addition, 1.0% by weight of 2-phenylimidazole was contained in Example 27X as an amine within the range specified in the present invention. Furthermore, 2.0% by weight of 2,3-dibromo-1,4-butanediol was contained in Example 27X as an organic halogen compound within the range specified in the present invention.

In Example 27X, each material was compatible without separation, whereby a sufficient effect on the compatibility was obtained. In addition, there was no crack in the residue found, and therefore, a sufficient effect on the temperature cycle reliability was obtained.

5.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 28X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 28X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 28X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of adipic acid and 2.0% by weight of 12-hydroxystearic acid were contained in Example 28X as organic acids within the ranges specified in the present invention. The total amount of adipic acid and 12-hydroxystearic acid was also within the range specified in the present invention. Furthermore, 10.0% by weight of 2-undecylimidazole was contained in Example 28X as an amine within the range specified in the present invention. In addition, 2.0% by weight of 2,3-dibromo-1,4-butanediol was contained in Example 28X as an organic halogen compound within the range specified in the present invention.

In Example 28X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 29X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 29X. The total amount of the acrylic resins was also within the range specified in the present invention.

Furthermore, 30.0% by weight of acrylic acid-modified, hydrogenated rosin, 20.0% by weight of hydrogenated rosin, and 5.0% by weight of rosin ester were contained in Example 29X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of adipic acid and 2.0% by weight of 12-hydroxystearic acid were contained in Example 29X as organic acids within the ranges specified in the present invention. The total amount of adipic acid and 12-hydroxystearic acid was also within the range specified in the present invention. Furthermore, 2.0% by weight of trans-2,3-dibromo-2-butene-1,4-diol was contained in Example 29X as an organic halogen compound within the range specified in the present invention.

In Example 29X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 30X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 30X. The total amount of the acrylic resins was also within the range specified in the present invention.

Furthermore, 30.0% by weight of acrylic acid-modified, hydrogenated rosin, 22.0% by weight of hydrogenated rosin, and 5.0% by weight of rosin ester were contained in Example 30X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of adipic acid and 2.0% by weight of 12-hydroxystearic acid were contained in Example 30X as organic acids within the ranges specified in the present invention. The total amount of adipic acid and 12-hydroxystearic acid was also within the range specified in the present invention. Furthermore, 10.0% by weight of triallyl isocyanurate hexabromide was contained in Example 30X as an organic halogen compound within the range specified in the present invention.

In Example 30X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 31X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 31X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 31X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of adipic acid and 2.0% by weight of 12-hydroxystearic acid were contained in Example 31X as organic acids within the ranges specified in the present invention. The total amount of adipic acid and 12-hydroxystearic acid was also within the range specified in the present invention. Furthermore, 2.0% by weight of 2,2,2-tribromoethanol was contained in Example 31X as an organic halogen compound within the range specified in the present invention.

In Example 31X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 32X.

In addition, 15.0% by weight of a butyl acrylate-polyethylene copolymerized oligomer (acrylic oligomer 1) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention was contained as an acrylic resin in Example 32X. The total amount of the acrylic resins was also within the range specified in the present invention.

Furthermore, 30.0% by weight of acrylic acid-modified, hydrogenated rosin, 31.0% by weight of hydrogenated rosin, and 5.0% by weight of a rosin ester were contained in Example 32X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of adipic acid and 2.0% by weight of 12-hydroxystearic acid were contained in Example 32X as organic acids within the ranges specified in the present invention. The total amount of adipic acid and 12-hydroxystearic acid was also within the range specified in the present invention. Furthermore, 1.0% by weight of ethylamine HBr was contained in Example 32X as an amine hydrohalide within the range specified in the present invention.

In Example 32X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 33X.

In addition, 15.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 33X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 33X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 1.0% by weight of adipic acid and 2.0% by weight of 12-hydroxystearic acid were contained in Example 33X as organic acids within the ranges specified in the present invention. The total amount of adipic acid and 12-hydroxystearic acid was also within the range specified in the present invention. Furthermore, 2.5% by weight of N, N-diethylaniline HBr was contained in Example 33X as an amine hydrohalide within the range specified in the present invention.

In Example 33X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 34X.

In addition, 30.0% by weight of acrylic acid-modified, hydrogenated rosin, 20.0% by weight of hydrogenated rosin, and 5.0% by weight of rosin ester were contained in Example 34X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 1.0% by weight of adipic acid and 2.0% by weight of 12-hydroxystearic acid were contained in Example 34X as organic acids within the ranges specified in the present invention. The total amount of adipic acid and 12-hydroxystearic acid was also within the range specified in the present invention. In addition, 2.0% by weight of 2,3-dibromo-1,4-butanediol was contained in Example 34X as an organic halogen compound within the range specified in the present invention. Furthermore, 10.0% by weight of isodecyl acid phosphate was contained in Example 34X as an organic phosphorus compound within the range specified in the present invention.

In Example 34X, each material was compatible without separation, whereby a sufficient effect on the compatibility was obtained. In addition, there was no crack in the residue found, and therefore, a sufficient effect on the temperature cycle reliability was obtained.

30.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 35X.

In addition, 30.0% by weight of acrylic acid-modified, hydrogenated rosin, 25.0% by weight of hydrogenated rosin, and 5.0% by weight of rosin ester were contained in Example 35X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention.

Furthermore, 1.0% by weight of adipic acid and 2.0% by weight of 12-hydroxystearic acid were contained in Example 35X as organic acids within the ranges specified in the present invention. The total amount of adipic acid and 12-hydroxystearic acid was also within the range specified in the present invention. In addition, 2.0% by weight of 2,3-dibromo-1,4-butanediol was contained in Example 35X as an organic halogen compound within the range specified in the present invention. Furthermore, 5.0% by weight of silicone oil was contained in Example 35X as a silicone within the range specified in the present invention.

In Example 35X, each material was compatible without separation, whereby a sufficient effect on the compatibility was obtained. In addition, there was no crack in the residue found, and therefore, a sufficient effect on the temperature cycle reliability was obtained.

15.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 36X.

In addition, 10.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained as an acrylic resin in Example 36X. The total amount of the acrylic resins was also within the range specified in the present invention.

Furthermore, 30.0% by weight of acrylic acid-modified, hydrogenated rosin, 30.0% by weight of hydrogenated rosin, and 5.0% by weight of rosin ester were contained in Example 36X as rosin-based resins. The total amount of the rosin-based resins was within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was also within the range specified in the present invention. In addition, 5.0% by weight of a polyethylene resin was contained in Example 36X as another resin within the range specified in the present invention.

Furthermore, 1.0% by weight of adipic acid was contained in Example 36X as an organic acid within the range specified in the present invention. In addition, 1.0% by weight of 2-phenylimidazole was contained in Example 36X as an amine within the range specified in the present invention. Furthermore, 2.0% by weight of 2,3-dibromo-1,4-butanediol was contained in Example 36X as an organic halogen compound within the range specified in the present invention. In addition, 0.5% by weight of ethylamine HBr and 0.5% by weight of N, N-diethylaniline HBr were contained in Example 36X as amine hydrohalides within the ranges specified in the present invention. The total amount of the amine hydrohalides was also within the range specified in the present invention.

In Example 36X, each material was compatible without separation, whereby a sufficient effect on the compatibility was obtained. In addition, there was no crack in the residue found, and therefore, a sufficient effect on the temperature cycle reliability was obtained.

On the other hand, in Comparative Example 1X, any acrylic oligomer having a number average molecular weight (Mn) and a weight average molecular weight (Mw) obtained through mass spectrometry using a time-of-flight mass spectrometer (TOF-MS) within the ranges specified in the present invention was not contained as an acrylic resin, but 30.0% by weight of a butyl acrylate polymer having a number average molecular weight (Mn) and a weight average molecular weight (Mw) of greater than 4,000 was contained as an acrylic resin.

In addition, 30.0% by weight of acrylic acid-modified, hydrogenated rosin, 30.0% by weight of hydrogenated rosin, and 5.0% by weight of rosin ester were contained in Comparative Example 1X as rosin-based resins. The total amount of the rosin-based resins was within the range specified in the present invention. Furthermore, 1.0% by weight of adipic acid and 2.0% by weight of 12-hydroxystearic acid were contained in Comparative Example 1X as organic acids within the ranges specified in the present invention. The total amount of adipic acid and 12-hydroxystearic acid was also within the range specified in the present invention. In addition, 2.0% by weight of 2,3-dibromo-1,4-butanediol was contained in Comparative Example 1X as an organic halogen compound within the range specified in the present invention.

In Comparative Example 1X, each material was separated into two or more components, and no effect on the compatibility was obtained. In addition, since the residue was not sufficiently cured, the temperature cycle reliability could not be evaluated.

Neither an acrylic oligomer nor an acrylic polymer was not contained as an acrylic resin. In Comparative Example 2X, 30.0% by weight of acrylic acid-modified, hydrogenated rosin, 60.0% by weight of hydrogenated rosin, and 5.0% by weight of rosin ester were contained as rosin-based resins. The total amount of the rosin-based resins exceeded the range specified in the present invention. Furthermore, 1.0% by weight of adipic acid and 2.0% by weight of 12-hydroxystearic acid were contained in Comparative Example 2X as organic acids within the ranges specified in the present invention. The total amount of adipic acid and 12-hydroxystearic acid was also within the range specified in the present invention. In addition, 2.0% by weight of 2,3-dibromo-1,4-butanediol was contained in Comparative Example 2X as an organic halogen compound within the range specified in the present invention.

In Comparative Example 2X, although the residue was cured, there was a crack in the residue found, and therefore, no effect on the temperature cycle reliability was obtained. In addition, since no acrylic resin was contained in Comparative Example 2X, the compatibility was not evaluated.

In view of the above, in a soldering resin composition containing: an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or an acrylic resin having a number average molecular weight (Mn) and a weight average molecular weight (Mw) of greater than or equal to 500 and less than 2,000 obtained through mass spectrometry using a time-of-flight mass spectrometer (TOF-MS); and a rosin-based resin, stratification due to non-uniformity of the rosin-based resin and the acrylic resins was inhibited.

In addition, the soldering resin composition containing the acrylic resin having a molecular weight within the above-described range and the rosin-based resin had excellent heat cycle reliability, and therefore, cracking of the soldering resin composition which has been cured after heating was inhibited.

Thus, the soldering resin composition according to the present embodiment is suitable for a soldering flux and may be used in a solder composition of a flux cored solder, a flux coated solder, or the like to inhibit stratification of the residue. In addition, the residue can be made flexible to inhibit cracking of the residue.

These effects were not inhibited by incorporation of other resins and activators, such as other organic acids, amines, amine hydrohalides, and organic halogen compounds, within the ranges specified in the present invention. In addition, these effects were not inhibited by incorporation of a solvent and other additives within the ranges specified in the present invention.

<Evaluation of Solder Wettability, Compatibility, and Temperature Cycle Reliability of Flux>

Fluxes of examples and comparative examples having constitutions shown in Tables 8 to 13 as follows were prepared to verify solder wettability, compatibility, and temperature cycle reliability of the flux according to the first embodiment. In addition, fluxes of examples and comparative examples having constitutions shown in Tables 14 to 19 as follows were prepared to verify solder wettability, compatibility, and temperature cycle reliability of the flux according to the second embodiment. The constitution ratios in Tables 8 to 13 and Tables 14 to 19 are indicated by % by weight in a case where the total amount of flux is set to 100.

<Evaluation of Solder Wettability>

(1) Verification Method

For an evaluation of solder wettability, a flux of each of the examples and comparative examples was applied on a Cu plate, a solder ball was mounted on the flux applied on the Cu plate, and reflowing was performed, followed by measuring a wetspread diameter of a solder. In the reflowing process, the temperature was increased from 35°C to 250°C by 1 °C every second using a reflow device of which the peak temperature was set to 250°C, and a heat treatment was performed for 30 seconds after the temperature reached 250°C. The solder ball had a constitution described as Sn-3Ag-0.5Cu and contained: 3.0% by mass of Ag; 0.5% by mass of Cu; and a balance of Sn (96.5% by mass). The diameter of the solder ball is 0.3 mm.

(2) Evaluation Criteria

O: The spread diameter of a solder was greater than or equal to 510 $\mu$m.
×: The spread diameter of a solder was less than 510 $\mu$m.

<Evaluation of Compatibility>

(1) Verification Method

For an evaluation of the compatibility, the fluxes of the examples and the comparative examples were adjusted through heating and stirring and stored at room temperature for 48 hours. The fluxes after the storage were placed at 25°C and visually observed.

(2) Evaluation Criteria

O: Each material was compatible without separation.
×: Each material was separated into two or more components.

<Evaluation of Temperature Cycle Reliability>

(1) Verification Method

For an evaluation of the temperature cycle reliability, each flux of the examples and the comparative examples was applied on a Cu plate, and a residue was formed on the Cu plate. The presence or absence of cracks in the residue formed on the Cu plate when 500 cycles of a test of repeating processing of holding the residue for 30 minutes each at -30°C and +110°C were performed was visually evaluated.

(2) Evaluation Criteria

O: There was no crack found in the residue.
×: There was a crack found in the residue.

<Comprehensive Evaluation>

O: All the evaluations of the solder wettability, the compatibility, and the temperature cycle reliability scored O.
×: At least one of the solder wettability evaluation, the compatibility evaluation, and the temperature cycle reliability evaluation scored x.

Table 8

| Material category | | Type of material | Ex. 1Y | Ex. 2Y | Ex. 3Y | Ex. 4Y | Ex. 5Y | Ex. 6Y | Ex. 7Y |
|---|---|---|---|---|---|---|---|---|---|
| Resin | Acrylic resin | Acrylic oligomer A | 20.0 | | | | | | |
| | | Acrylic oligomer B | | 20.0 | | | | | |
| | | Acrylic oligomer C | | | 20.0 | | | | |
| | | Acrylic oligomer D | | | | 20.0 | | | |
| | | Acrylic oligomer E | | | | | 20.0 | | |
| | | Acrylic oligomer F | | | | | | 20.0 | |
| | | Acrylic oligomer G | | | | | | | 20.0 |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin | Acrylic acid-modified, hydrogenated rosin | 15.0 | 15.0 | 15.0 | 15.0 | 15.0 | 15.0 | 15.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | Other resins | Polyethylene resin | | | | | | | |
| | | Acid-modified polyethylene resin | | | | | | | |

| Material category | | Type of material | Ex. 1Y | Ex. 2Y | Ex. 3Y | Ex. 4Y | Ex. 5Y | Ex. 6Y | Ex. 7Y |
|---|---|---|---|---|---|---|---|---|---|
| Activator | Organic acid | Succinic acid | 4.0 | 4.0 | 4.0 | 4.0 | 4.0 | 4.0 | 4.0 |
| | | Glutaric acid | | | | | | | |
| | | Adipic acid | 3.0 | 3.0 | 3.0 | 3.0 | 3.0 | 3.0 | 3.0 |
| | | Dodecanedioic acid | | | | | | | |
| | | Dimer acid | 10.0 | 10.0 | 10.0 | 10.0 | 10.0 | 10.0 | 10.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 1.0 | 1.0 | 1.0 | 1.0 | 1.0 | 1.0 | 1.0 |
| | | 2-Phenyl-4-methvlimidazole | | | | | | | |
| | | 2-Phenylimidazoline | | | | | | | |
| | Organic halogen compound | 2,3-Dibromo-1,4-butanediol | | | | | | | |
| | | Trans-2,3-dibromo-2-butene-1,4-diol | | | | | | | |
| | | Triallyl isocyanurate hexabromide | | | | | | | |
| | Amine hydrohalide | Ethylamine HBr | | | | | | | |
| | | N, N-Diethylaniline HBr | | | | | | | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 | 2.9 |
| | | N,N'-Hexamethylenebis[3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | 0.1 |

EP 3 950 983 A1

(continued)

| Material category | | Type of material | Ex. 1Y | Ex. 2Y | Ex. 3Y | Ex. 4Y | Ex. 5Y | Ex. 6Y | Ex. 7Y |
|---|---|---|---|---|---|---|---|---|---|
| Solvent | Solvent | Hexyl diglycol | 40.0 | 40.0 | 40.0 | 40.0 | 40.0 | 40.0 | 40.0 |
| | | Ethylhexyl diglycol | | | | | | | |
| Total | | | 100.0 | 100.0 | 100.0 | 100.0 | 100.0 | 100.0 | 100.0 |
| Total amount of acrylic resins | | | 20.0 | 20.0 | 20.0 | 20.0 | 20.0 | 20.0 | 20.0 |
| Total amount of rosin | | | 15.0 | 15.0 | 15.0 | 15.0 | 15.0 | 15.0 | 15.0 |
| Total amount of other resins | | | 0 | 0 | 0 | 0 | 0 | 0 | 0 |
| Acrylic resin / rosin | | | 1.3 | 1.3 | 1.3 | 1.3 | 1.3 | 1.3 | 1.3 |
| Evaluation | Solder wettability | | ○ | ○ | ○ | ○ | ○ | ○ | ○ |
| | Compatibility | | ○ | ○ | ○ | ○ | ○ | ○ | ○ |
| | Temperature cvcle reliability | | ○ | ○ | ○ | ○ | ○ | ○ | ○ |
| | Comprehensive evaluation | | ○ | ○ | ○ | ○ | ○ | ○ | ○ |
| (Ex.: Example) | | | | | | | | | |

Table 9

| Material category | | Type of material | Ex. 8Y | Ex. 9Y | Ex. 10Y | Ex. 11Y | Ex. 12Y | Ex. 13Y | Ex. 14Y |
|---|---|---|---|---|---|---|---|---|---|
| Resin | Acrylic resin | Acrylic oligomer A | | | | 2.0 | | | |
| | | Acrylic oligomer B | | | | 2.0 | | | |
| | | Acrylic oligomer C | | | | 2.0 | | | |
| | | Acrylic oligomer D | | | | 2.0 | | | |
| | | Acrylic oligomer E | | | | 2.0 | | | |
| | | Acrylic oligomer F | | | | 2.0 | 20.0 | 20.0 | 5.0 |
| | | Acrylic oligomer G | | | | 2.0 | 15.0 | 15.0 | 5.0 |
| | | Acrylic oligomer H | 20.0 | | | 2.0 | | | |
| | | Acrylic oligomer I | | 20.0 | | 2.0 | | | |
| | | Acrylic oligomer J | | | 20.0 | 2.0 | | | |
| | | Acrylic Polymer A | | | | | | | |
| | Rosin | Acrylic acid-modified, hydrogenated rosin | 15.0 | 15.0 | 15.0 | 15.0 | | | 15.0 |
| | | Maleic acid-modified, hydrogenated rosin | | | | | | | |
| | | Phenol-modified | | | | | | | |
| | | rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | Other resins | Polyethylene resin | | | | | | | |
| | | Acid-modified polyethylene resin | | | | | | | |

| Material category | | Type of material | Ex. 8Y | Ex. 9Y | Ex. 10Y | Ex. 11Y | Ex. 12Y | Ex. 13Y | Ex. 14Y |
|---|---|---|---|---|---|---|---|---|---|
| Activator | Organic acid | Succinic acid | 4.0 | 4.0 | 4.0 | 4.0 | 2.0 | 3.5 | 4.0 |
| | | Glutaric acid | | | | | | | |
| | | Adipic acid | 3.0 | 3.0 | 3.0 | 3.0 | 3.0 | 3.0 | 3.0 |
| | | Dodecanedioic acid | | | | | | | |
| | | Dimer acid | 10.0 | 10.0 | 10.0 | 10.0 | 10.0 | 10.0 | 20.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 1.0 | 1.0 | 1.0 | 1.0 | 1.0 | 1.0 | 1.0 |
| | | 2-Phenyl-4-methylimidazole | | | | | | | |
| | | 2-Phenylimidazoline | | | | | | | |
| | Organic halogen compound | 2,3-Dibromo-1,4-butanediol | | | | | | | |
| | | Trans-2,3-dibromo-2-butene-1,4-diol | | | | | | 1.0 | |
| | | Triallyl isocyanurate hexabromide | | | | | | 1.5 | |
| | Amine hydrohalide | Ethylamine HBr | | | | | 1.0 | | |
| | | N, N-Diethylaniline HBr | | | | | 1.0 | | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 | 2.9 |
| | | N,N'-Hexamethylenebis[3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | 0.1 |

(continued)

| Material category | Type of material | Ex. 8Y | Ex. 9Y | Ex. 10Y | Ex. 11Y | Ex. 12Y | Ex. 13Y | Ex. 14Y |
|---|---|---|---|---|---|---|---|---|
| Solvent | Hexyl diglycol | 40.0 | 40.0 | 40.0 | 40.0 | 40.0 | 38.0 | 40.0 |
| Solvent | Ethylhexyl diglycol | | | | | | | |
| Total | | 100.0 | 100.0 | 100.0 | 100.0 | 100.0 | 100.0 | 100.0 |
| Total amount of acrylic resins | | 20.0 | 20.0 | 20.0 | 35.0 | 35.0 | 10.0 | |
| Total amount of rosin | | 15.0 | 15.0 | 15.0 | 0.0 | 0.0 | 15.0 | |
| Total amount of other resins | | 0 | 0 | 0 | 0 | 0 | 0 | |
| Acrylic resin / rosin | | 1.3 | 1.3 | 1.3 | - | - | 0.7 | |
| Evaluation | Solder wettability | ○ | ○ | ○ | ○ | ○ | ○ | |
| Evaluation | Compatibility | ○ | ○ | ○ | ○ | ○ | ○ | |
| Evaluation | Temperature cycle reliability | ○ | ○ | ○ | ○ | ○ | ○ | |
| Evaluation | Comprehensive evaluation | ○ | ○ | ○ | ○ | ○ | ○ | |

(Ex.: Example)

Table 10

| Material category | | Type of material | Ex. 15Y | Ex. 16Y | Ex. 17Y | Ex. 18Y | Ex. 19Y | Ex. 20Y |
|---|---|---|---|---|---|---|---|---|
| Resin | Acrylic resin | Acrylic oligomer A | | | | | | |
| | | Acrylic oligomer B | | | | | | |
| | | Acrylic oligomer C | | | | | | |
| | | Acrylic oligomer D | | | | | | |
| | | Acrylic oligomer E | | | | | | |
| | | Acrylic oligomer F | 7.5 | 10.0 | 13.5 | 15.0 | 17.5 | 20.0 |
| | | Acrylic oligomer G | 5.0 | 10.0 | 10.0 | 10.0 | 10.0 | 10.0 |
| | | Acrylic oligomer H | | | | | | |
| | | Acrylic oligomer I | | | | | | |
| | | Acrylic oligomer J | | | | | | |
| | | Acrylic Polymer A | | | | | | |
| | Rosin | Acrylic acid-modified, hydrogenated rosin | 15.0 | 15.0 | 11.5 | 10.0 | 7.5 | 5.0 |
| | | Maleic acid-modified, hydrogenated rosin | | | | | | |
| | | Phenol-modified rosin | | | | | | |
| | | Disproportionated rosin | | | | | | |
| | | Hydrogenated rosin | | | | | | |
| | | Polymerized rosin | | | | | | |
| | | Rosin ester | | | | | | |
| | Other resins | Polyethylene resin | | | | | | |
| | | Acid-modified polyethylene resin | | | | | | |
| Activator | Organic acid | Succinic acid | 4.0 | 4.0 | 4.0 | 4.0 | 4.0 | 4.0 |
| | | Glutaric acid | | | | | | |
| | | Adipic acid | 3.0 | 3.0 | 3.0 | 3.0 | 3.0 | 3.0 |
| | | Dodecanedioic acid | | | | | | |
| | | Dimer acid | 17.5 | 10.0 | 10.0 | 10.0 | 10.0 | 10.0 |
| | | Hydrogenated dimer acid | | | | | | |
| | | Trimer acid | | | | | | |
| | | Hydrogenated trimer acid | | | | | | |
| | Amine | 2-Phenylimidazole | 1.0 | 1.0 | 1.0 | 1.0 | 1.0 | 1.0 |
| | | 2-Phenyl-4-methylimidazole | | | | | | |
| | | 2-Phenylimidazoline | | | | | | |
| | Organic halogen compound | 2,3-Dibromo-1,4-butanediol | | | | | | |
| | | Trans-2,3-dibromo-2- | | | | | | |

(continued)

| Material category | | Type of material | Ex. 15Y | Ex. 16Y | Ex. 17Y | Ex. 18Y | Ex. 19Y | Ex. 20Y |
|---|---|---|---|---|---|---|---|---|
| | | butene-1,4-diol | | | | | | |
| | | Triallyl isocyanurate hexabromide | | | | | | |
| | Amine hydrohalide | Ethylamine HBr | | | | | | |
| | | N, N-Diethylaniline HBr | | | | | | |
| Thixotropic agent | Ester-based thixotropic agent | Hydrogenated castor oil | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 |
| | | Polyamide-based thixotropic agent | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 |
| | | N,N'-Hexamethylenebis [3-(3,5-di-tert-butyl-4-hydroxyphenyl) propanamide] | | | | | | |
| | Nitrogen compound-based metal deactivator | N-(2H-1,2,4-triazol-5-yl) salicylamide | 0.1 | 0.1 | 0.1 | 0.1 | 0.1 | 0.1 |
| Solvent | Solvent | Hexyl diglycol | 40.0 | 40.0 | 40.0 | 40.0 | 40.0 | 40.0 |
| | | Ethylhexyl diglycol | | | | | | |
| Total | | | 100.0 | 100.0 | 100.0 | 100.0 | 100.0 | 100.0 |
| Total amount of acrylic resins | | | 12.5 | 20.0 | 23.5 | 25.0 | 27.5 | 30.0 |
| Total amount of rosin | | | 15.0 | 15.0 | 11.5 | 10.0 | 7.5 | 5.0 |
| Total amount of other resins | | | 0 | 0 | 0 | 0 | 0 | 0 |
| Acrylic resin / rosin | | | 0.8 | 1.3 | 2.0 | 2.5 | 3.7 | 6.0 |
| Evaluation | Solder wettability | | ○ | ○ | ○ | ○ | ○ | ○ |
| | Compatibility | | ○ | ○ | ○ | ○ | ○ | ○ |
| | Temperature cvcle reliability | | ○ | ○ | ○ | ○ | ○ | ○ |
| | Comprehensive evaluation | | ○ | ○ | ○ | ○ | ○ | ○ |
| (Ex.: Example) | | | | | | | | |

Table 11

| Material category | | Type of material | Ex. 21Y | Ex. 22Y | Ex. 23Y | Ex. 24Y | Ex. 25Y | Ex. 26Y | Ex. 27Y |
|---|---|---|---|---|---|---|---|---|---|
| Resin | Acrylic resin | Acrylic oligomer A | 20.0 | 16.0 | 12.0 | | | | |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | | | | 20.0 | 20.0 | 20.0 | |
| | | Acrylic oligomer G | | | | | | 10.0 | 20.0 |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin | Acrylic acid-modified, hydrogenated rosin | 3.0 | 15.0 | 15.0 | 15.0 | 15.0 | 16.0 | 15.0 |
| | | Maleic acid-modified, hydrogenated rosin | 2.0 | | | | | | |
| | | Phenol-modified rosin | 2.0 | | | | | | |
| | | Disproportionated rosin | 2.0 | | | | | | |
| | | Hydrogenated rosin | 2.0 | | | | | | |
| | | Polymerized rosin | 2.0 | | | | | | |
| | | Rosin ester | 2.0 | | | | | | |
| | Other resins | Polyethylene resin | | 4.0 | 4.0 | | | | |
| | | Acid-modified polyethylene resin | | | 4.0 | | | | |

(continued)

| Material category | | Type of material | Ex. 21Y | Ex. 22Y | Ex. 23Y | Ex. 24Y | Ex. 25Y | Ex. 26Y | Ex. 27Y |
|---|---|---|---|---|---|---|---|---|---|
| Activator | Organic acid | Succinic acid | 4.0 | 4.0 | 4.0 | 4.0 | 0.0 | 0.0 | 3.0 |
| | | Glutaric acid | | | | | 0.0 | 0.0 | |
| | | Adipic acid | 3.0 | 3.0 | 3.0 | | 0.0 | 0.0 | |
| | | Dodecanedioic acid | | | | 3.0 | | 0.0 | |
| | | Dimer acid | 10.0 | 10.0 | 10.0 | 10.0 | 17.0 | 0.0 | 10.0 |
| | | Hydrogenated dimer acid | | | | | | 0.0 | |
| | | Trimer acid | | | | | | 0.0 | |
| | | Hydrogenated trimer acid | | | | | | 0.0 | |
| | Amine | 2-Phenylimidazole | 1.0 | 1.0 | 1.0 | 1.0 | 1.0 | 1.0 | |
| | | 2-Phenyl-4-methylimidazole | | | | | | | |
| | | 2-Phenylimidazoline | | | | | | | 2.0 |
| | Organic halogen compound | 2,3-Dibromo-1,4-butanediol | | | | | | | |
| | | Trans-2,3-dibromo-2-butene-1,4-diol | | | | | | 2.0 | |
| | | Triallyl isocyanurate hexabromide | | | | | | 3.0 | |
| | Amine hydrohalide | Ethylamine HBr | | | | | | 0.5 | |
| | | N, N-Diethylaniline HBr | | | | | | 0.5 | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 | 2.9 |
| | | N,N'-Hexamethylenebis [3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | 0.1 |

(continued)

| Material category | | Type of material | Ex. 21Y | Ex. 22Y | Ex. 23Y | Ex. 24Y | Ex. 25Y | Ex. 26Y | Ex. 27Y |
|---|---|---|---|---|---|---|---|---|---|
| Solvent | Solvent | Hexyl diglycol | 40.0 | 40.0 | 40.0 | 40.0 | 40.0 | 40.0 | 43.0 |
| | | Ethylhexyl diglycol | | | | | | | |
| Total | | 100. 0 | 100.0 | 100.0 | 100.0 | 100.0 | 100.0 | 100.0 | |
| Total amount of acrylic resins | | 20.0 | 16.0 | 12.0 | 20.0 | 20.0 | 30.0 | 20.0 | |
| Total amount of rosin | | 15.0 | 15.0 | 15.0 | 15.0 | 15.0 | 16.0 | 15.0 | |
| Total amount of other resins | | 0 | 4 | 8 | 0 | 0 | 0 | 0 | |
| Acrylic resin / rosin | | 1.3 | 1.1 | 0.8 | 1.3 | 1.3 | 1.9 | 1.3 | |
| Evaluation | Solder wettability | ○ | ○ | ○ | ○ | ○ | ○ | ○ | |
| | Compatibility | ○ | ○ | ○ | ○ | ○ | ○ | ○ | |
| | Temperature cycle reliability | ○ | ○ | ○ | ○ | ○ | ○ | ○ | |
| | Comprehensive evaluation | ○ | ○ | ○ | ○ | ○ | ○ | ○ | |
| (Ex.: Example) | | | | | | | | | |

Table 12

| Material category | | Type of material | Ex. 28Y | Ex. 29Y | Ex. 30Y | Ex. 31Y | Ex. 32Y | Ex. 33Y | Ex. 34Y |
|---|---|---|---|---|---|---|---|---|---|
| Resin | Acrylic resin | Acrylic oligomer A | | | | | | | |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | | | 20.0 | 20.0 | 20.0 | 20.0 | 20.0 |
| | | Acrylic oligomer G | 20.0 | 20.0 | | | | | |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin | Acrylic acid-modified, hydrogenated rosin | 15.0 | 15.0 | 15.0 | 15.0 | 15.0 | 15.0 | 15.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | Other resins | Polyethylene resin | | | | | | | |
| | | Acid-modified polyethylene resin | | | | | | | |
| Activator | Organic acid | Succinic acid | | | 1.5 | 2.5 | 4.0 | 4.0 | 2.0 |
| | | Glutaric acid | 3.0 | 3.0 | 1.5 | 2.5 | | | |
| | | Adipic acid | | | | | 3.0 | 3.0 | 1.0 |
| | | Dodecanedioic acid | | | | | | | |
| | | Dimer acid | 10.0 | 10.0 | 10.0 | 10.0 | 11.0 | 10.0 | 10.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 2.0 | | | | 0.0 | | 4.0 |
| | | 2-Phenyl-4-methylimidazole | | | | | 0.0 | 1.0 | 4.0 |
| | | 2-Phenylimidazoline | | 2.0 | 2.0 | 2.0 | | | |
| | Organic halogen compound | 2,3-Dibromo-1,4-butanediol | | | | | | | |
| | | Trans-2,3-dibromo-2- | | | | | | | |

(continued)

| Material category | | Type of material | Ex. 28Y | Ex. 29Y | Ex. 30Y | Ex. 31Y | Ex. 32Y | Ex. 33Y | Ex. 34Y |
|---|---|---|---|---|---|---|---|---|---|
| | | butene-1,4-diol | | | | | | | |
| | | Triallyl isocyanurate hexabromide | | | | | | | |
| | Amine hydrohalid e | Ethylamine HBr | | | | | | | |
| | | N, N-Diethylaniline HBr | | | | | | | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 | 2.0 |
| | | N,N'-Hexamethylenebis [3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | |
| Solvent | Solvent | Hexyl diglycol | 43.0 | 43.0 | 43.0 | 41.0 | 40.0 | 40.0 | 40.0 |
| | | Ethylhexyl diglycol | | | | | | | |
| Total | | | 100.0 | 100.0 | 100.0 | 100.0 | 100.0 | 100.0 | 100.0 |
| Total amount of acrylic resins | | | 20.0 | 20.0 | 20.0 | 20.0 | 20.0 | 20.0 | 20.0 |
| Total amount of rosin | | | 15.0 | 15.0 | 15.0 | 15.0 | 15.0 | 15.0 | 15.0 |
| Total amount of other resins | | | 0 | 0 | 0 | 0 | 0 | 0 | 0 |
| Acrylic resin / rosin | | | 1.3 | 1.3 | 1.3 | 1.3 | 1.3 | 1.3 | 1.3 |
| Evaluation | Solder wettability | | ○ | ○ | ○ | ○ | ○ | ○ | ○ |
| | Compatibility | | ○ | ○ | ○ | ○ | ○ | ○ | ○ |
| | Temperature cycle reliability | | ○ | ○ | ○ | ○ | ○ | ○ | ○ |
| | Comprehensive evaluation | | ○ | ○ | ○ | ○ | ○ | ○ | ○ |
| (Ex.: Example) | | | | | | | | | |

Table 13

| Material category | | Type of material | Ex. 35Y | Ex. 36Y | Ex. 37Y | Ex. 38Y | C. Ex. 1Y | C. Ex. 2Y | C. Ex. 3Y |
|---|---|---|---|---|---|---|---|---|---|
| Resin | Acrylic resin | Acrylic oligomer A | | | | | | | |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | 20.0 | 20.0 | 20.0 | 20.0 | 25.0 | | |
| | | Acrylic oligomer G | | | | | 20.0 | | |
| | | Acrylic oligomer H | | | | | | | |
| | | Acrylic oligomer I | | | | | | | |
| | | Acrylic oligomer J | | | | | | | |
| | | Acrylic Polymer A | | | | | | 20.0 | |
| | Rosin | Acrylic acid-modified, hydrogenated rosin | 15.0 | 15.0 | 15.0 | 15.0 | | 15.0 | 35.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | Other resins | Polyethylene resin | | | | | 4.0 | | |
| | | Acid-modified polyethylene resin | | | | | 4.0 | | |

(continued)

| Material category | | Type of material | Ex. 35Y | Ex. 36Y | Ex. 37Y | Ex. 38Y | C. Ex. 1Y | C. Ex. 2Y | C. Ex. 3Y |
|---|---|---|---|---|---|---|---|---|---|
| Activator | Organic acid | Succinic acid | 4.0 | 4.0 | 4.0 | 4.0 | | 4.0 | 4.0 |
| | | Glutaric acid | | | | | | | |
| | | Adipic acid | 3.0 | 3.0 | 3.0 | 3.0 | | 3.0 | 3.0 |
| | | Dodecanedioic acid | | | | | | | |
| | | Dimer acid | 10.0 | 10.0 | 10.0 | 10.0 | | 10.0 | 10.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 2.0 | 1.0 | 1.0 | 1.0 | | 1.0 | 1.0 |
| | | 2-Phenyl-4-methylimidazole | | | | | | | |
| | | 2-Phenylimidazoline | | | | | | | |
| | Organic halogen compound | 2,3-Dibromo-1,4-butanediol | 2.0 | | | | | | |
| | | Trans-2,3-dibromo-2-butene-1,4-diol | | | | | | | |
| | | Triallyl isocyanurate hexabromide | | | | | | | |
| | hydrohalide | Ethylamine HBr | | | | | | | |
| | | N, N-Diethylaniline HBr | | | | | | | |
| Thixotropic agent | Ester-based thixotropic agent | Hydrogenated castor oil | 2.0 | 7.0 | | | 2.0 | 2.0 | 2.0 |
| | Amide-based thixotropic agent | Bisamide-based thixotropic agent | | | 3.0 | 3.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl)propionic acid][ethylenebis(oxyethylene)] | 2.0 | | 2.9 | | 2.9 | 2.9 | 2.9 |
| | | N,N'-Hexamethylenebis[3-(3,5-di-tert-butyl-4-hydroxyphenyl)propanamide] | | | | 2.9 | | | |
| | Nitrogen compound-based metal deactivator | N-(2H-1,2,4-triazol-5-yl)salicylamide | | | 0.1 | 0.1 | 0.1 | 0.1 | 0.1 |
| Solvent | Solvent | Hexyl diglycol | 40.0 | 40.0 | | | 40.0 | 40.0 | 40.0 |
| | | Ethylhexyl diglycol | | | 41.0 | 41.0 | | | |

(continued)

| | | | | | 0.1 | 0.1 | 0.1 | 0.1 | 0.1 |
|---|---|---|---|---|---|---|---|---|---|
| Nitrogen compound-based metal deactivator | N-(2H-1,2,4-triazol-5-yl) salicylamide | | | | 0.1 | 0.1 | 0.1 | 0.1 | 0.1 |
| Total | | | 100.0 | 100.0 | 100.0 | 100.0 | 100.0 | 100.0 | 100.0 |
| Total amount of acrylic resins | | | 20.0 | 20.0 | 20.0 | 20.0 | 45.0 | 20.0 | 0.0 |
| Total amount of rosin | | | 15.0 | 15.0 | 15.0 | 15.0 | 0.0 | 15.0 | 35.0 |
| Total amount of other resins | | | 0 | 0 | 0 | 0 | 8 | 0 | 0 |
| Acrylic resin / rosin | | | 1.3 | 1.3 | 1.3 | 1.3 | - | 1.3 | 0.0 |
| Evaluation | Solder wettability | | ○ | ○ | ○ | ○ | × | ○ | ○ |
| | Compatibility | | ○ | ○ | ○ | ○ | ○ | × | - |
| | Temperature cycle reliability | | ○ | ○ | ○ | ○ | ○ | - | × |
| | Comprehensive evaluation | | ○ | ○ | ○ | ○ | × | × | × |
| (Ex.: Example, C. Ex.: Comparative Example) | | | | | | | | | |

Examples 1Y to 10Y were cases where the type of acrylic resin was changed in the flux according to the first embodiment. In Example 1Y, 20.0% by weight of the acrylic oligomer A shown in Table 1 was contained as an acrylic resin within the range specified in the present invention. The acrylic oligomer A was a butyl acrylate oligomer having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention.

In addition, 15.0% by weight of acrylic acid-modified, hydrogenated rosin was contained in Example 1Y as a rosin-based resin within the range specified in the present invention. The ratio (weight ratio) of the weight of one kind of the acrylic resin or the total weight of two or more kinds of the acrylic resins to the weight of one kind of the rosin-based resin or the total weight of two or more kinds of the rosin-based resins was also within the range specified in the present invention.

In addition, 10.0% by weight of a dimer acid, and, as other organic acids, 4.0% by weight of succinic acid and 3.0% by weight of adipic acid were contained in Example 1Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 1Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 1Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 1Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 1Y, the spread diameter of a solder satisfied the above-described evaluation criteria, and therefore, a sufficient effect on the solder wettability was obtained. In addition, each material was compatible without separation, whereby a sufficient effect on the compatibility was obtained. Furthermore, there was no crack in the residue found, and therefore, a sufficient effect on the temperature cycle reliability was obtained.

20.0% by weight of the acrylic oligomer B shown in Table 1 was contained in Example 2Y as an acrylic resin within the range specified in the present invention. The acrylic oligomer B was a butyl acrylate oligomer having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 2Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

In addition, 10.0% by weight of a dimer acid, and, as other organic acids, 4.0% by weight of succinic acid and 3.0% by weight of adipic acid were contained in Example 2Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 2Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 2Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 2Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention

In Example 2Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer C shown in Table 1 was contained in Example 3Y as an acrylic resin within the range specified in the present invention. The acrylic oligomer C was a butyl acrylate oligomer having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 3Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 3Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 3Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 3Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 3Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 3Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer D shown in Table 1 was contained in Example 4Y as an acrylic resin within the range specified in the present invention. The acrylic oligomer D was an alkyl acrylate oligomer having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 4Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 4Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 4Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 4Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 4Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 4Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer E shown in Table 1 was contained in Example 5Y as an acrylic resin within the range specified in the present invention. The acrylic oligomer E was a butyl methacrylate oligomer having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 5Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 5Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 5Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 5Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 5Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 5Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer F shown in Table 1 was contained in Example 6Y as an acrylic resin within the range specified in the present invention. The acrylic oligomer F was an isotridecanol methacrylate oligomer having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 6Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 6Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 6Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 6Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 6Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 6Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer G shown in Table 1 was contained in Example 7Y as an acrylic resin within the range specified in the present invention. The acrylic oligomer G was an acrylic acid-butyl acrylate copolymerized oligomer having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 7Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 7Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 7Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 7Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 7Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 7Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer H shown in Table 1 was contained in Example 8Y as an acrylic resin within the range specified in the present invention. The acrylic oligomer H was an acrylic acid-butyl acrylate copolymerized oligomer having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 8Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 8Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 8Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 8Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 8Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 8Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer 1 shown in Table 1 was contained in Example 9Y as an acrylic resin within the range specified in the present invention. The acrylic oligomer I was a butyl acrylate-polyethylene copolymerized oligomer having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 9Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 9Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 9Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 9Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 9Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 9Y, a sufficient effect on the solder wettability was obtained. In addition, a sufficient effect on the compatibility was obtained. Furthermore, a sufficient effect on the temperature cycle reliability was obtained.

20.0% by weight of the acrylic oligomer J shown in Table 1 was contained in Example 10Y as an acrylic resin within the range specified in the present invention. The acrylic oligomer J was a butyl acrylate-polyethylene copolymerized oligomer having a number average molecular weight (Mn) of 921.86 obtained through mass spectrometry using a time-of-flight mass spectrometer (TOF-MS) and a weight average molecular weight (Mw) of 1,047.26 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Y, 15.0% by weight of acrylic acid-modified, hydrogenated rosin was contained in Example 10Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 10Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 10Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 10Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 10Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 10Y, a sufficient effect on the solder wettability was obtained. In addition, a sufficient effect on the compatibility was obtained. Furthermore, a sufficient effect on the temperature cycle reliability was obtained.

Example 11Y was a case where plural kinds of acrylic resins were contained. 2.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of a butyl acrylate oligomer (acrylic oligomer B), having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of a butyl acrylate oligomer (acrylic oligomer C), having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of an alkyl acrylate oligomer (acrylic oligomer D), having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of a butyl methacrylate oligomer (acrylic oligomer E), having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of an acrylic acid-butyl acrylate copolymerized oligomer (acrylic oligomer H), having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

In addition, 2.0% by weight of a butyl acrylate-polyethylene copolymerized oligomer (acrylic oligomer J), having a number average molecular weight (Mn) of 921.86 obtained through mass spectrometry using a time-of-flight mass spectrometer (TOF-MS) and a weight average molecular weight (Mw) of 1,047.26 obtained through mass spectrometry using a time-of-flight mass spectrometer (TOF-MS), the number average molecular weight (Mn) and the weight average molecular weight (Mw) being within the ranges specified in the present invention, was contained in Example 11Y as an acrylic resin.

The total amount of the acrylic resins was within the range specified in the present invention.

Hereinafter, similarly to Example 1Y, 15.0% by weight of acrylic acid-modified, hydrogenated rosin was contained in Example 11Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 11Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 11Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 11Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 11Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 11Y in which the acrylic resins were compositely added, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 12Y as an acrylic resin.

In addition, 15.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 12Y as an acrylic resin.

The total amount of the acrylic resins was within the range specified in the present invention. In Example 12Y, no rosin-based resin was contained.

Furthermore, 10.0% by weight of a dimer acid, and 2.0% by weight of succinic acid and 3.0% by weight of adipic acid, which were other organic acids, were contained in Example 12Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine, and 1.0% by weight of ethylamine HBr and 1.0% by weight of N, N-diethylaniline HBr, which were amine hydrohalides, were contained in Example 12Y as activators within the ranges specified in the present invention. The total amount of two or more kinds of the amine hydrohalides was within the range specified in the present invention.

Furthermore, 2.0% by weight of hydrogenated castor oil which was an ester-based thixotropic agent and 2.0% by weight of a bisamide-based thixotropic agent which was an amide-based thixotropic agent were contained in Example 12Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 12Y as metal deactivators within the range specified in the present invention. The total amount of two or more kinds of the metal deactivators was within the range specified in the present invention. 40.0% by weight of hexyl diglycol as a solvent was contained as the balance within the range specified in the present invention.

In Example 12Y in which no rosin-based resin was contained but amine hydrohalides were contained as activators in addition to a dimer acid, other organic acids, and an amine, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 13Y as an acrylic resin.

In addition, 15.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 13Y as an acrylic resin.

The total amount of the acrylic resins was within the range specified in the present invention. In Example 13Y, no rosin-based resin was contained.

Furthermore, 10.0% by weight of a dimer acid, and 3.5% by weight of succinic acid and 3.0% by weight of adipic acid, which were other organic acids, were contained in Example 13Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine, and 1.0% by weight of trans-2,3-dibromo-2-butene-1,4-diol and 1.5% by weight of triallyl isocyanurate hexabromide, which were organic halogen compounds, were contained in Example 13Y as activators within the ranges specified in the present invention. The total amount of two or more kinds of the organic halogen compounds was within the range specified in the present invention.

Furthermore, 2.0% by weight of hydrogenated castor oil which was an ester-based thixotropic agent and 2.0% by weight of a bisamide-based thixotropic agent which was an amide-based thixotropic agent were contained in Example 13Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 13Y as metal deactivators within the ranges specified in the present invention. The total amount of two or more kinds of the metal deactivators was within the range specified in the present invention. 38.0% by weight of hexyl diglycol as a solvent was contained as the balance within the range specified in the present invention.

In Example 13Y in which no rosin-based resin was contained but the organic halogen compounds were contained as activators in addition to the dimer acid, other organic acids, and the amine, a sufficient effect on the solder wettability was obtained. In addition, a sufficient effect on the compatibility was obtained. Furthermore, a sufficient effect on the temperature cycle reliability was obtained.

5.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 14Y as an acrylic resin.

In addition, 5.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 14Y as an acrylic resin.

The total amount of the acrylic resins was within the range specified in the present invention. In addition, 15.0% by weight of acrylic acid-modified, hydrogenated rosin was contained in Example 14Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 20.0% by weight of a dimer acid, and 4.0% by weight of succinic acid and 3.0% by weight of adipic acid, which were other organic acids, were contained in Example 14Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 14Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 14Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 14Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 14Y in which the amount of acrylic resins was reduced and the ratio of the weight of one kind of the acrylic resin or the total weight of two or more kinds of the acrylic resins to the weight of one kind of the rosin-based resin or the total weight of two or more kinds of the rosin-based resins was the lower limit within the range specified in the present invention, a sufficient effect on the solder wettability was obtained. In addition, a sufficient effect on the compatibility was obtained. Furthermore, a sufficient effect on the temperature cycle reliability was obtained.

7.5% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 15Y as an acrylic resin.

In addition, 5.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 15Y as an acrylic resin.

The total amount of the acrylic resins was within the range specified in the present invention. In addition, 15.0% by weight of acrylic acid-modified, hydrogenated rosin was contained in Example 15Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 17.5% by weight of a dimer acid, and 4.0% by weight of succinic acid and 3.0% by weight of adipic acid, which were other organic acids, were contained in Example 15Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 15Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 15Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 15Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 15Y in which the amount of acrylic resins was reduced and the ratio of the weight of one kind of the acrylic resin or the total weight of two or more kinds of the acrylic resins to the weight of one kind of the rosin-based resin or the total weight of two or more kinds of the rosin-based resins was the lower limit of the more preferred range specified in the present invention, a sufficient effect on the solder wettability was obtained. In addition, a sufficient effect on the compatibility was obtained. Furthermore, a sufficient effect on the temperature cycle reliability was obtained.

10.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 16Y as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 16Y as an acrylic resin.

The total amount of the acrylic resins was within the range specified in the present invention. In addition, 15.0% by weight of acrylic acid-modified, hydrogenated rosin was contained in Example 16Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 16Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 16Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 16Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 16Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

Even in Example 16Y in which the amount of acrylic resins was increased and the ratio of the weight of one kind of the acrylic resin or the total weight of two or more kinds of the acrylic resins to the weight of one kind of the rosin-based resin or the total weight of two or more kinds of the rosin-based resins exceeded the lower limit of the still more preferred range specified in the present invention, a sufficient effect on the solder wettability was obtained. In addition, a sufficient effect on the compatibility was obtained. Furthermore, a sufficient effect on the temperature cycle reliability was obtained.

13.5% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 17Y as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 17Y as an acrylic resin.

The total amount of the acrylic resins was within the range specified in the present invention. In addition, 11.5% by weight of acrylic acid-modified, hydrogenated rosin was contained in Example 17Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 17Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 17Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 17Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 17Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 17Y in which the amount of acrylic resins was increased, the amount of rosin-based resins was reduced, and the ratio of the weight of one kind of the acrylic resin or the total weight of two or more kinds of the acrylic resins to the weight of one kind of the rosin-based resin or the total weight of two or more kinds of the rosin-based resins was the lower limit of the most preferable range specified in the present invention, a sufficient effect on the solder wettability was obtained. In addition, a sufficient effect on the compatibility was obtained. Furthermore, a sufficient effect on the temperature cycle reliability was obtained.

15.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 18Y as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 18Y as an acrylic resin.

The total amount of the acrylic resins was within the range specified in the present invention. In addition, 10.0% by weight of acrylic acid-modified, hydrogenated rosin was contained in Example 18Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 18Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 18Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 18Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 18Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 18Y in which the amount of acrylic resins was increased, the amount of rosin-based resins was reduced, and the ratio of the weight of one kind of the acrylic resin or the total weight of two or more kinds of the acrylic resins to the weight of one kind of the rosin-based resin or the total weight of two or more kinds of the rosin-based resins exceeded the lower limit of the most preferable range specified in the present invention, a sufficient effect on the solder wettability was obtained. In addition, a sufficient effect on the compatibility was obtained. Furthermore, a sufficient effect on the temperature cycle reliability was obtained.

17.5% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 19Y as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 19Y as an acrylic resin.

The total amount of the acrylic resins was within the range specified in the present invention. In addition, 7.5% by weight of acrylic acid-modified, hydrogenated rosin was contained in Example 19Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 19Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 19Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 19Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 19Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 19Y in which the amount of acrylic resins was increased, the amount of rosin-based resins was reduced, and the ratio of the weight of one kind of the acrylic resin or the total weight of two or more kinds of the acrylic resins to the weight of one kind of the rosin-based resin or the total weight of two or more kinds of the rosin-based resins further exceeded the lower limit of the most preferable range specified in the present invention, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 20Y as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 20Y as an acrylic resin.

The total amount of the acrylic resins was within the range specified in the present invention. In addition, 5.0% by weight of acrylic acid-modified, hydrogenated rosin was contained in Example 20Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 20Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 20Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 20Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 20Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 20Y in which the amount of acrylic resins was increased, the amount of rosin-based resins was reduced, and the ratio of the weight of one kind of the acrylic resin or the total weight of two or more kinds of the acrylic resins to the weight of one kind of the rosin-based resin or the total weight of two or more kinds of the rosin-based resins was the upper limit of the most preferable range specified in the present invention, a sufficient effect on the solder wettability was obtained. In addition, a sufficient effect on the compatibility was obtained. Furthermore, a sufficient effect on the temperature cycle reliability was obtained.

Example 21Y was a case where plural kinds of rosin-based resins were contained. 20.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 21Y as an acrylic resin.

In addition, 3.0% by weight of acrylic acid-modified, hydrogenated rosin, 2.0% by weight of maleic acid-modified, hydrogenated rosin, 2.0% by weight of phenolmodified rosin, 2.0% by weight of disproportionated rosin, 2.0% by weight of hydrogenated rosin, 2.0% by weight of polymerized rosin, and 2.0% by weight of a rosin ester were contained in Example 21Y as rosin-based resins within the ranges specified in the present invention.

The total amount of the rosin-based resins was within the range specified in the present invention. In addition, the ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 21Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 21Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 21Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 21Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 21Y in which the rosin-based resins were compositely added, a sufficient effect on the solder wettability was obtained. In addition, a sufficient effect on the compatibility was obtained. Furthermore, a sufficient effect on the temperature cycle reliability was obtained.

Example 22Y was a case where another resin in addition to an acrylic resin and a rosin-based resin was contained. 16.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 22Y as an acrylic resin.

In addition, 15.0% by weight of acrylic acid-modified, hydrogenated rosin was contained in Example 22Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention. In addition, 4.0% by weight of a polyolefin resin was contained in Example 22 as another resin within the range specified in the present invention.

Furthermore, 10.0% by weight of a dimer acid, and, as other organic acids, 4.0% by weight of succinic acid and 3.0% by weight of adipic acid were contained in Example 22Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 22Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 22Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 22Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 22Y in which another resin was contained, a sufficient effect on the solder wettability was obtained. In addition, a sufficient effect on the compatibility was obtained. Furthermore, a sufficient effect on the temperature cycle reliability was obtained.

Example 23Y was a case where plural kinds of other resins were contained. 12.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 23Y as an acrylic resin.

In addition, 15.0% by weight of acrylic acid-modified, hydrogenated rosin was contained in Example 23Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention. In addition, 4.0% by weight of a polyolefin resin and 4.0% by weight of an acid-modified polyolefin resin were contained in Example 23Y as other resins within the ranges specified in the present invention. The total amount of other resins was within the range specified in the present invention.

Furthermore, 10.0% by weight of a dimer acid, and, as other organic acids, 4.0% by weight of succinic acid and 3.0% by weight of adipic acid were contained in Example 23Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 23Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 23Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 23Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 23Y in which other resins were compositely added, a sufficient effect on the solder wettability was obtained. In addition, a sufficient effect on the compatibility was obtained. Furthermore, a sufficient effect on the temperature cycle reliability was obtained.

Example 24Y was a case where the type of another organic acid was changed. 20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 24Y as an acrylic resin.

In addition, 15.0% by weight of acrylic acid-modified, hydrogenated rosin was contained in Example 24Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and 4.0% by weight of succinic acid and 3.0% by weight of dodecanedioic acid, which were other organic acids, were contained in Example 24Y as activators within the ranges specified in the present invention. The total amount of succinic acid and dodecanedioic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 24Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 24Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 24Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 24Y in which the types of other organic acids were changed, a sufficient effect on the solder wettability was obtained. In addition, a sufficient effect on the compatibility was obtained. Furthermore, a sufficient effect on the temperature cycle reliability was obtained.

Example 25Y was a case where no other organic acids were contained. 20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 25Y as an acrylic resin.

In addition, 15.0% by weight of acrylic acid-modified, hydrogenated rosin was contained in Example 25Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 17.0% by weight of a dimer acid was contained in Example 25Y as an activator within the range specified in the present invention without containing any other organic acids.

In addition, 1.0% by weight of 2-phenylimidazole which was an amine was contained in Example 25Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 25Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 25Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 25Y in which no other organic acids were contained, a sufficient effect on the solder wettability was obtained. In addition, a sufficient effect on the compatibility was obtained. Furthermore, a sufficient effect on the temperature cycle reliability was obtained.

Example 26Y was a case where no organic acids were contained. 20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 26Y as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 26Y as an acrylic resin.

The total amount of the acrylic resins was within the range specified in the present invention. In addition, 16.0% by weight of acrylic acid-modified, hydrogenated rosin was contained in Example 26Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

In Example 26Y, a dimer acid, a hydrogenated dimer acid, a trimer acid, a hydrogenated trimer acid, and other organic acids were absent.

In addition, 1.0% by weight of 2-phenylimidazole which was an amine was contained in Example 26Y as an activator within the range specified in the present invention. Furthermore, 2.0% by weight of trans-2,3-dibromo-2-butene-1,4-diol and 3.0% by weight of triallyl isocyanurate hexabromide, which were organic halogen compounds, were contained in Example 26Y as activators within the ranges specified in the present invention. The total amount of two or more kinds of the organic halogen compounds was within the range specified in the present invention. In addition, 0.5% by weight of ethylamine HBr and 0.5% by weight of N, N-diethylaniline HBr, which were amine hydrohalides, were contained in Example26Y as activators within the ranges specified in the present invention. The total amount of two or more kinds of the amine hydrohalides was within the range specified in the present invention.

Furthermore, 2.0% by weight of hydrogenated castor oil which was an ester-based thixotropic agent and 2.0% by weight of a bisamide-based thixotropic agent which was an amide-based thixotropic agent were contained in Example 26Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 26Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 26Y in which a dimer acid, a hydrogenated dimer acid, a trimer acid, a hydrogenated trimer acid, and other organic acids were absent, a sufficient effect on the solder wettability was obtained. In addition, a sufficient effect on the compatibility was obtained. Furthermore, a sufficient effect on the temperature cycle reliability was obtained.

In Examples 27Y to 35Y, the combination of the activators was changed. 20.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 27X as an acrylic resin.

In addition, 15.0% by weight of acrylic acid-modified, hydrogenated rosin was contained in Example 27Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid and 3.0% by weight of succinic acid, which was another organic acid, were contained in Example 27Y as activators within the ranges specified in the present invention. The total amount of the dimer acid and other organic acids was within the range specified in the present invention.

In addition, 2.0% by weight of 2-phenylimidazoline which was an amine was contained in Example 27Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 27Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 27Y as metal deactivators within the ranges specified in the present invention. The total amount of two or more kinds of the metal deactivators was within the range specified in the present invention. 43.0% by weight of hexyl diglycol as a solvent was contained as the balance within the range specified in the present invention.

In Example 27Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 28Y as an acrylic resin.

In addition, 15.0% by weight of acrylic acid-modified, hydrogenated rosin was contained in Example 28Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid and 3.0% by weight of glutaric acid, which was another organic acid, were contained in Example 28Y as activators within the ranges specified in the present invention. The total amount of the dimer acid and other organic acids was within the range specified in the present invention.

In addition, 2.0% by weight of 2-phenylimidazole which was an amine was contained in Example 28Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 28Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 28Y as metal deactivators within the ranges specified in the present invention. The total amount of two or more kinds of the metal deactivators was within the range specified in the present invention. 43.0% by weight of hexyl diglycol as a solvent was contained as the balance within the range specified in the present invention.

In Example 28Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 29Y as an acrylic resin.

In addition, 15.0% by weight of acrylic acid-modified, hydrogenated rosin was contained in Example 29Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid and 3.0% by weight of glutaric acid, which was another organic acid, were contained in Example 29Y as activators within the ranges specified in the present invention. The total amount of the dimer acid and other organic acids was within the range specified in the present invention.

In addition, 2.0% by weight of 2-phenylimidazoline which was an amine was contained in Example 29Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 29Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 29Y as metal deactivators within the ranges specified in the present invention. The total amount of two or more kinds of the metal deactivators was within the range specified in the present invention. 43.0% by weight of hexyl diglycol as a solvent was contained as the balance within the range specified in the present invention.

In Example 29Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 30Y as an acrylic resin.

In addition, 15.0% by weight of acrylic acid-modified, hydrogenated rosin was contained in Example 30Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and 1.5% by weight of succinic acid and 1.5% by weight of glutaric acid, which were other organic acids, were contained in Example 30Y as activators within the ranges specified in the present invention. The total amount of succinic acid and glutaric acid is within the range of the amount of other organic acids specified in the present invention. In addition, the total amount of the dimer acid and other organic acids was within the range specified in the present invention.

In addition, 2.0% by weight of 2-phenylimidazoline which was an amine was contained in Example 30Y as an activator within the range specified in the present invention. Furthermore, 2.0% by weight of hydrogenated castor oil

which was an ester-based thixotropic agent and 2.0% by weight of a bisamide-based thixotropic agent which was an amide-based thixotropic agent were contained in Example 30Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 30Y as metal deactivators within the ranges specified in the present invention. The total amount of two or more kinds of the metal deactivators was within the range specified in the present invention. 43.0% by weight of hexyl diglycol as a solvent was contained as the balance within the range specified in the present invention.

In Example 30Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 31Y as an acrylic resin.

In addition, 15.0% by weight of acrylic acid-modified, hydrogenated rosin was contained in Example 31Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and 2.5% by weight of succinic acid and 2.5% by weight of glutaric acid, which were other organic acids, were contained in Example 31Y as activators within the ranges specified in the present invention. The total amount of succinic acid and glutaric acid was within the range of the amount of other organic acids specified in the present invention. In addition, the total amount of the dimer acid and other organic acids was within the range specified in the present invention.

In addition, 2.0% by weight of 2-phenylimidazoline which was an amine was contained in Example 31Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 31Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 31Y as metal deactivators within the ranges specified in the present invention. The total amount of two or more kinds of the metal deactivators was within the range specified in the present invention. 41.0% by weight of hexyl diglycol as a solvent was contained as the balance within the range specified in the present invention.

In Example 31Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 32Y an acrylic resin.

In addition, 15.0% by weight of acrylic acid-modified, hydrogenated rosin was contained in Example 32Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 11.0% by weight of a dimer acid, and 4.0% by weight of succinic acid and 3.0% by weight of adipic acid, which were other organic acids, were contained in Example 32Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, no amine was contained in Example 32Y. Furthermore, 2.0% by weight of hydrogenated castor oil which was an ester-based thixotropic agent and 2.0% by weight of a bisamide-based thixotropic agent which was an amide-based thixotropic agent were contained in Example 32Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 32Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 32Y in which the combination of the activators was changed and no amine was contained, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 33Y as an acrylic resin.

In addition, 15.0% by weight of acrylic acid-modified, hydrogenated rosin was contained in Example 33Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 33Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenyl-4-methylimidazole which was an amine was contained in Example 33Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 33Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 33Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 33Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 34Y as an acrylic resin.

In addition, 15.0% by weight of acrylic acid-modified, hydrogenated rosin was contained in Example 34Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and 2.0% by weight of succinic acid and 1.0% by weight of adipic acid, which were other organic acids, were contained in Example 34Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 4.0% by weight of 2-phenylimidazole and 4.0% by weight of 2-phenyl-4-methylimidazole, which were amines, were contained in Example 34Y as activators within the ranges specified in the present invention. The total amount of two or more kinds of the amines was within the range specified in the present invention. Furthermore, 2.0% by weight of hydrogenated castor oil, which was an ester-based thixotropic agent, was contained in Example 34Y as a thixotropic agent within the range specified in the present invention.

In addition, 2.0% by weight of bis[3-(3-tert-butyl-4-hydroxy-5-methylphenyl)propionic acid] [ethylenebis (oxyethylene)], which was a hindered phenolic metal deactivator, was contained in Example 34Y as a metal deactivator within the range specified in the present invention. 40.0% by weight of hexyl diglycol as a solvent was contained as the balance within the range specified in the present invention.

In Example 34Y in which the combination of the activators was changed, a sufficient effect on the solder wettability was obtained. In addition, a sufficient effect on the compatibility was obtained. Furthermore, a sufficient effect on the temperature cycle reliability was obtained.

20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 35Y as an acrylic resin.

In addition, 15.0% by weight of acrylic acid-modified, hydrogenated rosin was contained in Example 35Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 35Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 2.0% by weight of 2-phenylimidazole, which was an amine, and 2.0% by weight of 2,3-dibromo-1,4-butanediol, which was an organic halogen compound, were contained in Example 35Y as activators within the ranges specified in the present invention. Furthermore, 2.0% by weight of hydrogenated castor oil, which was an ester-based thixotropic agent, was contained in Example 35Y as a thixotropic agent within the range specified in the present invention.

In addition, 2.0% by weight of bis[3-(3-tert-butyl-4-hydroxy-5-methylphenyl)propionic acid] [ethylenebis (oxyethylene)], which was a hindered phenolic metal deactivator, was contained in Example 35Y as a metal deactivator within the range specified in the present invention. 40.0% by weight of hexyl diglycol as a solvent was contained as the balance within the range specified in the present invention.

In Example 35Y in which the combination of the activators was changed, a sufficient effect on the solder wettability was obtained. In addition, a sufficient effect on the compatibility was obtained. Furthermore, a sufficient effect on the temperature cycle reliability was obtained.

Example 36Y was a case where the amount of thixotropic agent was changed, and 20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained as an acrylic resin.

In addition, 15.0% by weight of acrylic acid-modified, hydrogenated rosin was contained in Example 36Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 36Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 36Y as an activator within the range specified in the present invention. Furthermore, 7.0% by weight of hydrogenated castor oil, which was an ester-based thixotropic agent, was contained in Example 36Y as a thixotropic agent within the range specified in the present invention.

In addition, no metal deactivator was contained in Example 36Y, and 40.0% by weight of hexyl diglycol as a solvent was contained as the balance within the range specified in the present invention.

In Example 36Y in which the amount of the thixotropic agent was increased and no metal deactivator was contained, a sufficient effect on the solder wettability was obtained. In addition, a sufficient effect on the compatibility was obtained. Furthermore, a sufficient effect on the temperature cycle reliability was obtained.

**EP 3 950 983 A1**

Example 37Y is a case where the types of thixotropic agent and solvent were changed. 20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 37Y as an acrylic resin.

In addition, 15.0% by weight of acrylic acid-modified, hydrogenated rosin was contained in Example 37Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 37Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 37Y as an activator within the range specified in the present invention. Furthermore, 3.0% by weight of bisamide-based thixotropic agent, which was an amide-based thixotropic agent, was contained in Example 37Y as a thixotropic agent within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 37Y as metal deactivators within the ranges specified in the present invention. The total amount of two or more kinds of the metal deactivators was within the range specified in the present invention. 41.0% by weight of ethylhexyl diglycol as a solvent was contained as the balance within the range specified in the present invention.

In Example 37Y in which the types of thixotropic agent and solvent were changed, a sufficient effect on the solder wettability was obtained. In addition, a sufficient effect on the compatibility was obtained. Furthermore, a sufficient effect on the temperature cycle reliability was obtained.

Example 38Y was a case where the types of thixotropic agent, metal deactivator, and solvent were changed. 20.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 38Y as an acrylic resin.

In addition, 15.0% by weight of acrylic acid-modified, hydrogenated rosin was contained in Example 38Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Example 38Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 38Y as an activator within the range specified in the present invention. Furthermore, 3.0% by weight of bisamide-based thixotropic agent, which was an amide-based thixotropic agent, was contained in Example 38Y as a thixotropic agent within the range specified in the present invention.

In addition, 2.9% by weight of N,N'-hexamethylenebis[3-(3,5-di-tert-butyl-4-hydroxyphenyl) propanamide] which was a hindered phenolic metal deactivator and 0.1% by weight of N-(2H-1,2,4-triazol-5-yl) salicylamide which was a nitrogen compound-based metal deactivator were contained in Example 38Y as metal deactivators within the ranges specified in the present invention. The total amount of two or more kinds of the metal deactivators was within the range specified in the present invention. 41.0% by weight of ethylhexyl diglycol as a solvent was contained as the balance within the range specified in the present invention.

In Example 38Y in which the types of thixotropic agent, metal deactivator, and solvent were changed, a sufficient effect on the solder wettability was obtained. In addition, a sufficient effect on the compatibility was obtained. Furthermore, a sufficient effect on the temperature cycle reliability was obtained.

On the other hand, 25.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Comparative Example 1Y as an acrylic resin.

In addition, 20.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Comparative Example 1Y as an acrylic resin.

The total amount of the acrylic resins was within the range specified in the present invention. In Comparative Example 1Y, no rosin-based resin was contained, and, as other resins, 4.0% by weight of a polyolefin resin and 4.0% by weight of an acid-modified polyolefin resin were contained within the ranges specified in the present invention. The amount of two or more kinds of other resins was within the range specified in the present invention.

Furthermore, no activator was contained in Comparative Example 1Y, and 2.0% by weight of hydrogenated castor oil which was an ester-based thixotropic agent and 2.0% by weight of a bisamide-based thixotropic agent which was an amide-based thixotropic agent were contained as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Comparative Example 1Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Comparative Example 1Y in which no activator was contained, effects on the compatibility and the temperature cycle reliability were obtained, but no effect on the solder wettability was obtained.

In Comparative Example 2Y, no acrylic oligomer having a number average molecular weight (Mn) and a weight average molecular weight (Mw) obtained through mass spectrometry using a time-of-flight mass spectrometer (TOF-MS) within the range specified in the present invention was contained as an acrylic resin, but 20.0% by weight of a butyl acrylate polymer having a number average molecular weight (Mn) and a weight average molecular weight (Mw) of greater than 4,000 was contained as an acrylic resin.

In addition, 15.0% by weight of acrylic acid-modified, hydrogenated rosin was contained in Comparative Example 2Y as a rosin-based resin within the range specified in the present invention. The ratio of the weight of one kind of the acrylic resin or the total weight of two or more kinds of the acrylic resins to the weight of one kind of the rosin-based resin or the total weight of two or more kinds of the rosin-based resins was within the range specified in the present invention.

Furthermore, 10.0% by weight of a dimer acid, and, as other organic acids, 4.0% by weight of succinic acid and 3.0% by weight of adipic acid were contained in Comparative Example 2Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Comparative Example 2Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Comparative Example 2Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Comparative Example 2Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Comparative Example 2Y in which no acrylic oligomer having a number average molecular weight (Mn) and a weight average molecular weight (Mw) obtained through mass spectrometry using a time-of-flight mass spectrometer (TOF-MS) within the ranges specified in the present invention was contained, but an acrylic polymer having a number average molecular weight (Mn) and a weight average molecular weight (Mw) of greater than 4,000 was contained, an effect on the solder wettability was obtained, but the materials were separated into two or more components and no effect on the compatibility was obtained. In addition, the residue was not sufficiently cured, and therefore the temperature cycle reliability could not be evaluated.

In Comparative Example 3Y, neither an acrylic oligomer nor an acrylic polymer was contained as an acrylic resin. 35.0% by weight of acrylic acid-modified, hydrogenated rosin was contained in Comparative Example 3Y as a rosin-based resin beyond the range specified in the present invention.

Furthermore, 10.0% by weight of a dimer acid, and, as other organic acids, 4.0% by weight of succinic acid and 3.0% by weight of adipic acid were contained in Comparative Example 3 Y as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Comparative Example 3Y as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Comparative Example 3Y as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Comparative Example 3Y as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Comparative Example 3Y in which no acrylic resin was contained, an effect on the solder wettability was obtained. Although the residue was cured, there was a crack in the residue found, and therefore, no effect on the temperature cycle reliability was obtained. Since no acrylic resin was contained in Comparative Example 3Y, the compatibility was not evaluated.

Table 14

| Material category | | Type of material | Ex. 1Z | Ex. 2Z | Ex. 3Z | Ex. 4Z | Ex. 5Z | Ex. 6Z | Ex. 7Z |
|---|---|---|---|---|---|---|---|---|---|
| Resin | Acrylic resin | Acrylic oligomer A | 18.0 | | | | | | |
| | | Acrylic oligomer B | | 18.0 | | | | | |

(continued)

| Material category | | Type of material | Ex. 1Z | Ex. 2Z | Ex. 3Z | Ex. 4Z | Ex. 5Z | Ex. 6Z | Ex. 7Z |
|---|---|---|---|---|---|---|---|---|---|
| | | Acrylic oligomer C | | | 18.0 | | | | |
| | | Acrylic oligomer D | | | | 18.0 | | | |
| | | Acrylic oligomer E | | | | | 18.0 | | |
| | | Acrylic oligomer F | | | | | | 18.0 | |
| | | Acrylic oligomer G | | | | | | | 18.0 |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin | Acrylic acid-modified, hydrogenated rosin | 15.0 | 15.0 | 15.0 | 15.0 | 15.0 | 15.0 | 15.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | PE-PP resin | Polyethylene resin | 2.0 | 2.0 | 2.0 | 2.0 | 2.0 | 2.0 | 9.0 |
| | | Acid-modified polyethylene resin | | | | | | | |
| | | Oxidized polyethylene resin | | | | | | | |
| | | Polypropylene resin | | | | | | | |
| | | Acid-modified polypropylene resin | | | | | | | |
| | | Oxidized polypropylene resin | | | | | | | |

(continued)

| Material category | | | Type of material | Ex. 1Z | Ex. 2Z | Ex. 3Z | Ex. 4Z | Ex. 5Z | Ex. 6Z | Ex. 7Z |
|---|---|---|---|---|---|---|---|---|---|---|
| Activator | Organic acid | | Succinic acid | 4.0 | 4.0 | 4.0 | 4.0 | 4.0 | 4.0 | 4.0 |
| | | | Glutaric acid | | | | | | | |
| | | | Adipic acid | 3.0 | 3.0 | 3.0 | 3.0 | 3.0 | 3.0 | 3.0 |
| | | | Dodecanedioic acid | | | | | | | |
| | | | Dimer acid | 10.0 | 10.0 | 10.0 | 10.0 | 10.0 | 10.0 | 10.0 |
| | | | Hydrogenated dimer acid | | | | | | | |
| | | | Trimer acid | | | | | | | |
| | | | Hydrogenated trimer acid | | | | | | | |
| | Amine | | 2-Phenylimidazole | 1.0 | 1.0 | 1.0 | 1.0 | 1.0 | 1.0 | 1.0 |
| | | | 2-Phenyl-4-methylimidazole | | | | | | | |
| | | | 2-Phenylimidazoline | | | | | | | |
| | Organic halogen compound | | 2,3-Dibromo-1,4-butanediol | | | | | | | |
| | | | Tram-2,3-dibromo-2-butene-1,4-diol | | | | | | | |
| | | | Triallyl isocyanurate hexabromide | | | | | | | |
| | Amine hydrohalide | | Ethylamine HBr | | | | | | | |
| | | | N, N-Diethylaniline HBr | | | | | | | |
| Thixotropic agent | Ester-based thixotropic agent | | Hydrogenated castor oil | 2.0 | 2.0 | 2.0 | 2.0 | 2.0 | 2.0 | 2.0 |
| | Amide-based thixotropic agent | | Bisamide-based thixotropic agent | 2.0 | 2.0 | 2.0 | 2.0 | 2.0 | 2.0 | 2.0 |
| | | | Polyamide-based thixotropic agent | | | | | | | |

(continued)

| Material category | | Type of material | Ex. 1Z | Ex. 2Z | Ex. 3Z | Ex. 4Z | Ex. 5Z | Ex. 6Z | Ex. 7Z |
|---|---|---|---|---|---|---|---|---|---|
| Metal deactivator | Hindered phenolic metal deactivator | Bis[3-(3-tert-butyl-4-hydroxy-5-methylphenyl) propionic acid] [ethylenebis (oxvethylene)] | 2.9 | 2.9 | 2.9 | 2.9 | 2.9 | 2.9 | 2.9 |
| | | N,N'-Hexamethylenebis [3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | 0.1 |
| Solvent | Solvent | Hexyl diglycol | 40.0 | 40.0 | 40.0 | 40.0 | 40.0 | 40.0 | 33.0 |
| | | Ethylhexyl diglycol | | | | | | | |
| Total | | | 100.0 | 100.0 | 100.0 | 100.0 | 100.0 | 100.0 | 100.0 |
| Total amount of acrylic resins | | | 18.0 | 18.0 | 18.0 | 18.0 | 18.0 | 18.0 | 18.0 |
| Total amount of PE-PP resin | | | 2.0 | 2.0 | 2.0 | 2.0 | 2.0 | 2.0 | 9.0 |
| Acrylic resin / PE-PP resin | | | 9.0 | 9.0 | 9.0 | 9.0 | 9.0 | 9.0 | 2.0 |
| Evaluation | Solder wettability | | ○ | ○ | ○ | ○ | ○ | ○ | ○ |
| | Compatibility | | ○ | ○ | ○ | ○ | ○ | ○ | ○ |
| | Temperature cycle reliability | | ○ | ○ | ○ | ○ | ○ | ○ | ○ |
| | Comprehensive evaluation | | ○ | ○ | ○ | ○ | ○ | ○ | ○ |

(Ex.: Example)

Table 15

| Material category | Type of material | Ex. 8Z | Ex. 9Z | Ex. 10Z | Ex. 11Z | Ex. 12Z | Ex. 13Z | Ex. 14Z |
|---|---|---|---|---|---|---|---|---|
| Resin | Acrylic resin | | | | | | | |
| | Acrylic oligomer A | | | | | 19.8 | 19.8 | 19.8 |
| | Acrylic oligomer B | | | | 1.8 | | | |
| | Acrylic oligomer C | | | | 1.8 | | | |
| | Acrylic oligomer D | | | | 1.8 | | | |
| | Acrylic oligomer E | | | | 1.8 | | | |
| | Acrylic oligomer F | | | | 1.8 | | | |
| | Acrylic oligomer G | | | | 1.8 | | | |
| | Acrylic oligomer H | 18.0 | | | 1.8 | | | |
| | Acrylic oligomer I | | 18.0 | | 1.8 | | | |
| | Acrylic oligomer J | | | 18.0 | 1.8 | | | |
| | Acrylic Polymer A | | | | | | | |
| Rosin | Acrylic acid-modified, hydrogenated rosin | 15.0 | 15.0 | 15.0 | 15.0 | 15.0 | 15.0 | 15.0 |
| | Maleic acid-modified, hydrogenated rosin | | | | | | | |
| | Phenol-modified rosin | | | | | | | |
| | Disproportionated rosin | | | | | | | |
| | Hydrogenated rosin | | | | | | | |
| | Polymerized rosin | | | | | | | |
| | Rosin ester | | | | | | | |
| PE-PP resin | Polyethylene resin | 7.0 | 2.0 | 2.0 | 2.0 | 0.2 | | |
| | Acid-modified polyethylene resin | | | | | | 0.2 | |
| | Oxidized polyethylene resin | | | | | | | 0.2 |
| | Polypropylene resin | | | | | | | |
| | Acid-modified polypropylene resin | | | | | | | |
| | Oxidized polypropylene resin | | | | | | | |

| Material category | | Type of material | Ex. 8Z | Ex. 9Z | Ex. 10Z | Ex. 11Z | Ex. 12Z | Ex. 13Z | Ex. 14Z |
|---|---|---|---|---|---|---|---|---|---|
| Activator | Organic acid | Succinic acid | 4.0 | 4.0 | 4.0 | 4.0 | 4.0 | 4.0 | 4.0 |
| | | Glutaric acid | | | | | | | |
| | | Adipic acid | 3.0 | 3.0 | 3.0 | 3.0 | 3.0 | 3.0 | 3.0 |
| | | Dodecanedioic acid | | | | | | | |
| | | Dimer acid | 10.0 | 10.0 | 10.0 | 10.0 | 10.0 | 10.0 | 10.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 1.0 | 1.0 | 1.0 | 1.0 | 1.0 | 1.0 | 1.0 |
| | | 2-Phenyl-4-methylimidazole | | | | | | | |
| | | 2-Phenylimidazoline | | | | | | | |
| | Organic halogen compound | 2,3-Diromo-1,4-butanediol | | | | | | | |
| | | Trans-2,3-dibromo-2-butene-1,4-diol | | | | | | | |
| | | Triallyl isocyanurate hexabromide | | | | | | | |
| | Amine hydrohalide | Ethylamine HBr | | | | | | | |
| | | N, N-Diethylaniline HBr | | | | | | | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 | 2.9 |
| | | N,N'-Hexamethylenebis[3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | 0.1 |

(continued)

| Material category | | Ex. 8Z | Ex. 9Z | Ex. 10Z | Ex. 11Z | Ex. 12Z | Ex. 13Z | Ex. 14Z |
|---|---|---|---|---|---|---|---|---|
| Solvent | Hexyl diglycol | 35.0 | 40.0 | 40.0 | 40.0 | 40.0 | 40.0 | 40.0 |
| | Ethylhexyl diglycol | | | | | | | |
| Total | | 100.0 | 100.0 | 100.0 | 100.0 | 100.0 | 100.0 | 100.0 |
| Total amount of acrylic resins | | 18.0 | 18.0 | 18.0 | 18.0 | 19.8 | 19.8 | 19.8 |
| Total amount of PE-PP resin | | 7.0 | 2.0 | 2.0 | 2.0 | 0.2 | 0.2 | 0.2 |
| Acrylic resin / PE-PP resin | | 2.6 | 9.0 | 9.0 | 9.0 | 99.0 | 99.0 | 99.0 |
| Evaluation | Solder wettability | ○ | ○ | ○ | ○ | ○ | ○ | ○ |
| | Compatibility | ○ | ○ | ○ | ○ | ○ | ○ | ○ |
| | Temperature cycle reliability | ○ | ○ | ○ | ○ | ○ | ○ | ○ |
| | Comprehensive evaluation | ○ | ○ | ○ | ○ | ○ | ○ | ○ |

(Ex.: Example)

94

Table 16

| Material category | | Type of material | Ex. 15Z | Ex. 16Z | Ex. 17Z | Ex. 18Z | Ex. 19Z | Ex. 20Z |
|---|---|---|---|---|---|---|---|---|
| Resin | Acrylic resin | Acrylic oligomer A | 19.7 | 19.4 | 14.0 | 14.0 | | |
| | | Acrylic oligomer B | | | | | | |
| | | Acrylic oligomer C | | | | | | |
| | | Acrylic oligomer D | | | | | | |
| | | Acrylic oligomer E | | | | | | |
| | | Acrylic oligomer F | | | | | 18.0 | 18.0 |
| | | Acrylic oligomer G | | | | | 15.0 | 15.0 |
| | | Acrylic oligomer H | | | | | | |
| | | Acrylic oligomer I | | | | | | |
| | | Acrylic oligomer J | | | | | | |
| | | Acrylic Polymer A | | | | | | |
| | Rosin | Acrylic acid-modified, hydrogenated rosin | 15.0 | 15.0 | 15.0 | 15.0 | | |
| | | Maleic acid-modified, hydrogenated rosin | | | | | | |
| | | Phenol-modified rosin | | | | | | |
| | | Disproportionated rosin | | | | | | |
| | | Hydrogenated rosin | | | | | | |
| | | Polymerized rosin | | | | | | |
| | | Rosin ester | | | | | | |
| | PE-PP resin | Polyethylene resin | 0.1 | 0.1 | 3.0 | 2.0 | | |
| | | Acid-modified polyethylene resin | 0.1 | 0.1 | 3.0 | | 2.0 | 2.0 |
| | | Oxidized polyethylene resin | 0.1 | 0.1 | | | | |
| | | Polypropylene resin | | 0.1 | | | | |
| | | Acid-modified polypropylene resin | | 0.1 | | | | |
| | | Oxidized polypropylene resin | | 0.1 | | 4.0 | | |

(continued)

| Material category | | Type of material | Ex. 15Z | Ex. 16Z | Ex. 17Z | Ex. 18Z | Ex. 19Z | Ex. 20Z |
|---|---|---|---|---|---|---|---|---|
| Activator | Organic acid | Succinic acid | 4.0 | 4.0 | 4.0 | 4.0 | 2.0 | 3.5 |
| | | Glutaric acid | | | | | | |
| | | Adipic acid | 3.0 | 3.0 | 3.0 | 3.0 | 3.0 | 3.0 |
| | | Dodecanedioic acid | | | | | | |
| | | Dimer acid | 10.0 | 10.0 | 10.0 | 10.0 | 10.0 | 10.0 |
| | | Hydrogenated dimer acid | | | | | | |
| | | Trimer acid | | | | | | |
| | | Hydrogenated trimer acid | | | | | | |
| | Amine | 2-Phenylimidazole | 1.0 | 1.0 | 1.0 | 1.0 | 1.0 | 1.0 |
| | | 2-Phenyl-4-methylimidazole | | | | | | |
| | | 2-Phenylimidazoline | | | | | | |
| | Organic halogen compound | 2,3-Ditomo-1,4-butanediol | | | | | | |
| | | Trans-2,3-dibromo-2-butene-1,4-diol | | | | | | 1.0 |
| | | Triallyl isocyanurate hexabromide | | | | | | 1.5 |
| | Amine hydrohalide | Ethylamine HBr | | | | | 1.0 | |
| | | N, N-Diethylaniline HBr | | | | | 1.0 | |
| Thixotropic agent | Ester-based thixotropic agent | Hydrogenated castor oil | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 |
| | | Polyamide-based thixotropic agent | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 |
| | | N,N'-Hexamethylenebis [3-(3,5-di-tert-butyl-4-hydroxyphenyl) propanamide] | | | | | | |
| | Nitrogen compound-based metal deactivator | N-(2H-1,2,4-triazol-5-yl) salicylamide | 0.1 | 0.1 | 0.1 | 0.1 | 0.1 | 0.1 |
| Solvent | Solvent | Hexyl diglycol | 40.0 | 40.0 | 40.0 | 40.0 | 40.0 | 38.0 |
| | | Ethylhexyl diglycol | | | | | | |

(continued)

| Material category | Type of material | Ex. 15Z | Ex. 16Z | Ex. 17Z | Ex. 18Z | Ex. 19Z | Ex. 20Z |
|---|---|---|---|---|---|---|---|
| Total | | 100.0 | 100.0 | 100.0 | 100.0 | 100.0 | 100.0 |
| Total amount of acrylic resins | | 19.7 | 19.4 | 14.0 | 14.0 | 33.0 | 33.0 |
| Total amount of PE-PP resin | | 0.3 | 0.6 | 6.0 | 6.0 | 2.0 | 2.0 |
| Acrylic resin / PE-PP resin | | 65.7 | 32.3 | 2.3 | 2.3 | 16.5 | 16.5 |
| Evaluation | Solder wettability | ○ | ○ | ○ | ○ | ○ | ○ |
| | Compatibility | ○ | ○ | ○ | ○ | ○ | ○ |
| | Temperature cycle reliability | ○ | ○ | ○ | ○ | ○ | ○ |
| | Comprehensive evaluation | ○ | ○ | ○ | ○ | ○ | ○ |
| (Ex.: Example) | | | | | | | |

Table 17

| Material category | | Type of material | Ex. 21Z | Ex. 22Z | Ex. 23Z | Ex. 24Z | Ex. 25Z | Ex. 26Z | Ex. 27Z |
|---|---|---|---|---|---|---|---|---|---|
| Resin | Acrylic resin | Acrylic oligomer A | | | 18.0 | | | | |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | 5.0 | 7.5 | | 18.0 | 18.0 | 18.0 | |
| | | Acrylic oligomer G | 5.0 | 5.0 | | | | 10.0 | 21.0 |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin | Acrylic acid-modified, hydrogenated rosin | 13.0 | 13.0 | 3.0 | 15.0 | 15.0 | 16.0 | 15.0 |
| | | Maleic acid-modified, hydrogenated rosin | | | 2.0 | | | | |
| | | Phenol-modified rosin | | | 2.0 | | | | |
| | | Disproportionated rosin | | | 2.0 | | | | |
| | | Hydrogenated rosin | | | 2.0 | | | | |
| | | Polymerized rosin | | | 2.0 | | | | |
| | | Rosin ester | | | 2.0 | | | | |
| | PE-PP resin | Polyethylene resin | 2.0 | 2.0 | 2.0 | 2.0 | 2.0 | 2.0 | 2.0 |
| | | Acid-modified polyethylene resin | | | | | | | |
| | | Oxidized polyethylene resin | | | | | | | |
| | | Polypropylene resin | | | | | | | |
| | | Acid-modified polypropylene resin | | | | | | | |
| | | Oxidized polypropylene resin | | | | | | | |

(continued)

| Material category | | Type of material | Ex. 21Z | Ex. 22Z | Ex. 23Z | Ex. 24Z | Ex. 25Z | Ex. 26Z | Ex. 27Z |
|---|---|---|---|---|---|---|---|---|---|
| Activator | Organic acid | Succinic acid | 4.0 | 4.0 | 4.0 | 4.0 | 0.0 | 0.0 | 3.0 |
| | | Glutaric acid | | | | | 0.0 | 0.0 | |
| | | Adipic acid | 3.0 | 3.0 | 3.0 | | 0.0 | 0.0 | |
| | | Dodecanedioic acid | | | | 3.0 | 0.0 | 0.0 | |
| | | Dimer acid | 20.0 | 17.5 | 10.0 | 10.0 | 17.0 | 0.0 | 10.0 |
| | | Hydrogenated dimer acid | | | | | | 0.0 | |
| | | Trimer acid | | | | | | 0.0 | |
| | | Hydrogenated trimer acid | | | | | | 0.0 | |
| | Amine | 2-Phenylimidazole | 1.0 | 1.0 | 1.0 | 1.0 | 1.0 | 1.0 | |
| | | 2-Phenyl-4-methylimidazole | | | | | | | |
| | | 2-Phenylimidazoline | | | | | | | 2.0 |
| | Organic halogen compound | 2,3-Diromo-1,4-butanediol | | | | | | | |
| | | Trans-2,3-dibromo-2-butene-1,4-diol | | | | | | 2.0 | |
| | | Triallyl isocyanurate hexabromide | | | | | | 3.0 | |
| | Amine hydrohalide | Ethylamine HBr | | | | | | 0.5 | |
| | | N, N-Diethylaniline HBr | | | | | | 0.5 | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.9 | 2.9 | 2.9 | 2.9 | 2.9 | 2.9 | 2.9 |
| | | N,N'-Hexamethylenebis [3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | 0.1 |

(continued)

| Material category | | Type of material | Ex. 21Z | Ex. 22Z | Ex. 23Z | Ex. 24Z | Ex. 25Z | Ex. 26Z | Ex. 27Z |
|---|---|---|---|---|---|---|---|---|---|
| Solvent | Solvent | Hexyl diglycol | 40.0 | 40.0 | 40.0 | 40.0 | 40.0 | 40.0 | 40.0 |
| | | Ethylhexyl diglycol | | | | | | | |
| Total | | | 100.0 | 100.0 | 100.0 | 100.0 | 100.0 | 100.0 | 100.0 |
| Total amount of acrylic resins | | | 10.0 | 12.5 | 18.0 | 18.0 | 18.0 | 28.0 | 21.0 |
| Total amount of PE-PP resin | | | 2.0 | 2.0 | 2.0 | 2.0 | 2.0 | 2.0 | 2.0 |
| Acrylic resin / PE-PP resin | | | 5.0 | 6.3 | 9.0 | 9.0 | 9.0 | 14.0 | 10.5 |
| Evaluation | Solder wettability | | ○ | ○ | ○ | ○ | ○ | ○ | ○ |
| | Compatibility | | ○ | ○ | ○ | ○ | ○ | ○ | ○ |
| | Temperature cycle reliability | | ○ | ○ | ○ | ○ | ○ | ○ | ○ |
| | Comprehensive evaluation | | ○ | ○ | ○ | ○ | ○ | ○ | ○ |
| (Ex.: Example) | | | | | | | | | |

Table 18

| Material category | | Type of material | Ex. 28Z | Ex. 29Z | Ex. 30Z | Ex. 31Z | Ex. 32Z | Ex. 33Z | Ex. 34Z |
|---|---|---|---|---|---|---|---|---|---|
| Resin | Acrylic resin | Acrylic oligomer A | | | | | | | |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | | | 21.0 | 19.0 | 18.0 | 18.0 | 18.0 |
| | | Acrylic oligomer G | 21.0 | 21.0 | | | | | |
| | | Acrylic oligomer H | | | | | | | |
| | | Acrylic oligomer I | | | | | | | |
| | | Acrylic oligomer J | | | | | | | |
| | | Acrylic Polymer A | | | | | | | |
| | Rosin | Acrylic acid-modified, hydrogenated rosin | 15.0 | 15.0 | 15.0 | 15.0 | 15.0 | 15.0 | 15.0 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | PE-PP resin | Polyethylene resin | 2.0 | 2.0 | 2.0 | 2.0 | 2.0 | 2.0 | 2.0 |
| | | Acid-modified polyethylene resin | | | | | | | |
| | | Oxidized polyethylene resin | | | | | | | |
| | | Polypropylene resin | | | | | | | |
| | | Acid-modified polypropylene resin | | | | | | | |
| | | Oxidized polypropylene resin | | | | | | | |

| Material category | | Type of material | Ex. 28Z | Ex. 29Z | Ex. 30Z | Ex. 31Z | Ex. 32Z | Ex. 33Z | Ex. 34Z |
|---|---|---|---|---|---|---|---|---|---|
| Activator | Organic acid | Succinic acid | | | 1.5 | 2.5 | 4.0 | 4.0 | 2.0 |
| | | Glutaric acid | 3.0 | 3.0 | 1.5 | 2.5 | | | |
| | | Adipic acid | | | | | 3.0 | 3.0 | 1.0 |
| | | Dodecanedioic acid | | | | | | | |
| | | Dimer acid | 10.0 | 10.0 | 10.0 | 10.0 | 11.0 | 10.0 | 10.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 2.0 | | | | 0.0 | | 4.0 |
| | | 2-Phenyl-4-methylimidazole | | | | | 0.0 | 1.0 | 4.0 |
| | | 2-Phenylimidazoline | | 2.0 | 2.0 | 2.0 | 0.0 | | |
| | Organic halogen compound | 2,3-Dibromo-1,4-butanediol | | | | | | | |
| | | Trans-2,3-dibromo-2-butene-1,4-diol | | | | | | | |
| | | Triallyl isocyanurate hexabromide | | | | | | | |
| | Amine hydrohalide | Ethylamine HBr | | | | | | | |
| | | N, N-Diethylaniline HBr | | | | | | | |
| Thixotropic agent | Ester-based thixotropic agent | Hydrogenated castor oil | 2.0 | 2.0 | 2.0 | 2.0 | 2.0 | 2.0 | 2.0 |
| | Amide-based thixotropic agent | Bisamide-based thixotropic agent | 2.0 | 2.0 | 2.0 | 2.0 | 2.0 | 2.0 | |
| | | Polyamide-based thixotropic agent | | | | | | | |
| Metal deacti- | Hindered phenolic | Bis[3-(3-tert-butyl-4-hydroxy-5- | 2.9 | 2.9 | 2.9 | 2.9 | 2.9 | 2.9 | 2.0 |

EP 3 950 983 A1

102

(continued)

| Material category | | Type of material | Ex. 28Z | Ex. 29Z | Ex. 30Z | Ex. 31Z | Ex. 32Z | Ex. 33Z | Ex. 34Z |
|---|---|---|---|---|---|---|---|---|---|
| vator | metal deactivator | methylphenyl) propionic acid] [ethylenebis (oxyethylene)] | | | | | | | |
| | | N,N'-Hexamethylenebis[3-(3,5-di-tert-butyl-4-hydroxyphenyl) propanamide] | | | | | | | |
| | Nitrogen compound-based metal deactivator | N-(2H-1,2,4-triazol-5-yl) salicylamide | 0.1 | 0.1 | 0.1 | 0.1 | 0.1 | 0.1 | |
| Solvent | Solvent | Hexyl diglycol | 40.0 | 40.0 | 40.0 | 40.0 | 40.0 | 40.0 | 40.0 |
| | | Ethylhexyl diglycol | | | | | | | |
| Total | | | 100.0 | 100.0 | 100.0 | 100.0 | 100.0 | 100.0 | 100.0 |
| Total amount of acrylic resins | | | 21.0 | 21.0 | 21.0 | 19.0 | 18.0 | 18.0 | 18.0 |
| Total amount of PE-PP resin | | | 2.0 | 2.0 | 2.0 | 2.0 | 2.0 | 2.0 | 2.0 |
| Acrylic resin / PE-PP resin | | | 10.5 | 10.5 | 10.5 | 9.5 | 9.0 | 9.0 | 9.0 |
| Evaluation | Solder wettability | | ○ | ○ | ○ | ○ | ○ | ○ | ○ |
| | Compatibility | | ○ | ○ | ○ | ○ | ○ | ○ | ○ |
| | Temperature cycle reliability | | ○ | ○ | ○ | ○ | ○ | ○ | ○ |
| | Comprehensive evaluation | | ○ | ○ | ○ | ○ | ○ | ○ | ○ |
| (Ex.: Example) | | | | | | | | | |

Table 19

| Material category | | Type of material | Ex. 35Z | Ex. 36Z | Ex. 37Z | Ex. 38Z | C. Ex. 1Z | C. Ex. 2Z | C. Ex. 3Z |
|---|---|---|---|---|---|---|---|---|---|
| Resin | Acrylic resin | Acrylic oligomer A | | | | | | | |
| | | Acrylic oligomer B | | | | | | | |
| | | Acrylic oligomer C | | | | | | | |
| | | Acrylic oligomer D | | | | | | | |
| | | Acrylic oligomer E | | | | | | | |
| | | Acrylic oligomer F | 18.0 | 18.0 | 18.0 | 18.0 | 25.0 | | |
| | | Acrylic oligomer G | | | | | 20.0 | | |
| | | Acrylic oligomer H | | | | | | | |
| | | Acrylic oligomer I | | | | | | | |
| | | Acrylic oligomer J | | | | | | | |
| | | Acrylic Polymer A | | | | | | 18.0 | |
| | Rosin | Acrylic acid-modified, hydrogenated rosin | 15.0 | 15.0 | 15.0 | 15.0 | | 15.0 | 34.8 |
| | | Maleic acid-modified, hydrogenated rosin | | | | | | | |
| | | Phenol-modified rosin | | | | | | | |
| | | Disproportionated rosin | | | | | | | |
| | | Hydrogenated rosin | | | | | | | |
| | | Polymerized rosin | | | | | | | |
| | | Rosin ester | | | | | | | |
| | PE-PP resin | Polyethylene resin | 2.0 | 2.0 | 2.0 | 2.0 | 4.0 | 2.0 | 0.2 |
| | | Acid-modified polyethylene resin | | | | | | | |
| | | Oxidized polyethylene resin | | | | | | | |
| | | Polypropylene resin | | | | | | | |
| | | Acid-modified polypropylene resin | | | | | | | |
| | | Oxidized polypropylene resin | | | | | 4.0 | | |

| Material category | | Type of material | Ex. 35Z | Ex. 36Z | Ex. 37Z | Ex. 38Z | C. Ex. 1Z | C. Ex. 2Z | C. Ex. 3Z |
|---|---|---|---|---|---|---|---|---|---|
| Activator | Organic acid | Succinic acid | 4.0 | 4.0 | 4.0 | 4.0 | | 4.0 | 4.0 |
| | | Glutaric acid | | | | | | | |
| | | Adipic acid | 3.0 | 3.0 | 3.0 | 3.0 | | 3.0 | 3.0 |
| | | Dodecanedioic acid | | | | | | | |
| | | Dimer acid | 10.0 | 10.0 | 10.0 | 10.0 | | 10.0 | 10.0 |
| | | Hydrogenated dimer acid | | | | | | | |
| | | Trimer acid | | | | | | | |
| | | Hydrogenated trimer acid | | | | | | | |
| | Amine | 2-Phenylimidazole | 2.0 | 1.0 | 1.0 | 1.0 | | 1.0 | 1.0 |
| | | 2-Phenyl-4-methylimidazole | | | | | | | |
| | | 2-Phenylimidazoline | | | | | | | |
| | Organic halogen compound | 2,3-Dibromo-1,4-butanediol | 2.0 | | | | | | |
| | | Trans-2,3-dibromo-2-butene-1,4-diol | | | | | | | |
| | | Triallyl isocyanurate hexabromide | | | | | | | |
| | Amine hydrohalide | Ethylamine HBr | | | | | | | |
| | | N, N-Diethylaniline HBr | | | | | | | |
| Thixotropic agent | Ester-based thixotropic agent | Hydrogenated castor oil | 2.0 | 7.0 | | | 2.0 | 2.0 | 2.0 |
| | Amide-based thixotropic agent | Bisamide-based thixotropic agent | | | 3.0 | 3.0 | 2.0 | 2.0 | 2.0 |
| | | Polyamide-based thixotropic agent | | | | | | | |
| Metal deactivator | Hindered phenolic metal deactivator | Bis[3-(3-tert-butyl-4-hydroxy-5-methylphenyl) propionic acid] [ethylenebis (oxyethylene)] | 2.0 | | 2.9 | | 2.9 | 2.9 | 2.9 |
| | | N,N'-Hexamethylenebis[3-(3,5-di-tert-butyl-4-hydroxyphenyl) propanamide] | | | | 2.9 | | | |
| | Nitrogen compound-based metal deactivator | N-(2H-1,2,4-triazol-5-yl) salicylamide | | | 0.1 | 0.1 | 0.1 | 0.1 | 0.1 |

(continued)

| Material category | | Type of material | Ex. 35Z | Ex. 36Z | Ex. 37Z | Ex. 38Z | C. Ex. 1Z | C. Ex. 2Z | C. Ex. 3Z |
|---|---|---|---|---|---|---|---|---|---|
| Solvent | Solvent | Hexyl diglycol | 40.0 | 40.0 | | | 40.0 | 40.0 | 40.0 |
| | | Ethylhexyl diglycol | | | 41.0 | 41.0 | | | |
| Total | | | 100.0 | 100.0 | 100.0 | 100.0 | 100.0 | 100.0 | 100.0 |
| | Total amount of acrylic resins | | 18.0 | 18.0 | 18.0 | 18.0 | 45.0 | 18.0 | 0.0 |
| | Total amount of PE-PP resin | | 2.0 | 2.0 | 2.0 | 2.0 | 8.0 | 2.0 | 0.2 |
| | Acrylic resin / PE-PP resin | | 9.0 | 9.0 | 9.0 | 9.0 | 5.6 | 9.0 | 0.0 |
| Evaluation | Solder wettability | | ○ | ○ | ○ | ○ | × | ○ | ○ |
| | Compatibility | | ○ | ○ | ○ | ○ | ○ | × | - |
| | Temperature cycle reliability | | ○ | ○ | ○ | ○ | ○ | - | × |
| | Comprehensive evaluation | | ○ | ○ | ○ | ○ | × | × | × |

(Ex.: Example, C. Ex.: Comparative Example)

Examples 1Z to 10Z were cases where the type of acrylic resin was changed in the flux of the second embodiment in which either a polyethylene-based resin or a polypropylene-based resin or both a polyethylene-based resin and a polypropylene-based resin was (were) contained.

18.0% by weight of the acrylic oligomer A shown in Table 1 was contained in Example 1Z as an acrylic resin within the ranges specified in the present invention. The acrylic oligomer A was a butyl acrylate oligomer having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention.

In Example 1Z, 15.0% by weight of acrylic acid-modified, hydrogenated rosin as a rosin-based resin and 2.0% by weight of a polyethylene resin as a polyethylene•polypropylene-based resin (PE-PP resin) were further contained within the ranges specified in the present invention. The ratio (weight ratio) of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was also within the range specified in the present invention.

Furthermore, 10.0% by weight of a dimer acid, and, as other organic acids, 4.0% by weight of succinic acid and 3.0% by weight of adipic acid were contained in Example 1Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 1Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 1Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 1Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 1Z, the spread diameter of a solder satisfied the above-described Evaluation Criteria, and therefore, a sufficient effect on the solder wettability was obtained. In addition, each material was compatible without separation, and a sufficient effect on the compatibility was obtained. Furthermore, there was no crack in the residue found, and therefore, a sufficient effect on the temperature cycle reliability was obtained.

18.0% by weight of the acrylic oligomer B shown in Table 1 was contained in Example 2Z as an acrylic resin within the ranges specified in the present invention. The acrylic oligomer B was a butyl acrylate oligomer having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 2Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 2Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 2Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 2Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 2Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 2Z, a sufficient effect on the solder wettability was obtained. In addition, a sufficient effect on the compatibility was obtained. Furthermore, a sufficient effect on the temperature cycle reliability was obtained.

18.0% by weight of the acrylic oligomer C shown in Table 1 was contained in Example 3Z as an acrylic resin within the range specified in the present invention. The acrylic oligomer C was a butyl acrylate oligomer having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 3Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 3Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 3Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 3Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 3Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 3Z, a sufficient effect on the solder wettability was obtained. In addition, a sufficient effect on the compatibility was obtained. Furthermore, a sufficient effect on the temperature cycle reliability was obtained.

18.0% by weight of the acrylic oligomer D shown in Table 1 was contained in Example 4Z as an acrylic resin within the range specified in the present invention. The acrylic oligomer D was an alkyl acrylate oligomer having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 4Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 4Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 4Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 4Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 4Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 4Z, a sufficient effect on the solder wettability was obtained. In addition, a sufficient effect on the compatibility was obtained. Furthermore, a sufficient effect on the temperature cycle reliability was obtained.

18.0% by weight of the acrylic oligomer E shown in Table 1 was contained in Example 5Z as an acrylic resin within the range specified in the present invention. The acrylic oligomer E was a butyl methacrylate oligomer having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 5Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 5Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 5Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 5Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 5Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 5Z, a sufficient effect on the solder wettability was obtained. In addition, a sufficient effect on the compatibility was obtained. Furthermore, a sufficient effect on the temperature cycle reliability was obtained.

18.0% by weight of the acrylic oligomer F shown in Table 1 was contained in Example 6Z as an acrylic resin within the range specified in the present invention. The acrylic oligomer F was an isotridecanol methacrylate oligomer having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 6Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 6Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 6Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 6Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 6Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 6Z, a sufficient effect on the solder wettability was obtained. In addition, a sufficient effect on the compatibility was obtained. Furthermore, a sufficient effect on the temperature cycle reliability was obtained.

18.0% by weight of the acrylic oligomer G shown in Table 1 was contained in Example 7Z as an acrylic resin within the range specified in the present invention. The acrylic oligomer G was an acrylic acid-butyl acrylate copolymerized oligomer having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention.

In addition, 15.0% by weight of acrylic acid-modified, hydrogenated rosin as a rosin-based resin and 9.0% by weight of a polyethylene resin as a polyethylene•polypropylene-based resin (PE-PP resin) were contained in Example 7Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 7Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 7Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 7Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 7Z as metal deactivators within the ranges specified in the present invention. The total amount of two or more kinds of the metal deactivators was within the range specified in the present invention. 33.0% by weight of hexyl diglycol as a solvent was contained as the balance within the range specified in the present invention.

In Example 7Z in which the amount of polyethylene•polypropylene-based resin was increased and the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was the lower limit of the more preferable range specified in the present invention, a sufficient effect on the solder wettability was obtained. In addition, a sufficient effect on the compatibility was obtained. Furthermore, a sufficient effect on the temperature cycle reliability was obtained.

18.0% by weight of the acrylic oligomer H shown in Table 1 was contained in Example 8Z as an acrylic resin within the range specified in the present invention. The acrylic oligomer H was an acrylic acid-butyl acrylate copolymerized oligomer having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS), the number average molecular weight (Mn) and the weight average molecular weight (Mw) being within the ranges specified in the present invention.

In addition, 15.0% by weight of acrylic acid-modified, hydrogenated rosin as a rosin-based resin and 7.0% by weight of a polyethylene resin as a polyethylene•polypropylene-based resin (PE-PP resin) were contained in Example 8Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 8Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 8Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 8Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 8Z as metal deactivators within the ranges specified in the present invention. The total amount of two or more kinds of the metal deactivators was within the range specified in the present invention. 35.0% by weight of hexyl diglycol as a solvent was contained as the balance within the range specified in the present invention.

In Example 8Z in which the amount of polyethylene•polypropylene-based resin was increased and the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins exceeded the lower limit of the more preferable range specified in the present invention, a sufficient effect on the solder wettability was obtained. In addition, a sufficient effect on the compatibility was obtained. Furthermore, a sufficient effect on the temperature cycle reliability was obtained.

18.0% by weight of the acrylic oligomer I shown in Table 1 was contained in Example 9Z as an acrylic resin within the range specified in the present invention. The acrylic oligomer I was a butyl acrylate-polyethylene copolymerized oligomer having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 9Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 9Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 9Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 9Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 9Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 9Z, a sufficient effect on the solder wettability was obtained. In addition, a sufficient effect on the compatibility was obtained. Furthermore, a sufficient effect on the temperature cycle reliability was obtained.

18.0% by weight of the acrylic oligomer J shown in Table 1 was contained in Example 10Z as an acrylic resin within the range specified in the present invention. The acrylic oligomer J was a butyl acrylate-polyethylene copolymerized oligomer having a number average molecular weight (Mn) of 921.86 obtained through mass spectrometry using a time-of-flight mass spectrometer (TOF-MS) and a weight average molecular weight (Mw) of 1,047.26 obtained through mass spectrometry using a time-of-flight mass spectrometer (TOF-MS), the number average molecular weight (Mn) and the weight average molecular weight (Mw) being within the ranges specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 10Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 10Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 10Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 10Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 10Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 10Z, a sufficient effect on the solder wettability was obtained. In addition, a sufficient effect on the compatibility was obtained. Furthermore, a sufficient effect on the temperature cycle reliability was obtained.

Example 11Z was a case where plural kinds of acrylic resins were contained. 1.8% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of a butyl acrylate oligomer (acrylic oligomer B), having a number average molecular weight (Mn) of 982.40 obtained through mass spectrometry using a time-of-flight mass spectrometer (TOF-MS) and a weight average molecular weight (Mw) of 1,097.53 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of a butyl acrylate oligomer (acrylic oligomer C), having a number average molecular weight (Mn) of 1,096.51 obtained through mass spectrometry using a time-of-flight mass spectrometer (TOF-MS) and a weight average molecular weight (Mw) of 1,236.01 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of an alkyl acrylate oligomer (acrylic oligomer D), having a number average molecular weight (Mn) of 1,315.06 obtained through mass spectrometry using a time-of-flight mass spectrometer (TOF-MS) and a weight average molecular weight (Mw) of 1,507.79 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of a butyl methacrylate oligomer (acrylic oligomer E), having a number average molecular weight (Mn) of 757.93 obtained through mass spectrometry using a time-of-flight mass spectrometer (TOF-MS) and a weight average molecular weight (Mw) of 844.62 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present, was contained in Example 11Z as an acrylic resin.

In addition, 1.8% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of an acrylic acid-butyl acrylate copolymerized oligomer (acrylic oligomer H), having a number average molecular weight (Mn) of 846.23 obtained through mass spectrometry using a time-of-flight mass spectrometer (TOF-MS) and a weight average molecular weight (Mw) of 925.36 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of a butyl acrylate-polyethylene copolymerized oligomer (acrylic oligomer I) having a number average molecular weight (Mn) of 841.10 obtained through mass spectrometry using a time-of-flight mass spectrometer (TOF-MS) and a weight average molecular weight (Mw) of 914.14 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

In addition, 1.8% by weight of a butyl acrylate-polyethylene copolymerized oligomer (acrylic oligomer J), having a number average molecular weight (Mn) of 921.86 obtained through mass spectrometry using a time-of-flight mass spectrometer (TOF-MS) and a weight average molecular weight (Mw) of 1,047.26 obtained through mass spectrometry using a time-of-flight mass spectrometer (TOF-MS), the number average molecular weight (Mn) and the weight average molecular weight (Mw) being within the ranges specified in the present invention, was contained in Example 11Z as an acrylic resin.

The total amount of the acrylic resins was within the range specified in the present invention.

Hereinafter, similarly to Example 1Z, 15.0% by weight of acrylic acid-modified, hydrogenated rosin as a rosin-based resin and 2.0% by weight of a polyethylene resin as a polyethylene•polypropylene-based resin (PE-PP resin) were contained in Example 11Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 11Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 11Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 11Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example11Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 11Z in which the acrylic resins were compositely added, a sufficient effect on the solder wettability was obtained. In addition, a sufficient effect on the compatibility was obtained. Furthermore, a sufficient effect on the temperature cycle reliability was obtained.

Example 12Z was a case where the amount of polyethylene•polypropylene-based resins (PE-PP resins) was changed. 19.8% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 12Z as an acrylic resin.

In addition, 15.0% by weight of acrylic acid-modified, hydrogenated rosin as a rosin-based resin and 0.2% by weight of a polyethylene resin as a polyethylene•polypropylene-based resin (PE-PP resin) were contained in Example 12Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 12Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 12Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 12Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 12Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 12Z in which the amount of polyethylene•polypropylene-based resins (PE-PP resins) was reduced, a sufficient effect on the solder wettability was obtained. In addition, a sufficient effect on the compatibility was obtained. Furthermore, a sufficient effect on the temperature cycle reliability was obtained.

Examples 13Z and 14Z were cases where the type of polyethylene•polypropylene-based resin (PE-PP resin) was changed. 19.8% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 13Z as an acrylic resin.

In addition, 15.0% by weight of acrylic acid-modified, hydrogenated rosin as a rosin-based resin and 0.2% by weight of an acid-modified polyethylene resin as a polyethylene•polypropylene-based resin (PE-PP resin) were contained in Example 13Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 13Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 13Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 13Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 13Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 13Z in which the type of polyethylene•polypropylene-based resin (PE-PP resin) was changed, a sufficient effect on the solder wettability was obtained. In addition, a sufficient effect on the compatibility was obtained. Furthermore, a sufficient effect on the temperature cycle reliability was obtained.

19.8% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 14Z as an acrylic resin.

In addition, 15.0% by weight of acrylic acid-modified, hydrogenated rosin as a rosin-based resin and 0.2% by weight of an oxidized polyethylene resin as a polyethylene•polypropylene-based resin (PE-PP resin) were contained in Example 14Z within the ranges specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 14Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 14Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 14Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 14Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 14Z in which the type of polyethylene•polypropylene-based resin (PE-PP resin) was changed, a sufficient effect on the solder wettability was obtained. In addition, a sufficient effect on the compatibility was obtained. Furthermore, a sufficient effect on the temperature cycle reliability was obtained.

Examples 15Z to 17Z were cases where plural kinds of polyethylene•polypropylene-based resins (PE-PP resins) were contained. 19.7% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 15Z as an acrylic resin.

In addition, 15.0% by weight of acrylic acid-modified, hydrogenated rosin was contained in Example 15Z as a rosin-based resin within the range specified in the present invention. In addition, 0.1% by weight of a polyethylene resin, 0.1% by weight of an acid-modified polyethylene resin, and 0.1% by weight of an oxidized polyethylene resin were contained in Example 15Z as polyethylene•polypropylene-based resins (PE-PP resins) within the ranges specified in the present invention. The total amount of two or more kinds of the polyethylene•polypropylene-based resins (PE-PP resins) was within the range specified in the present invention. In addition, the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 15Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 15Z as an activator within the range specified in the present invention. Furthermore, 2.0% by weight of hydrogenated castor oil

which was an ester-based thixotropic agent and 2.0% by weight of a bisamide-based thixotropic agent which was an amide-based thixotropic agent were contained in Example 15Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 15Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 15Z in which the polyethylene•polypropylene-based resins (PE-PP resins) were compositely added, a sufficient effect on the solder wettability was obtained. In addition, a sufficient effect on the compatibility was obtained. Furthermore, a sufficient effect on the temperature cycle reliability was obtained.

19.4% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 16Z as an acrylic resin.

In addition, 15.0% by weight of acrylic acid-modified, hydrogenated rosin was contained in Example 16Z as a rosin-based resin within the range specified in the present invention. Furthermore, 0.1 % by weight of a polyethylene resin, 0.1 % by weight of an acid-modified polyethylene resin, 0.1% by weight of an oxidized polyethylene resin, 0.1% by weight of a polypropylene resin, 0.1% by weight of an acid-modified polypropylene resin, and 0.1 % by weight of an oxidized polypropylene resin were contained in Example 16Z as polyethylene•polypropylene-based resins (PE-PP resins) within the ranges specified in the present invention. The total amount of two or more kinds of the polyethylene•polypropylene-based resins (PE-PP resins) was within the range specified in the present invention. In addition, the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 16Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 16Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 16Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 16Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 16Z in which the polyethylene•polypropylene-based resins (PE-PP resins) were compositely added, a sufficient effect on the solder wettability was obtained. In addition, a sufficient effect on the compatibility was obtained. Furthermore, a sufficient effect on the temperature cycle reliability was obtained.

14.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight

average molecular weight (Mw) being within the ranges specified in the present invention, was contained in Example 17Z as an acrylic resin.

In addition, 15.0% by weight of acrylic acid-modified, hydrogenated rosin was contained in Example 17Z as a rosin-based resin within the range specified in the present invention. In addition, 3.0% by weight of a polyethylene resin and 3.0% by weight of an acid-modified polyethylene resin were contained in Example 17Z as polyethylene•polypropylene-based resins (PE-PP resins) within the ranges specified in the present invention. The total amount of two or more kinds of the polyethylene•polypropylene-based resins (PE-PP resins) was within the range specified in the present invention. In addition, the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 17Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 17Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 17Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 17Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 17Z in which the polyethylene•polypropylene-based resins (PE-PP resins) were compositely added, a sufficient effect on the solder wettability was obtained. In addition, a sufficient effect on the compatibility was obtained. Furthermore, a sufficient effect on the temperature cycle reliability was obtained.

14.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 18Z as an acrylic resin.

In addition, 15.0% by weight of acrylic acid-modified, hydrogenated rosin was contained in Example 18Z as a rosin-based resin within the range specified in the present invention. Furthermore, 2.0% by weight of a polyethylene resin and 4.0% by weight of an oxidized polypropylene resin were contained in Example 18Z as polyethylene•polypropylene-based resins (PE-PP resins) within the ranges specified in the present invention. The total amount of two or more kinds of the polyethylene•polypropylene-based resins (PE-PP resins) was within the range specified in the present invention. In addition, the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 18Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 18Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 18Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 18Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 18Z in which the polyethylene•polypropylene-based resins (PE-PP resins) were compositely added, a sufficient effect on the solder wettability was obtained. In addition, a sufficient effect on the compatibility was obtained. Furthermore, a sufficient effect on the temperature cycle reliability was obtained.

18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 19Z as an acrylic resin.

In addition, 15.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 19Z as an acrylic resin.

The total amount of the acrylic resins was within the range specified in the present invention. In Example 19Z, no rosin-based resin was contained. In Example 19Z, 2.0% by weight of an acid-modified polyethylene resin was contained as a polyethylene•polypropylene-based resin (PE-PP resin) within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and 2.0% by weight of succinic acid and 3.0% by weight of adipic acid, which were other organic acids, were contained in Example 19Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine, and 1.0% by weight of ethylamine HBr and 1.0% by weight of N, N-diethylaniline HBr, which were amine hydrohalides, were contained in Example 19Z as activators within the ranges specified in the present invention. The total amount of two or more kinds of the amine hydrohalides was within the range specified in the present invention.

Furthermore, 2.0% by weight of hydrogenated castor oil which was an ester-based thixotropic agent and 2.0% by weight of a bisamide-based thixotropic agent which was an amide-based thixotropic agent were contained in Example 19Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 19Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 19Z in which no rosin-based resin was contained, and the amine hydrohalides were contained as activators in addition to a dimer acid, other organic acids, and an amine, a sufficient effect on the solder wettability was obtained. In addition, a sufficient effect on the compatibility was obtained. Furthermore, a sufficient effect on the temperature cycle reliability was obtained.

18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 20Z as an acrylic resin.

In addition, 15.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 20Z as an acrylic resin.

The total amount of the acrylic resins was within the range specified in the present invention. In Example 20Z, no rosin-based resin was contained. In Example 20Z, 2.0% by weight of an acid-modified polyethylene resin was contained as a polyethylene•polypropylene-based resin (PE-PP resin) within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and 3.5% by weight of succinic acid and 3.0% by weight of adipic acid, which were other organic acids, were contained in Example 20Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine, and 1.0% by weight of trans-2,3-dibromo-2-butene-1,4-diol and 1.5% by weight of triallyl isocyanurate hexabromide, which were organic halogen compounds, were contained in Example 20Z as activators within the ranges specified in the present invention. The total amount of two or more kinds of the organic halogen compounds was within the range specified in the present invention.

Furthermore, 2.0% by weight of hydrogenated castor oil which was an ester-based thixotropic agent and 2.0% by weight of a bisamide-based thixotropic agent which was an amide-based thixotropic agent were contained in Example 20Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 20Z as metal deactivators within the ranges specified in the present invention. The total amount of two or more kinds of the metal deactivators was within the range specified in the present invention. 38.0% by weight of hexyl diglycol as a solvent was contained as the balance within the range specified in the present invention.

In Example 20Z in which no rosin-based resin was contained, and the organic halogen compounds were contained as activators in addition to a dimer acid, other organic acids, and an amine, a sufficient effect on the solder wettability was obtained. In addition, a sufficient effect on the compatibility was obtained. Furthermore, a sufficient effect on the temperature cycle reliability was obtained.

5.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 21Z as an acrylic resin.

In addition, 5.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 21Z as an acrylic resin.

The total amount of the acrylic resins was within the range specified in the present invention. In addition, 13.0% by weight of acrylic acid-modified, hydrogenated rosin was contained in Example 21Z as a rosin-based resin within the range specified in the present invention. In addition, 2.0% by weight of a polyethylene resin as a polyethylene•polypropylene-based resin (PE-PP resin) was contained in Example 21Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 20.0% by weight of a dimer acid, and 4.0% by weight of succinic acid and 3.0% by weight of adipic acid, which were other organic acids, were contained in Example 21Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 21Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 21Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 21Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 21Z in which the amount of the acrylic resins was the lower limit of the still more preferable range defined in the present invention, a sufficient effect on the solder wettability was obtained. In addition, a sufficient effect on the compatibility was obtained. Furthermore, a sufficient effect on the temperature cycle reliability was obtained.

7.5% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 22Z as an acrylic resin.

In addition, 5.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 22Z as an acrylic resin.

The total amount of the acrylic resins was within the range specified in the present invention. In addition, 13.0% by weight of acrylic acid-modified, hydrogenated rosin was contained in Example 22Z as a rosin-based resin within the range specified in the present invention. In addition, 2.0% by weight of a polyethylene resin as a polyethylene•polypropylene-based resin (PE-PP resin) was contained in Example 22Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 17.5% by weight of a dimer acid, and 4.0% by weight of succinic acid and 3.0% by weight of adipic acid, which were other organic acids, were contained in Example 22Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 22Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 22Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 22Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 22Z in which the amount of acrylic resins was reduced, a sufficient effect on the solder wettability was obtained. In addition, a sufficient effect on the compatibility was obtained. Furthermore, a sufficient effect on the temperature cycle reliability was obtained.

Example 23Z was a case where plural kinds of rosin-based resins were contained. 18.0% by weight of a butyl acrylate oligomer (acrylic oligomer A) having a number average molecular weight (Mn) of 853.86 obtained through mass spectrometry using a time-of-flight mass spectrometer (TOF-MS) and a weight average molecular weight (Mw) of 900.42 obtained through mass spectrometry using a time-of-flight mass spectrometer (TOF-MS), the number average molecular weight (Mn) and the weight average molecular weight (Mw) being within the ranges specified in the present invention, was contained in Example 23Z as an acrylic resin.

In addition, 3.0% by weight of acrylic acid-modified, hydrogenated rosin, 2.0% by weight of maleic acid-modified, hydrogenated rosin, 2.0% by weight of phenol-modified rosin, 2.0% by weight of disproportionated rosin, 2.0% by weight of hydrogenated rosin, 2.0% by weight of polymerized rosin, and 2.0% by weight of a rosin ester were contained in Example 23Z as rosin-based resins within the ranges specified in the present invention.

The total amount of the rosin-based resins was within the range specified in the present invention. In addition, 2.0% by weight of a polyethylene resin as a polyethylene•polypropylene-based resin (PE-PP resin) were contained in Example 23Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 23Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 23Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 23Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 23Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 23Z in which the rosin-based resins were compositely added, a sufficient effect on the solder wettability was obtained. In addition, a sufficient effect on the compatibility was obtained. Furthermore, a sufficient effect on the temperature cycle reliability was obtained.

Example 24Z was a case where the type of another organic acid was changed. 18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 24Z as an acrylic resin.

In addition, 15.0% by weight of acrylic acid-modified, hydrogenated rosin was contained in Example 24Z as a rosin-based resin within the range specified in the present invention. In addition, 2.0% by weight of a polyethylene resin as a polyethylene·polypropylene-based resin (PE-PP resin) were contained in Example 24Z within the range specified in the present invention. The ratio of the weight of one kind of the acrylic resin or the total weight of two or more kinds of the acrylic resins to the weight of one kind of the polyethylene·polypropylene-based resin or the total weight of two or more kinds of the polyethylene·polypropylene-based resins was within the range specified in the present invention.

Furthermore, 10.0% by weight of a dimer acid, and 4.0% by weight of succinic acid and 3.0% by weight of dodecanedioic acid, which were other organic acids, were contained in Example 24Z as activators within the ranges specified in the present invention. The total amount of succinic acid and dodecanedioic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 24Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 24Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 24Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 24Z in which the types of other organic acids were changed, a sufficient effect on the solder wettability was obtained. In addition, a sufficient effect on the compatibility was obtained. Furthermore, a sufficient effect on the temperature cycle reliability was obtained.

Example 25Z was a case where no other organic acids were contained. 18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 25Z as an acrylic resin.

In addition, 15.0% by weight of acrylic acid-modified, hydrogenated rosin was contained in Example 25Z as a rosin-based resin within the range specified in the present invention. In addition, 2.0% by weight of a polyethylene resin as a polyethylene·polypropylene-based resin (PE-PP resin) were contained in Example 25Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 17.0% by weight of a dimer acid was contained in Example 25Z as an activator within the range specified in the present invention without containing any other organic acids.

In addition, 1.0% by weight of 2-phenylimidazole which was an amine was contained in Example 25Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 25Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 25Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 25Z in which no other organic acids were contained, a sufficient effect on the solder wettability was obtained. In addition, a sufficient effect on the compatibility was obtained. Furthermore, a sufficient effect on the temperature cycle reliability was obtained.

Example 26Z was a case where no organic acids were contained. 18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 26Z as an acrylic resin.

In addition, 10.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 26Z as an acrylic resin.

The total amount of the acrylic resins was within the range specified in the present invention. In addition, 16.0% by weight of acrylic acid-modified, hydrogenated rosin was contained in Example 26Z as a rosin-based resin within the range specified in the present invention. In addition, 2.0% by weight of a polyethylene resin as a polyethylene•polypropylene-based resin (PE-PP resin) were contained in Example 26Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

In Example 26Z, neither a dimer acid, a hydrogenated dimer acid, a trimer acid, a hydrogenated trimer acid, nor other organic acids were contained.

In addition, 1.0% by weight of 2-phenylimidazole which was an amine was contained in Example 26Z as an activator within the range specified in the present invention. Furthermore, 2.0% by weight of trans-2,3-dibromo-2-butene-1,4-diol and 3.0% by weight of triallyl isocyanurate hexabromide, which were organic halogen compounds, were contained in Example 26Z as activators within the ranges specified in the present invention. The total amount of two or more kinds of the organic halogen compounds was within the range specified in the present invention. In addition, 0.5% by weight of ethylamine HBr and 0.5% by weight of N, N-diethylaniline HBr, which were amine hydrohalides, were contained in Example 26Z as activators within the ranges specified in the present invention. The total amount of two or more kinds of the amine hydrohalides was within the range specified in the present invention.

Furthermore, 2.0% by weight of hydrogenated castor oil which was an ester-based thixotropic agent and 2.0% by weight of a bisamide-based thixotropic agent which was an amide-based thixotropic agent were contained in Example 26Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 26Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 26Z in which neither a dimer acid, a hydrogenated dimer acid, a trimer acid, a hydrogenated trimer acid, nor other organic acids were contained, a sufficient effect on the solder wettability was obtained. In addition, a sufficient effect on the compatibility was obtained. Furthermore, a sufficient effect on the temperature cycle reliability was obtained.

In Examples 27Z to 35Z, the combination of the activators was changed. 21.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 27Z as an acrylic resin.

In addition, 15.0% by weight of acrylic acid-modified, hydrogenated rosin was contained in Example 27Z as a rosin-based resin within the range specified in the present invention. In addition, 2.0% by weight of a polyethylene resin as a polyethylene•polypropylene-based resin (PE-PP resin) was contained in Example 27Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid and 3.0% by weight of succinic acid, which was another organic acid, were contained in Example 27Z as activators within the ranges specified in the present invention. The total amount of the dimer acid and other organic acids was within the range specified in the present invention.

In addition, 2.0% by weight of 2-phenylimidazoline which was an amine was contained in Example 27Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 27Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 27Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 27Z in which the combination of the activators was changed, a sufficient effect on the solder wettability was obtained. In addition, a sufficient effect on the compatibility was obtained. Furthermore, a sufficient effect on the temperature cycle reliability was obtained.

21.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 28Z as an acrylic resin.

In addition, 15.0% by weight of acrylic acid-modified, hydrogenated rosin was contained in Example 28Z as a rosin-based resin within the range specified in the present invention. In addition, 2.0% by weight of a polyethylene resin as a polyethylene•polypropylene-based resin (PE-PP resin) was contained in Example 28Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid and 3.0% by weight of glutaric acid, which was another organic acid, were contained in Example 28Z as activators within the ranges specified in the present invention. The total amount of the dimer acid and other organic acids was within the range specified in the present invention.

In addition, 2.0% by weight of 2-phenylimidazole which was an amine was contained in Example 28Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 28Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 28Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 28Z in which the combination of the activators was changed, a sufficient effect on the solder wettability was obtained. In addition, a sufficient effect on the compatibility was obtained. Furthermore, a sufficient effect on the temperature cycle reliability was obtained.

21.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Example 29Z as an acrylic resin.

In addition, 15.0% by weight of acrylic acid-modified, hydrogenated rosin was contained in Example 29Z as a rosin-based resin within the range specified in the present invention. In addition, 2.0% by weight of a polyethylene resin as a polyethylene•polypropylene-based resin (PE-PP resin) were contained in Example 29Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid and 3.0% by weight of glutaric acid, which was another organic acid, were contained in Example 29Z as activators within the ranges specified in the present invention. The total amount of the dimer acid and other organic acids was within the range specified in the present invention.

In addition, 2.0% by weight of 2-phenylimidazoline which was an amine was contained in Example 29Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 29Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 29Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 29Z in which the combination of the activators was changed, a sufficient effect on the solder wettability was obtained. In addition, a sufficient effect on the compatibility was obtained. Furthermore, a sufficient effect on the temperature cycle reliability was obtained.

21.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 30Z as an acrylic resin.

In addition, 15.0% by weight of acrylic acid-modified, hydrogenated rosin was contained in Example 30Z as a rosin-based resin within the range specified in the present invention. In addition, 2.0% by weight of a polyethylene resin as a polyethylene•polypropylene-based resin (PE-PP resin) were contained in Example 30Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and 1.5% by weight of succinic acid and 1.5% by weight of glutaric acid, which were other organic acids, were contained in Example 30Z as activators within the ranges specified in the present invention. The total amount of succinic acid and glutaric acid was within the range of the amount of other organic acids specified in the present invention. In addition, the total amount of the dimer acid and other organic acids was within the range specified in the present invention.

In addition, 2.0% by weight of 2-phenylimidazoline which was an amine was contained in Example 30Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 30Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 30Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 30Z in which the combination of the activators was changed, a sufficient effect on the solder wettability was obtained. In addition, a sufficient effect on the compatibility was obtained. Furthermore, a sufficient effect on the temperature cycle reliability was obtained.

19.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 31Z as an acrylic resin.

In addition, 15.0% by weight of acrylic acid-modified, hydrogenated rosin was contained in Example 31Z as a rosin-based resin within the range specified in the present invention. In addition, 2.0% by weight of a polyethylene resin as a polyethylene•polypropylene-based resin (PE-PP resin) was contained in Example 31Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and 2.5% by weight of succinic acid and 2.5% by weight of glutaric acid, which were other organic acids, were contained in Example 31Z as activators within the ranges specified in the present invention. The total amount of succinic acid and glutaric acid was within the range of the amount of other organic acids specified in the present invention. In addition, the total amount of the dimer acid and other organic acids was within the range specified in the present invention.

In addition, 2.0% by weight of 2-phenylimidazoline which was an amine was contained in Example 31Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 31Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 31Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 31Z in which the combination of the activators was changed, a sufficient effect on the solder wettability was obtained. In addition, a sufficient effect on the compatibility was obtained. Furthermore, a sufficient effect on the temperature cycle reliability was obtained.

18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 32Z as an acrylic resin.

In addition, 15.0% by weight of acrylic acid-modified, hydrogenated rosin was contained in Example 32Z as a rosin-based resin within the range specified in the present invention. In addition, 2.0% by weight of a polyethylene resin as a polyethylene•polypropylene-based resin (PE-PP resin) were contained in Example 32Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 11.0% by weight of a dimer acid, and 4.0% by weight of succinic acid and 3.0% by weight of adipic acid, which were other organic acids, were contained in Example 32Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, no amine was contained in Example 32Z. Furthermore, 2.0% by weight of hydrogenated castor oil which was an ester-based thixotropic agent and 2.0% by weight of a bisamide-based thixotropic agent which was an amide-based thixotropic agent were contained in Example 32Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Example 32Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 32Z in which the combination of the activators was changed and no amine was contained, a sufficient effect on the solder wettability was obtained. In addition, a sufficient effect on the compatibility was obtained. Furthermore, a sufficient effect on the temperature cycle reliability was obtained.

18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 33Z as an acrylic resin.

In addition, 15.0% by weight of acrylic acid-modified, hydrogenated rosin was contained in Example 33Z as a rosin-based resin within the range specified in the present invention. In addition, 2.0% by weight of a polyethylene resin as a polyethylene•polypropylene-based resin (PE-PP resin) were contained in Example 33Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 33Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenyl-4-methylimidazole which was an amine was contained in Example 33Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Example 33Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 33Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Example 33Z in which the combination of the activators was changed, a sufficient effect on the solder wettability was obtained. In addition, a sufficient effect on the compatibility was obtained. Furthermore, a sufficient effect on the temperature cycle reliability was obtained.

18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 34Z as an acrylic resin.

In addition, 15.0% by weight of acrylic acid-modified, hydrogenated rosin was contained in Example 34Z as a rosin-based resin within the range specified in the present invention. In addition, 2.0% by weight of a polyethylene resin as a polyethylene•polypropylene-based resin (PE-PP resin) was contained in Example 34Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and 2.0% by weight of succinic acid and 1.0% by weight of adipic acid, which were other organic acids, were contained in Example 34Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 4.0% by weight of 2-phenylimidazole and 4.0% by weight of 2-phenyl-4-methylimidazole, which were amines, were contained in Example 34Z as activators within the ranges specified in the present invention. The total amount of two or more kinds of the amines was within the range specified in the present invention. Furthermore, 2.0% by weight of hydrogenated castor oil, which was an ester-based thixotropic agent, was contained in Example 34Z as a thixotropic agent within the range specified in the present invention.

In addition, 2.0% by weight of bis[3-(3-tert-butyl-4-hydroxy-5-methylphenyl)propionic acid] [ethylenebis (oxyethylene)], which was a hindered phenolic metal deactivator, was contained in Example 34Z as a metal deactivator within the range specified in the present invention. 40.0% by weight of hexyl diglycol as a solvent was contained as the balance within the range specified in the present invention.

In Example 34Z in which the combination of the activators was changed, a sufficient effect on the solder wettability was obtained. In addition, a sufficient effect on the compatibility was obtained. Furthermore, a sufficient effect on the temperature cycle reliability was obtained.

18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 35Z as an acrylic resin.

In addition, 15.0% by weight of acrylic acid-modified, hydrogenated rosin was contained in Example 35Z as a rosin-based resin within the range specified in the present invention. In addition, 2.0% by weight of a polyethylene resin as a polyethylene·polypropylene-based resin (PE-PP resin) was contained in Example 35Z within the range specified in the present invention. The ratio of the weight of one kind of the acrylic resin or the total weight of two or more kinds of the acrylic resins to the weight of one kind of the polyethylene·polypropylene-based resin or the total weight of two or more kinds of the polyethylene·polypropylene-based resins was within the range specified in the present invention.

Furthermore, 10.0% by weight of a dimer acid, and, as other organic acids, 4.0% by weight of succinic acid and 3.0% by weight of adipic acid were contained in Example 35Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 2.0% by weight of 2-phenylimidazole, which was an amine, and 2.0% by weight of 2,3-dibromo-1,4-butanediol, which was an organic halogen compound, were contained in Example 35Z as activators within the ranges specified in the present invention. Furthermore, 2.0% by weight of hydrogenated castor oil, which was an ester-based thixotropic agent, was contained in Example 35Z as a thixotropic agent within the range specified in the present invention.

In addition, 2.0% by weight of bis[3-(3-tert-butyl-4-hydroxy-5-methylphenyl)propionic acid] [ethylenebis (oxyethylene)], which was a hindered phenolic metal deactivator, was contained in Example 35Z as a metal deactivator within the range specified in the present invention. 40.0% by weight of hexyl diglycol as a solvent was contained as the balance within the range specified in the present invention.

In Example 35Z in which the combination of the activators was changed, a sufficient effect on the solder wettability was obtained. In addition, a sufficient effect on the compatibility was obtained. Furthermore, a sufficient effect on the temperature cycle reliability was obtained.

Example 36Z was a case where the amount of thixotropic agent was changed, and 18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained as an acrylic resin.

In addition, 15.0% by weight of acrylic acid-modified, hydrogenated rosin was contained in Example 36Z as a rosin-based resin within the range specified in the present invention. In addition, 2.0% by weight of a polyethylene resin as a polyethylene·polypropylene-based resin (PE-PP resin) was contained in Example 36Z within the range specified in the present invention. The ratio of the weight of one kind of the acrylic resin or the total weight of two or more kinds of the acrylic resins to the weight of one kind of the polyethylene·polypropylene-based resin or the total weight of two or more kinds of the polyethylene·polypropylene-based resins was within the range specified in the present invention.

Furthermore, 10.0% by weight of a dimer acid, and, as other organic acids, 4.0% by weight of succinic acid and 3.0% by weight of adipic acid were contained in Example 36Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 36Z as an activator within the range specified in the present invention. Furthermore, 7.0% by weight of hydrogenated castor oil,

which was an ester-based thixotropic agent, was contained in Example 36Z as a thixotropic agent within the range specified in the present invention.

In addition, no metal deactivator was contained in Example 36Z, and 40.0% by weight of hexyl diglycol as a solvent was contained as the balance within the range specified in the present invention.

In Example 36Z in which the amount of the thixotropic agent was increased and no metal deactivator was contained, a sufficient effect on the solder wettability was obtained. In addition, a sufficient effect on the compatibility was obtained. Furthermore, a sufficient effect on the temperature cycle reliability was obtained.

Example 37Z was a case where the types of thixotropic agent and solvent were changed. 18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 37Z as an acrylic resin.

In addition, 15.0% by weight of acrylic acid-modified, hydrogenated rosin was contained in Example 37Z as a rosin-based resin within the range specified in the present invention. In addition, 2.0% by weight of a polyethylene resin as a polyethylene•polypropylene-based resin (PE-PP resin) was contained in Example 37Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 37Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 37Z as an activator within the range specified in the present invention. Furthermore, 3.0% by weight of bisamide-based thixotropic agent, which was an amide-based thixotropic agent, was contained in Example 37Z as a thixotropic agent within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1 % by weight of N-(2H-1,2,4-triazol-5-yl) salicylamide which was a nitrogen compound-based metal deactivator were contained in Example 37Z as metal deactivators within the ranges specified in the present invention. The total amount of two or more kinds of the metal deactivators was within the range specified in the present invention. 41.0% by weight of ethylhexyl diglycol as a solvent was contained as the balance within the range specified in the present invention.

In Example 37Z in which the types of thixotropic agent and solvent were changed, a sufficient effect on the solder wettability was obtained. In addition, a sufficient effect on the compatibility was obtained. Furthermore, a sufficient effect on the temperature cycle reliability was obtained.

Example 38Z was a case where the types of a thixotropic agent, metal deactivators, and a solvent were changed. 18.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Example 38Z as an acrylic resin.

In addition, 15.0% by weight of acrylic acid-modified, hydrogenated rosin was contained in Example 38Z as a rosin-based resin within the range specified in the present invention. In addition, 2.0% by weight of a polyethylene resin as a polyethylene•polypropylene-based resin (PE-PP resin) was contained in Example 38Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Example 38Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Example 38Z as an activator within the range specified in the present invention. Furthermore, 3.0% by weight of bisamide-based thixotropic agent, which was an amide-based thixotropic agent, was contained in Example 38Z as a thixotropic agent within the range specified in the present invention.

In addition, 2.9% by weight of N,N'-hexamethylenebis[3-(3,5-di-tert-butyl-4-hydroxyphenyl) propanamide] which was a hindered phenolic metal deactivator and 0.1% by weight of N-(2H-1,2,4-triazol-5-yl) salicylamide which was a nitrogen compound-based metal deactivator were contained in Example 38Z as metal deactivators within the ranges specified in the present invention. The total amount of two or more kinds of the metal deactivators was within the range specified in the present invention. 41.0% by weight of ethylhexyl diglycol as a solvent was contained as the balance within the range specified in the present invention.

In Example 38Z in which the types of the thixotropic agent, metal deactivators, and solvent were changed, a sufficient effect on the solder wettability was obtained. In addition, a sufficient effect on the compatibility was obtained. Furthermore, a sufficient effect on the temperature cycle reliability was obtained.

On the other hand, 25.0% by weight of an isotridecanol methacrylate oligomer (acrylic oligomer F), having a number average molecular weight (Mn) of 1,028.82 obtained through mass spectrometry using a time-of-flight mass spectrometer (TOF-MS) and a weight average molecular weight (Mw) of 1,138.20 obtained through mass spectrometry using a time-of-flight mass spectrometer (TOF-MS), the number average molecular weight (Mn) and the weight average molecular weight (Mw) being within the ranges specified in the present invention, was contained in Comparative Example 1Z as an acrylic resin.

In addition, 20.0% by weight of an acrylic acid-butyl acrylate copolymerized oligomer (acrylic oligomer G) having a number average molecular weight (Mn) of 518.79 obtained through mass spectrometry using a time-of-flight mass spectrometer (TOF-MS) and a weight average molecular weight (Mw) of 625.29 obtained through mass spectrometry using a time-of-flight mass spectrometer (TOF-MS), the number average molecular weight (Mn) and the weight average molecular weight (Mw) being within the ranges specified in the present invention, was contained in Comparative Example 1Z as an acrylic resin.

The total amount of the acrylic resins was within the range specified in the present invention. In Comparative Example 1Z, no rosin-based resin was contained, and 4.0% by weight of a polyethylene resin and 4.0% by weight of an oxidized polypropylene resin were contained as polyethylene•polypropylene-based resins (PE-PP resins) within the ranges specified in the present invention. The total amount of two or more kinds of the polyethylene•polypropylene-based resins (PE-PP resins) was within the range specified in the present invention. In addition, the ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

In Comparative Example 1Z, no activator was contained, and 2.0% by weight of hydrogenated castor oil which was an ester-based thixotropic agent and 2.0% by weight of a bisamide-based thixotropic agent which was an amide-based thixotropic agent were contained as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Comparative Example 1Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Comparative Example 1Z in which no activator was contained, effects on the compatibility and the temperature cycle reliability were obtained, but no effect on the solder wettability was obtained.

In Comparative Example 2Z, no acrylic oligomer having a number average molecular weight (Mn) and a weight average molecular weight (Mw) obtained through mass spectrometry using a time-of-flight mass spectrometer (TOF-MS) within the range specified in the present invention was contained as an acrylic resin, but 18.0% by weight of a butyl acrylate polymer having a number average molecular weight (Mn) and a weight average molecular weight (Mw) of greater than 4,000 was contained as an acrylic polymer.

In addition, 15.0% by weight of acrylic acid-modified, hydrogenated rosin was contained in Comparative Example 2Z as a rosin-based resin within the range specified in the present invention. In addition, 2.0% by weight of a polyethylene resin as a polyethylene•polypropylene-based resin (PE-PP resin) were contained in Comparative Example 2Z within the range specified in the present invention. The ratio of the weight of one kind of the acrylic resin or the total weight of two or more kinds of the acrylic resins to the weight of one kind of the polyethylene•polypropylene-based resin or the total weight of two or more kinds of the polyethylene•polypropylene-based resins was within the range specified in the present invention.

Furthermore, 10.0% by weight of a dimer acid, and, as other organic acids, 4.0% by weight of succinic acid and 3.0% by weight of adipic acid were contained in Comparative Example 2Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Comparative Example 2Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Comparative Example 2Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Comparative Example 2Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Comparative Example 2Z in which no acrylic oligomer having a number average molecular weight (Mn) and a weight average molecular weight (Mw) obtained through mass spectrometry using a time-of-flight mass spectrometer (TOF-MS) within the range specified in the present invention was contained, but an acrylic polymer having a number average molecular weight (Mn) and a weight average molecular weight (Mw) of greater than 4,000 was contained, an effect on the solder wettability was obtained, but the materials were separated into two or more components and no effect on the compatibility was obtained. In addition, the residue was not sufficiently cured, and therefore the temperature cycle reliability could not be evaluated.

In Comparative Example 3Z, neither an acrylic oligomer nor an acrylic polymer was contained as an acrylic resin. In Comparative Example 3Z, 34.8% by weight of acrylic acid-modified, hydrogenated rosin was contained as a rosin-based resin beyond the range specified in the present invention, and 0.2% by weight of a polyethylene resin was contained as a polyethylene•polypropylene-based resin (PE-PP resin), within the range specified in the present invention.

Furthermore, 10.0% by weight of a dimer acid, and, as other organic acids, 4.0% by weight of succinic acid and 3.0% by weight of adipic acid were contained in Comparative Example 3Z as activators within the ranges specified in the present invention. The total amount of succinic acid and adipic acid was within the range of the amount of other organic acids specified in the present invention. In addition, the total amount of the dimer acid and other organic acids was within the range specified in the present invention.

In addition, 1.0% by weight of 2-phenylimidazole which was an amine was contained in Comparative Example 3Z as an activator within the range specified in the present invention. Furthermore, 2.0% by weight of hydrogenated castor oil which was an ester-based thixotropic agent and 2.0% by weight of a bisamide-based thixotropic agent which was an amide-based thixotropic agent were contained in Comparative Example 3Z as thixotropic agents within the ranges specified in the present invention. The total amount of two or more kinds of the thixotropic agents was within the range specified in the present invention.

In addition, 2.9% by weight of bis[3-(3-tert-butyl-4-hydroxy-5-methylphenyl)propionic acid] [ethylenebis (oxyethylene)] which was a hindered phenolic metal deactivator and 0.1% by weight of N-(2H-1,2,4-triazol-5-yl) salicylamide which was a nitrogen compound-based metal deactivator were contained in Comparative Example 3Z as metal deactivators within the ranges specified in the present invention. The total amount of two or more kinds of the metal deactivators was within the range specified in the present invention. 40.0% by weight of hexyl diglycol as a solvent was contained as the balance within the range specified in the present invention.

In Comparative Example 3Z in which no acrylic resin was contained, an effect on the solder wettability was obtained. Although the residue was cured, there was a crack in the residue found, and no effect on the temperature cycle reliability was obtained. Since no acrylic resin was contained, the compatibility was not be evaluated.

(Examples of Sn-As)

<Evaluation of Thickening Suppression Effect of Solder Paste>

Thickening suppression effects of solder pastes prepared using the above-described fluxes of Examples 1Y and 1Z and solder alloys having the constitutions shown in Tables 20 to 25 below were also verified. Fluxes of Example 1Y shown in Table 8 and Example 1Z shown in Table 14 were mixed with solder powders which have alloy constitutions shown in Tables 20 to 25 and have sizes (grain size distribution) satisfying Symbol 4 in Table 2 of the powder size classification in JIS Z 3284-1:2014 to produce solder pastes. The mass ratio of flux to solder powder was flux: solder powder = 11:89.

(1) Verification Method

The viscosity of the obtained solder pastes was measured for 12 hours at a rotation frequency of 10 rpm and a measurement temperature of 25°C using a rotational viscometer (PCU-205 manufactured by Malcolm Co., Ltd.) according to the method described in "4.2 Test for Viscosity Characteristics" of JIS Z 3284-3:2014. An initial viscosity (viscosity after conducting stirring for 30 minutes) was compared with a viscosity after 12 hours to evaluate the thickening suppression effect based on the following criteria.

(2) Evaluation Criteria

O: Viscosity after 13 hours ≤ initial viscosity × 1.2: Favorable due to small increase in viscosity over time

x: Viscosity after 13 hours > initial viscosity × 1.2: Unfavorable due to large increase in viscosity over time

Table 20

| | Alloy constitution (ppm by mass) | | | | | Formula (1) | Formula (2) | Evaluation item |
|---|---|---|---|---|---|---|---|---|
| | Sn | As | Sb | Bi | Pb | | | Change over time |
| Example 1A | Bal | 100 | 25 | 25 | 25 | 275 | 4.50 | O |
| Example 2A | Bal | 100 | 50 | 25 | 0 | 275 | 10.00 | O |
| Example 3A | Bal | 100 | 0 | 75 | 0 | 275 | 2.67 | O |
| Example 4A | Bal | 100 | 0 | 0 | 75 | 275 | 2.67 | O |
| Example 5A | Bal | 100 | 50 | 50 | 50 | 350 | 2.50 | O |
| Example 6A | Bal | 50 | 100 | 100 | 50 | 350 | 1.33 | O |
| Example 7A | Bal | 300 | 0 | 300 | 300 | 1,200 | 1.00 | ○ |
| Example 8A | Bal | 200 | 300 | 250 | 250 | 1,200 | 1.40 | O |
| Example 9A | Bal | 100 | 500 | 250 | 250 | 1,200 | 1.40 | O |
| Example 10A | Bal | 200 | 50 | 600 | 850 | 1,900 | 0.31 | O |
| Example 11A | Bal | 200 | 500 | 500 | 500 | 1,900 | 0.90 | O |
| Example 12A | Bal | 200 | 500 | 1,000 | 0 | 1,900 | 0.90 | O |
| Example 13A | Bal | 200 | 500 | 0 | 1,000 | 1,900 | 0.90 | O |
| Example 14A | Bal | 25 | 500 | 350 | 1,000 | 1,900 | 0.41 | O |
| Example 15A | Bal | 100 | 3,000 | 300 | 300 | 3,800 | 5.33 | O |
| Example 16A | Bal | 100 | 0 | 0 | 5,100 | 5,300 | 0.04 | O |
| Example 17A | Bal | 100 | 0 | 10,000 | 0 | 10,200 | 0.02 | O |
| Example 18A | Bal | 100 | 0 | 10,000 | 5,000 | 15,200 | 0.01 | O |
| Comparative Example 1A | Bal. | <u>0</u> | 100 | 100 | 100 | 300 | 0.50 | × |
| Comparative Example 2A | Bal | 25 | 25 | 25 | 25 | <u>125</u> | 1.50 | × |
| The underlines indicate that the numerical values were out of the ranges according to the present invention. | | | | | | | | |

Table 21

| | Alloy constitution (ppm by mass for As, Bi, and Pb, and % by mass for Cu) | | | | | | Formula (1) | Formula (2) | Evaluation item |
|---|---|---|---|---|---|---|---|---|---|
| | Sn | Cu | As | Sb | Bi | Pb | | | Change over time |
| Example 19A | Bal | 0.7 | 100 | 25 | 25 | 25 | 275 | 4.50 | O |
| Example 20A | Bal | 0.7 | 100 | 50 | 25 | 0 | 275 | 10.00 | O |
| Example 21A | Bal | 0.7 | 100 | 0 | 75 | 0 | 275 | 2.67 | O |
| Example 22A | Bal | 0.7 | 100 | 0 | 0 | 75 | 275 | 2.67 | O |
| Example 23A | Bal | 0.7 | 100 | 50 | 50 | 50 | 350 | 2.50 | O |
| Example 24A | Bal | 0.7 | 50 | 100 | 100 | 50 | 350 | 1.33 | O |
| Example 25A | Bal | 0.7 | 300 | 0 | 300 | 300 | 1,200 | 1.00 | O |
| Example 26A | Bal | 0.7 | 200 | 300 | 250 | 250 | 1,200 | 1.40 | O |
| Example 27A | Bal | 0.7 | 100 | 500 | 250 | 250 | 1,200 | 1.40 | O |
| Example 28A | Bal | 0.7 | 200 | 50 | 600 | 850 | 1,900 | 0.31 | ○ |
| Example 29A | Bal | 0.7 | 200 | 500 | 500 | 500 | 1,900 | 0.90 | O |
| Example 30A | Bal | 0.7 | 200 | 500 | 1,000 | 0 | 1,900 | 0.90 | O |
| Example 31A | Bal | 0.7 | 200 | 500 | 0 | 1,000 | 1,900 | 0.90 | O |
| Example 32A | Bal | 0.7 | 25 | 500 | 350 | 1,000 | 1,900 | 0.41 | ○ |
| Example 33A | Bal | 0.7 | 100 | 3,000 | 300 | 300 | 3,800 | 5.33 | O |
| Example 34A | Bal | 0.7 | 100 | 0 | 0 | 5,100 | 5,300 | 0.04 | O |
| Example 35A | Bal | 0.7 | 100 | 0 | 10,000 | 0 | 10,200 | 0.02 | O |
| Example 36A | Bal | 0.7 | 100 | 0 | 10,000 | 5,000 | 15,200 | 0.01 | O |
| Comparative Example 3A | Bal. | 0.7 | <u>0</u> | 100 | 100 | 100 | 300 | 0.50 | × |
| Comparative Example 4A | Bal | 0.7 | 25 | 25 | 25 | 25 | <u>125</u> | 1.50 | × |
| The underlines indicate that the numerical values were out of the ranges according to the present invention. | | | | | | | | | |

Table 22

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example 37A | Bal | 1 | 0.5 | 100 | 25 | 25 | 25 | 275 | 4.50 | O |
| Example 38A | Bal | 1 | 0.5 | 100 | 50 | 25 | 0 | 275 | 10.00 | O |
| Example 39A | Bal | 1 | 0.5 | 100 | 0 | 75 | 0 | 275 | 2.67 | O |
| Example 40A | Bal | 1 | 0.5 | 100 | 0 | 0 | 75 | 275 | 2.67 | O |
| Example 41A | Bal | 1 | 0.5 | 100 | 50 | 50 | 50 | 350 | 2.50 | O |
| Example 42A | Bal | 1 | 0.5 | 50 | 100 | 100 | 50 | 350 | 1.33 | O |
| Example 43A | Bal | 1 | 0.5 | 300 | 0 | 300 | 300 | 1,200 | 1.00 | O |

(continued)

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example 44A | Bal | 1 | 0.5 | 200 | 300 | 250 | 250 | 1,200 | 1.40 | O |
| Example 45A | Bal | 1 | 0.5 | 100 | 500 | 250 | 250 | 1,200 | 1.40 | ○ |
| Example 46A | Bal | 1 | 0.5 | 200 | 50 | 600 | 850 | 1,900 | 0.31 | O |
| Example 47A | Bal | 1 | 0.5 | 200 | 500 | 500 | 500 | 1,900 | 0.90 | O |
| Example 48A | Bal | 1 | 0.5 | 200 | 500 | 1,000 | 0 | 1,900 | 0.90 | O |
| Example 49A | Bal | 1 | 0.5 | 200 | 500 | 0 | 1,000 | 1,900 | 0.90 | O |
| Example 50A | Bal | 1 | 0.5 | 25 | 500 | 350 | 1,000 | 1,900 | 0.41 | O |
| Example 51A | Bal | 1 | 0.5 | 100 | 3,000 | 300 | 300 | 3,800 | 5.33 | O |
| Example 52A | Bal | 1 | 0.5 | 100 | 0 | 0 | 5,100 | 5,300 | 0.04 | O |
| Example 53A | Bal | 1 | 0.5 | 100 | 0 | 10,000 | 0 | 10,200 | 0.02 | O |
| Example 54A | Bal | 1 | 0.5 | 100 | 0 | 10,000 | 5,000 | 15,200 | 0.01 | O |
| Comparative Example | Bal. | 1 | 0.5 | <u>0</u> | 100 | 100 | 100 | 300 | 0.50 | × |
| Comparative Example 6A | Bal | 1 | 0.5 | 25 | 25 | 25 | 25 | <u>125</u> | 1.50 | × |
| The underlines indicate that the numerical values were out of the ranges according to the present invention. | | | | | | | | | | |

Table 23

| | Alloy constitution (ppm by mass for As, Sb, Bi, and Pb, and % bv mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example 55A | Bal | 2 | 0.5 | 100 | 25 | 25 | 25 | 275 | 4.50 | O |
| Example 56A | Bal | 2 | 0.5 | 100 | 50 | 25 | 0 | 275 | 10.00 | O |
| Example 57A | Bal | 2 | 0.5 | 100 | 0 | 75 | 0 | 275 | 2.67 | O |
| Example 58A | Bal | 2 | 0.5 | 100 | 0 | 0 | 75 | 275 | 2.67 | O |
| Example 59A | Bal | 2 | 0.5 | 100 | 50 | 50 | 50 | 350 | 2.50 | O |
| Example 60A | Bal | 2 | 0.5 | 50 | 100 | 100 | 50 | 350 | 1.33 | O |
| Example 61A | Bal | 2 | 0.5 | 300 | 0 | 300 | 300 | 1,200 | 1.00 | O |
| Example 62A | Bal | 2 | 0.5 | 200 | 300 | 250 | 250 | 1,200 | 1.40 | O |
| Example 63A | Bal | 2 | 0.5 | 100 | 500 | 250 | 250 | 1,200 | 1.40 | ○ |
| Example 64A | Bal | 2 | 0.5 | 200 | 50 | 600 | 850 | 1,900 | 0.31 | O |
| Example 65A | Bal | 2 | 0.5 | 200 | 500 | 500 | 500 | 1,900 | 0.90 | O |
| Example 66A | Bal | 2 | 0.5 | 200 | 500 | 1,000 | 0 | 1,900 | 0.90 | O |
| Example 67A | Bal | 2 | 0.5 | 200 | 500 | 0 | 1,000 | 1,900 | 0.90 | O |

(continued)

| | Alloy constitution (ppm by mass for As, Sb, Bi, and Pb, and % bv mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example 68A | Bal | 2 | 0.5 | 25 | 500 | 350 | 1,000 | 1,900 | 0.41 | O |
| Example 69A | Bal | 2 | 0.5 | 100 | 3,000 | 300 | 300 | 3,800 | 5.33 | O |
| Example 70A | Bal | 2 | 0.5 | 100 | 0 | 0 | 5,100 | 5,300 | 0.04 | O |
| Example 71A | Bal | 2 | 0.5 | 100 | 0 | 10,000 | 0 | 10,200 | 0.02 | O |
| Example 72A | Bal | 2 | 0.5 | 100 | 0 | 10,000 | 5,000 | 15,200 | 0.01 | O |
| Comparative Example 7A | Bal. | 2 | 0.5 | <u>0</u> | 100 | 100 | 100 | 300 | 0.50 | × |
| Comparative Example 8A | Bal | 2 | 0.5 | 25 | 25 | 25 | 25 | <u>125</u> | 1.50 | ○ |
| The underlines indicate that the numerical values were out of the ranges according to the present invention. | | | | | | | | | | |

Table 24

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example 73A | Bal | 3 | 0.5 | 100 | 25 | 25 | 25 | 275 | 4.50 | O |
| Example 74A | Bal | 3 | 0.5 | 100 | 50 | 25 | 0 | 275 | 10.00 | O |
| Example 75A | Bal | 3 | 0.5 | 100 | 0 | 75 | 0 | 275 | 2.67 | O |
| Example 76A | Bal | 3 | 0.5 | 100 | 0 | 0 | 75 | 275 | 2.67 | ○ |
| Example 77A | Bal | 3 | 0.5 | 100 | 50 | 50 | 50 | 350 | 2.50 | O |
| Example 78A | Bal | 3 | 0.5 | 50 | 100 | 100 | 50 | 350 | 1.33 | O |
| Example 79A | Bal | 3 | 0.5 | 300 | 0 | 300 | 300 | 1,200 | 1.00 | O |
| Example 80A | Bal | 3 | 0.5 | 200 | 300 | 250 | 250 | 1,200 | 1.40 | O |
| Example 81A | Bal | 3 | 0.5 | 100 | 500 | 250 | 250 | 1,200 | 1.40 | O |
| Example 82A | Bal | 3 | 0.5 | 200 | 50 | 600 | 850 | 1,900 | 0.31 | O |
| Example 83A | Bal | 3 | 0.5 | 200 | 500 | 500 | 500 | 1,900 | 0.90 | O |
| Example 84A | Bal | 3 | 0.5 | 200 | 500 | 1,000 | 0 | 1,900 | 0.90 | ○ |
| Example 85A | Bal | 3 | 0.5 | 200 | 500 | 0 | 1,000 | 1,900 | 0.90 | O |
| Example 86A | Bal | 3 | 0.5 | 25 | 500 | 350 | 1,000 | 1,900 | 0.41 | O |
| Example 87A | Bal | 3 | 0.5 | 100 | 3,000 | 300 | 300 | 3,800 | 5.33 | O |
| Example 88A | Bal | 3 | 0.5 | 100 | 0 | 0 | 5,100 | 5,300 | 0.04 | O |
| Example 89A | Bal | 3 | 0.5 | 100 | 0 | 10,000 | 0 | 10,200 | 0.02 | ○ |
| Example 90A | Bal | 3 | 0.5 | 100 | 0 | 10,000 | 5,000 | 15,200 | 0.01 | O |
| Comparative Example 9A | Bal. | 3 | 0.5 | <u>0</u> | 100 | 100 | 100 | 300 | 0.50 | × |

(continued)

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Comparative Example 10A | Bal | 3 | 0.5 | 25 | 25 | 25 | 25 | <u>125</u> | 1.50 | ✕ |
| The underlines indicate that the numerical values were out of the ranges according to the present invention. | | | | | | | | | | |

Table 25

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example 91A | Bal | 3.5 | 0.5 | 100 | 25 | 25 | 25 | 275 | 4.50 | O |
| Example 92A | Bal | 3.5 | 0.5 | 100 | 50 | 25 | 0 | 275 | 10.00 | O |
| Example 93A | Bal | 3.5 | 0.5 | 100 | 0 | 75 | 0 | 275 | 2.67 | O |
| Example 94A | Bal | 3.5 | 0.5 | 100 | 0 | 0 | 75 | 275 | 2.67 | O |
| Example 95A | Bal | 3.5 | 0.5 | 100 | 50 | 50 | 50 | 350 | 2.50 | O |
| Example 96A | Bal | 3.5 | 0.5 | 50 | 100 | 100 | 50 | 350 | 1.33 | O |
| Example 97A | Bal | 3.5 | 0.5 | 300 | 0 | 300 | 300 | 1,200 | 1.00 | O |
| Example 98A | Bal | 3.5 | 0.5 | 200 | 300 | 250 | 250 | 1,200 | 1.40 | O |
| Example 99A | Bal | 3.5 | 0.5 | 100 | 500 | 250 | 250 | 1,200 | 1.40 | O |
| Example 100A | Bal | 3.5 | 0.5 | 200 | 50 | 600 | 850 | 1,900 | 0.31 | O |
| Example 101A | Bal | 3.5 | 0.5 | 200 | 500 | 500 | 500 | 1,900 | 0.90 | O |
| Example 102A | Bal | 3.5 | 0.5 | 200 | 500 | 1,000 | 0 | 1,900 | 0.90 | O |
| Example 103A | Bal | 3.5 | 0.5 | 200 | 500 | 0 | 1,000 | 1,900 | 0.90 | ○ |
| Example 104A | Bal | 3.5 | 0.5 | 25 | 500 | 350 | 1,000 | 1,900 | 0.41 | O |
| Example 105A | Bal | 3.5 | 0.5 | 100 | 3,000 | 300 | 300 | 3,800 | 5.33 | O |
| Example 106A | Bal | 3.5 | 0.5 | 100 | 0 | 0 | 5,100 | 5,300 | 0.04 | O |
| Example 107A | Bal | 3.5 | 0.5 | 100 | 0 | 10,000 | 0 | 10,200 | 0.02 | O |
| Example 108A | Bal | 3.5 | 0.5 | 100 | 0 | 10,000 | 5,000 | 15,200 | 0.01 | O |
| Comparative Example 11A | Bal. | 3.5 | 0.5 | <u>0</u> | 100 | 100 | 100 | 300 | 0.50 | ✕ |

(continued)

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Comparative Example 12A | Bal | 3.5 | 0.5 | 25 | 25 | 25 | 25 | <u>125</u> | 1.50 | × |
| The underlines indicate that the numerical values were out of the ranges according to the present invention. | | | | | | | | | | |

The solder pastes in which the fluxes of Example 1Y shown in Table 8 and Example 1Z shown in Table 14 and the solder alloys of Examples 1A to 108A shown in Tables 20 to 25 satisfying the mathematical formulae (1) and (2) were used satisfied all the requirements according to the present invention even in any alloy constitutions in addition to the temperature cycle reliability of flux residues, and therefore, sufficient effects on the thickening suppression effects of the solder pastes were obtained. DSC of the solder powders of Examples 1A to 108A before being mixed with the fluxes was measured using EXSTAR DSC7020 which was a model number and manufactured by SII NanoTechnology Inc., in a sample amount of about 30 mg and at a rate of temperature increase of 15°C/min to obtain a solidus temperature and a liquidus temperature. The obtained solidus temperature was subtracted from the obtained liquidus temperature to obtain ΔT. In all the examples, ΔT was less than or equal to 10°C which was within a suitable range.

In contrast, the solder pastes in which the fluxes of Example 1Y shown in Table 8 and Example 1Z shown in Table 14 and the solder alloys of Comparative Examples 1A, 3A, 5A, 7A, 9A, and 11A shown in Tables 20 to 25 were used did not contain As, and therefore the thickening suppression effect was not exhibited.

In the solder pastes in which the fluxes of Example 1Y shown in Table 8 and Example 1Z shown in Table 14 and the solder alloys of Comparative Examples 2A, 4A, 6A, 8A, 10A, and 12A shown in Tables 20 to 25 were used, the mathematical formula (1) was less than the lower limit, and therefore the thickening suppression effect was not exhibited.

Next, thickening suppression effects of solder pastes prepared using the solder alloys having the compositions shown in Table 26 below and Example 11Y to which acrylic resins were compositely added, Example 21Y to which rosin was compositely added, Example 25Y which contained a dimer acid as an organic acid but contained no other organic acids, and Example 26Y containing no organic acid in the examples shown in Tables 8 to 13 were also verified.

Similarly, thickening suppression effects of solder paste prepared using the solder alloys having the compositions shown in Table 26 below and Example 11Z to which acrylic resins were compositely added, Example 23Z to which rosin was compositely added, Example 25Z which contained a dimer acid as an organic acid but contained no other organic acids, and Example 26Z containing no organic acid in the examples shown in Tables 14 to 19 were also verified.

In Table 26, Examples 1A, 2A, 15A, and 18A, and Comparative Examples A1 and 2A in Tables 20 to 25 described above were respectively regarded as Examples A1, A2, A3, and A4, and Comparative Examples A1 and A2. In addition, Examples 19A, 20A, 33A, and 36A, and Comparative Examples 3A and 4A were respectively regarded as Examples B1, B2, B3, and B4, and Comparative Examples B1 and B2. Furthermore, Examples 73A, 74A, 86A, 87A, and 90, and Comparative Examples 9A and 10A were respectively regarded as Examples C1, C2, C3, C4, and C5, and Comparative Examples C1 and C2.

Table 26

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Example A1 | Bal | 0 | 0 | 100 | 25 | 25 | 25 | 275 | 4.50 | O |
| Example A2 | Bal | 0 | 0 | 100 | 50 | 25 | 0 | 275 | 10.00 | O |
| Example A3 | Bal | 0 | 0 | 100 | 3,000 | 300 | 300 | 3,800 | 5.33 | O |
| Example A4 | Bal | 0 | 0 | 100 | 0 | 10,000 | 5,000 | 15,200 | 0.01 | O |
| Comparative Example A1 | Bal | 0 | 0 | 0 | 100 | 100 | 100 | 300 | 0.50 | × |

(continued)

| | Alloy constitution (ppm by mass for As, Sb, Bi, and Pb, and % by mass for Ag and Cu) | | | | | | | Formula (1) | Formula (2) | Evaluation item |
|---|---|---|---|---|---|---|---|---|---|---|
| | Sn | Ag | Cu | As | Sb | Bi | Pb | | | Change over time |
| Comparative Example A2 | Bal | 0 | 0 | 25 | 25 | 25 | 25 | 125 | 1.50 | × |
| Example B1 | Bal | 0 | 0.7 | 100 | 25 | 25 | 25 | 275 | 4.50 | O |
| Example B2 | Bal | 0 | 0.7 | 100 | 50 | 25 | 0 | 275 | 10.00 | O |
| Example B3 | Bal | 0 | 0.7 | 100 | 3,000 | 300 | 300 | 3,800 | 5.33 | O |
| Example B4 | Bal | 0 | 0.7 | 100 | 0 | 10,000 | 5,000 | 15,200 | 0.01 | O |
| Comparative Example B1 | Bal | 0 | 0.7 | 0 | 100 | 100 | 100 | 300 | 0.50 | × |
| Comparative Example B2 | Bal | 0 | 0.7 | 25 | 25 | 25 | 25 | 125 | 1.50 | × |
| Example C1 | Bal | 3 | 0.5 | 100 | 25 | 25 | 25 | 275 | 4.50 | O |
| Example C2 | Bal | 3 | 0.5 | 100 | 50 | 25 | 0 | 275 | 10.00 | O |
| Example C3 | Bal | 3 | 0.5 | 25 | 500 | 350 | 1,000 | 1,800 | 0.41 | O |
| Example C4 | Bal | 3 | 0.5 | 100 | 3,000 | 300 | 300 | 3,800 | 5.33 | O |
| Example C5 | Bal | 3 | 0.5 | 100 | 0 | 10,000 | 5,000 | 15,200 | 0.01 | O |
| Comparative Example C1 | Bal | 3 | 0.5 | 0 | 100 | 100 | 100 | 300 | 0.50 | × |
| Comparative Example C2 | Bal | 3 | 0.5 | 25 | 25 | 25 | 25 | 125 | 1.50 | × |

In the solder pastes in which not only the flux of Example 1Y shown in Table 8 but also the fluxes of the examples shown in Tables 8 to 13, and the solder alloys of the examples shown in Table 26 in which the mathematical formulae (1) and (2) were satisfied were used, sufficient effects on the thickening suppression effects of the solder pastes in addition to the temperature cycle reliability of flux residues were obtained.

In contrast, in the solder pastes in which the fluxes of the examples shown in Tables 8 to 13 and the solder alloys of Comparative Examples A1, B1, and C1 shown in Table 26 were used, no As was contained in the solder alloys, and therefore the thickening suppression effect was not exhibited.

In the solder pastes in which the fluxes of the examples shown in Tables 8 to 13 and the solder alloys of Comparative Examples A2, B2, and C2 shown in Table 26 were used, the mathematical formula (1) was less than the lower limit, and therefore the thickening suppression effect was not exhibited.

In the solder pastes in which not only the flux of Example 1Z shown in Table 14 but also the fluxes of the examples shown in Tables 14 to 19, and the solder alloys of the examples shown in Table 26 in which the mathematical formulae (1) and (2) were satisfied were used, sufficient effects on the thickening suppression effects of the solder pastes in addition to the temperature cycle reliability of flux residues were obtained.

In contrast, in the solder pastes in which the fluxes of the examples shown in Tables 14 to 19 and the solder alloys of Comparative Examples A1, B1, and C1 shown in Table 26 were used, no As was contained in the solder alloys, and therefore the thickening suppression effect was not exhibited.

In the solder pastes in which the fluxes of the examples shown in Tables 14 to 19 and the solder alloys of Comparative Examples A2, B2, and C2 shown in Table 26 were used, the mathematical formula (1) was less than the lower limit, and therefore the thickening suppression effect was not exhibited.

As mentioned above, in the fluxes which contain an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or an acrylic resin having a number average molecular weight (Mn) and a weight average molecular weight (Mw) of greater than or equal to 500 and less than 2,000 obtained through mass spectrometry using a time-of-flight mass spectrometer (TOF-MS), an activator, and a solvent, the solders are sufficiently wet-spread.

In addition, the fluxes which contain acrylic resins having a molecular weight within the above-described range, an activator, and a solvent have excellent compatibility between the acrylic resins and the activator and excellent compatibility of the acrylic resins with a rosin-based resin and the activator in a case where the rosin-based resin is incorporated, whereby stratification due to non-uniformity of the components is inhibited.

Furthermore, the fluxes which contain acrylic resins having a molecular weight within the above-described range, an activator, and a solvent have excellent heat cycle reliability, whereby cracking of flux residues which have been cured after heating is inhibited.

Accordingly, the flux according to the present embodiment is used in a solder paste to obtain the solder wettability. In addition, stratification of a residue can be inhibited. Furthermore, the residues can be made flexible to inhibit cracking of the residue.

In addition, these effects were not inhibited by incorporation of other resins, a thixotropic agent, or a metal deactivator within the ranges specified in the present invention.

Even in a case where a flux containing, as an acrylic resin, an isotridecanol methacrylate oligomer (acrylic oligomer F) in which the number average molecular weight (Mn) obtained through mass spectrometry using a time-of-flight mass spectrometer (TOF-MS) was 1,028.82, the weight average molecular weight (Mw) obtained through mass spectrometry using a time-of-flight mass spectrometer (TOF-MS) was 1,138.20, and the number average molecular weight (Mn) and the weight average molecular weight (Mw) were greater than or equal to 1,000 in an amount within the range specified in the present invention was used, a sufficient effect on thickening suppression was obtained by incorporation of a hindered phenolic metal deactivator and a nitrogen compound-based metal deactivator in amounts within the ranges specified in the present invention,.

Furthermore, in the solder paste in which the flux and the solder alloy composed of 25 ppm by mass to 300 ppm by mass of As, at least one selected from the group consisting of greater than 0 ppm by mass and less than or equal to 3,000 ppm by mass of Sb, greater than 0 ppm by mass and less than or equal to 10,000 ppm by mass of Bi, greater than 0 ppm by mass and less than or equal to 5,100 ppm by mass of Pb, 0% by mass to 4% by mass of Ag, 0% by mass to 0.9% by mass of Cu, and a balance of Sn, in which the mathematical formulae (1) and (2) were satisfied, were used, the solder wettability, compatibility, and temperature cycle reliability were not inhibited, and sufficient effects on thickening suppression was obtained, by the incorporation of an acrylic resin having a number average molecular weight (Mn) of greater than or equal to 500 and less than 2,000 obtained through mass spectrometry using a time-of-flight mass spectrometer (TOF-MS), an acrylic resin having a weight average molecular weight (Mw) of greater than or equal to 500 and less than 2,000 obtained through mass spectrometry using a time-of-flight mass spectrometer (TOF-MS), or an acrylic resin having a number average molecular weight (Mn) and a weight average molecular weight (Mw) of greater than or equal to 500 and less than 2,000 obtained through mass spectrometry using a time-of-flight mass spectrometer (TOF-MS).

In particular, even in the solder paste in which a flux containing, as an acrylic resin, an isotridecanol methacrylate oligomer (acrylic oligomer F) in which the number average molecular weight (Mn) obtained through mass spectrometry using a time-of-flight mass spectrometer (TOF-MS) was 1,028.82, the weight average molecular weight (Mw) obtained through mass spectrometry using a time-of-flight mass spectrometer (TOF-MS) was 1,138.20, and the number average molecular weight (Mn) and the weight average molecular weight (Mw) were greater than or equal to 1,000, in an amount within the range specified in the present invention was used, sufficient effects on thickening suppression were obtained by using a solder alloy containing As, Sb, Bi, and Pb within the above-described ranges specified in the present invention.

## Claims

1. A soldering resin composition comprising:

   an acrylic resin comprising either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer; and
   a rosin-based resin,
   wherein an amount of the acrylic resin is 14% by weight to 60% by weight.

2. A soldering resin composition comprising:

   an acrylic resin comprising either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer; and
a rosin-based resin,
wherein an amount of the acrylic resin is 14% by weight to 60% by weight.

3. The soldering resin composition according to claim 1 or 2,
wherein a ratio of a weight of one kind of the acrylic resin or a total weight of two or more kinds of the acrylic resins to a weight of one kind of the rosin-based resin or a total weight of two or more kinds of the rosin-based resins is 0.2 to 2.0.

4. The soldering resin composition according to any one of claims 1 to 3,
wherein an amount of the rosin-based resin is 30% by weight to 80% by weight.

5. The soldering resin composition according to any one of claims 1 to 3, further comprising:

   other resins.

6. The soldering resin composition according to claim 5,
wherein an amount of the other resins is less than or equal to 35% by weight.

7. The soldering resin composition according to any one of claims 1 to 6, further comprising:

   at least one selected from the group consisting of organic acids, amines, organic halogen compounds, amine hydrohalides, organic phosphorus compounds, silicones, and solvents.

8. The soldering resin composition according to claim 7,
wherein an amount of the organic acids is 0% by weight to 20% by weight, an amount of the amines is 0% by weight to 10% by weight, an amount of the organic halogen compounds is 0% by weight to 15% by weight, an amount of the amine hydrohalides is 0% by weight to 5% by weight, an amount of the organic phosphorus compounds is 0% by weight to 10% by weight, an amount of the silicones is 0% by weight to 5% by weight, and an amount of the solvents is 0% by weight to 13% by weight.

9. A solder composition comprising:

   a soldering resin composition of any one of claims 1 to 8.

10. A flux cored solder obtained by filling a linear solder with a soldering resin composition of any one of claims 1 to 8.

11. A solder composition obtained by coating a solder with a soldering resin composition of any one of claims 1 to 8.

12. A flux comprising:

    an acrylic resin comprising either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer;
    a rosin-based resin;
    an activator; and
    a solvent,
    wherein an amount of the acrylic resin is 7.0% by weight to 50.0% by weight and an amount of the rosin-based resin is greater than 0% by weight and less than or equal to 30,0% by weight, and
    a ratio of a weight of one kind of the acrylic resin or a total weight of two or more kinds of the acrylic resins to a weight of one kind of the rosin-based resin or a total weight of two or more kinds of the rosin-based resins is greater than or equal to 0.7.

13. A flux comprising:

    an acrylic resin comprising either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer;

a rosin-based resin;
an activator; and
a solvent,
wherein an amount of the acrylic resin is 7.0% by weight to 50.0% by weight and an amount of the rosin-based resin is greater than 0% by weight and less than or equal to 30.0% by weight, and
a ratio of a weight of one kind of the acrylic resin or a total weight of two or more kinds of the acrylic resins to a weight of one kind of the rosin-based resin or a total weight of two or more kinds of the rosin-based resins is greater than or equal to 0.7.

14. A flux comprising:

an acrylic resin consisting of either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer;
an activator; and
a solvent,
wherein an amount of the acrylic resin is 7.0% by weight to 50.0% by weight and an amount of the rosin-based resin is 0% by weight to 30.0% by weight.

15. A flux comprising:

an acrylic resin consisting of either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer;
an activator; and
a solvent,
wherein an amount of the acrylic resin is 7.0% by weight to 50.0% by weight and an amount of the rosin-based resin is 0% by weight to 30.0% by weight.

16. The flux according to claim 14 or 15,
wherein, in a case where the flux comprises the rosin-based resin, a ratio of a weight of one kind of the acrylic resin or a total weight of two or more kinds of the acrylic resins to a weight of one kind of the rosin-based resin or a total weight of two or more kinds of the rosin-based resins is greater than or equal to 0.7.

17. The flux according to any one of claims 12 to 16, further comprising:

0% by weight to 10.0% by weight of other resins.

18. The flux according to any one of claims 12 to 17, wherein the activator comprises at least one selected from the group consisting of organic acids, amines, organic halogen compounds, and amine hydrohalides.

19. A flux comprising:

an acrylic resin comprising either an acrylic acid ester or a methacrylic acid ester or both an acrylic acid ester and a methacrylic acid ester and has a number average molecular weight of greater than or equal to 500 and less than 2,000 obtained through mass spectrometry using a time-of-flight mass spectrometer;
either a polyethylene-based resin or a polypropylene-based resin or both a polyethylene-based resin and a polypropylene-based resin; and
a solvent,
wherein an amount of the acrylic resin is 7.0% by weight to 50.0% by weight.

20. A flux comprising:

an acrylic resin comprising either an acrylic acid ester or a methacrylic acid ester or both an acrylic acid ester and a methacrylic acid ester and has a weight average molecular weight of greater than or equal to 500 and less than 2,000 obtained through mass spectrometry using a time-of-flight mass spectrometer;
either a polyethylene-based resin or a polypropylene-based resin or both a polyethylene-based resin and a polypropylene-based resin; and

a solvent,
wherein an amount of the acrylic resin is 7.0% by weight to 50.0% by weight.

21. The flux according to claim 19 or 20,
a ratio of a weight of one kind of the acrylic resin or a total weight of two or more kinds of the acrylic resins to a weight of one kind of the polyethylene-based resin or the polypropylene-based resin or a total weight of two or more kinds of either the polyethylene-based resin or the polypropylene-based resin or both the polyethylene-based resin and the polypropylene-based resin is 1.0 to 120.0.

22. The flux according to any one of claims 19 to 21,
wherein an amount of either the polyethylene-based resin or the polypropylene-based resin or both the polyethylene-based resin and the polypropylene-based resin is 0.1% by weight to 10.0% by weight.

23. The flux according to any one of claims 19 to 22, further comprising:

a rosin-based resin.

24. The flux according to claim 23,
wherein an amount of the rosin-based resins is greater than 0% by weight and less than or equal to 30.0% by weight.

25. The flux according to any one of claims 19 to 24, further comprising:

an activator comprising at least one selected from the group consisting of organic acids, amines, organic halogen compounds, and amine hydrohalides.

26. The flux according to claim 18 or 25,

wherein, as the organic acids, an amount of one selected from the group consisting of dimer acids which are dimeric reactants of monocarboxylic acids, hydrogenated dimer acids obtained by adding hydrogen to the dimer acids, trimer acids which are trimeric reactants of monocarboxylic acids, and hydrogenated trimer acids obtained by adding hydrogen to the trimer acids, or at least two selected from the group consisting of the dimer acids, the hydrogenated dimer acids, the trimer acids, and hydrogenated trimer acids is 0% by weight to 25.0% by weight, and an amount of organic acids other than the dimer acids, the hydrogenated dimer acids, the trimer acids, and the hydrogenated trimer acids is 0% by weight to 15.0% by weight, and
a total amount of one selected from the group consisting of the dimer acids, the hydrogenated dimer acids, the trimer acids, and the hydrogenated trimer acids, or at least two selected from the group consisting of the dimer acids, the hydrogenated dimer acids, the trimer acids, and the hydrogenated trimer acids, and at least one of the other organic acids is less than or equal to 30.0% by weight.

27. The flux according to claim 18, 25, or 26,
wherein an amount of the amines is 0% by weight to 10.0% by weight, an amount of the organic halogen compounds is 0% by weight to 5.0% by weight, and an amount of the amine hydrohalides is 0% by weight to 2.0% by weight.

28. The flux according to any one of claims 12 to 27, further comprising:

0% by weight to 10.0% by weight of a thixotropic agent;
0% by weight to 10.0% by weight of a hindered phenolic metal deactivator; and
0% by weight to 5.0% by weight of a nitrogen compound-based metal deactivator.

29. A solder paste comprising:

a flux of any one of claims 12 to 28; and
a metal powder.

30. The solder paste according to claim 29,
wherein the metal powder has an alloy constitution consisting of: 25 ppm by mass to 300 ppm by mass of As; at least one selected from the group consisting of greater than 0 ppm by mass and less than or equal to 3,000 ppm by mass of Sb, greater than 0 ppm by mass and less than or equal to 10,000 ppm by mass of Bi, and greater than 0 ppm by mass and less than or equal to 5,100 ppm by mass of Pb; and a balance of Sn, and satisfies mathematical formulae (1) and (2):

$$275 \leq 2As + Sb + Bi + Pb \qquad (1)$$

$$0.01 \leq (2As + Sb) / (Bi + Pb) \leq 10.00 \qquad (2)$$

in the mathematical formulae (1) and (2), As, Sb, Bi, and Pb each represents an amount thereof (ppm by mass) in the alloy constitution.

31. The solder paste according to claim 30,
    wherein the alloy constitution further satisfies mathematical formula (1a):

$$275 \leq 2As + Sb + Bi + Pb \leq 25,200 \qquad (1a)$$

in the mathematical formula (1a), As, Sb, Bi, and Pb each represents an amount thereof (ppm by mass) in the alloy constitution.

32. The solder paste according to claim 30,
    wherein the alloy constitution further satisfies mathematical formula (1b):

$$275 \leq 2As + Sb + Bi + Pb \leq 5,300 \qquad (1b)$$

in the mathematical formula (1b), As, Bi, and Pb each represents an amount thereof (ppm by mass) in the alloy constitution.

33. The solder paste according to any one of claims 30 to 32,
    wherein the alloy constitution further satisfies mathematical formula (2a):

$$0.31 \leq (2As + Sb) / (Bi + Pb) \leq 10.00 \qquad (2a)$$

in the mathematical formula (2a), As, Sb, Bi, and Pb each represents an amount thereof (ppm by mass) in the alloy constitution.

34. The solder paste according to any one of claims 30 to 33,
    wherein the alloy constitution further comprises at least one selected from the group consisting of 0 to 4% by mass of Ag and 0 to 0.9% by mass of Cu.

## INTERNATIONAL SEARCH REPORT

| | International application No. |
|---|---|
| | PCT/JP2020/014082 |

| A. CLASSIFICATION OF SUBJECT MATTER |
|---|
| Int.Cl. C22C13/00(2006.01)i, C22C13/02(2006.01)i, B23K35/14(2006.01)i, B23K35/26(2006.01)i, B23K35/363(2006.01)i |
| FI: B23K35/363D, B23K35/363C, B23K35/14B, B23K35/363E, B23K35/26310A, C22C13/00, C22C13/02 |
| According to International Patent Classification (IPC) or to both national classification and IPC |

| B. FIELDS SEARCHED |
|---|
| Minimum documentation searched (classification system followed by classification symbols) |
| Int.Cl. B23K35/363, B23K35/14, B23K35/26, C22C13/00, C22C13/02 |

| Documentation searched other than minimum documentation to the extent that such documents are included in the fields searched |  |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2016-150344 A (MITSUBISHI MATERIALS CORPORATION) 22.08.2016 (2016-08-22), paragraphs [0001], [0021], [0025], tables 1, 2, examples 2, 6, 10 | 1–34 |
| A | JP 9-122975 A (NIPPON ARUMITSUTO KK) 13.05.1997 (1997-05-13), paragraphs [0009]-[0018] | 1–34 |
| A | WO 2011/071005 A1 (ARAKAWA CHEM IND CO., LTD.) 16.06.2011 (2011-06-16), paragraphs [0051], [0058], tables 1, 2 | 1–34 |
| A | JP 2012-4347 A (HARIMA CHEMICALS INC.) 05.01.2012 (2012-01-05), claim 1, tables 1-4, example 4, comparative example 7 | 1–34 |
| A | JP 6460198 B1 (SENJU METAL IND CO., LTD.) 30.01.2019 (2019-01-30), claim 1, paragraphs [0003]-[0012] | 26–34 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15.06.2020 | 23.06.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/014082 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-181637 A (TAMURA CORPORATION) 13.07.2006 (2006-07-13), paragraph [0040] | 30-34 |
| A | JP 2002-224881 A (HITACHI METALS LTD.) 13.08.2002 (2002-08-13), paragraph [0010], table 1, invention examples 7-9 | 30-34 |

Form PCT/ISA/210 (second sheet) (January 2015)

```
JP 2016-150344 A   22.08.2016   (Family: none)

JP 9-122975 A      13.05.1997   (Family: none)

WO 2011/071005 A1  16.06.2011   JP 2011-121058 A
                                US 2012/0291922 A1
                                paragraphs [0066], [0072],
                                tables 1, 2
                                EP 2524763 A1
                                CA 2781956 A1
                                KR 10-2012-0088875 A
                                CN 102770233 A
                                TW 201124225 A

JP 2012-4347 A     05.01.2012   (Family: none)

JP 6460198 B1      30.01.2019   JP 2019-69467 A
                                WO 2019/074006 A1
                                TW 201932227 A

JP 2006-181637 A   13.07.2006   (Family: none)

JP 2002-224881 A   13.08.2002   (Family: none)
```

Form PCT/ISA/210 (patent family annex) (January 2015)

**REFERENCES CITED IN THE DESCRIPTION**

**Patent documents cited in the description**

- JP 2010515576 A